# EUROPEAN PATENT APPLICATION

(11) **EP 4 253 438 A1**
(43) Date of publication of application: **04.10.2023**
(21) Application number: 21898129.8
(22) Date of filing: 26.11.2021
(51) Int. Cl.: C08F 265/06, C08F 290/04, C08L 51/00, C08L 53/00, C08L 69/00

(54) **RESIN COMPOSITION, MOLDED ARTICLE, AND MACROMONOMER COPOLYMER**

(30) Priority: 30.11.2020 JP 2020198198
(71) Applicant: Mitsubishi Chemical Corporation, Chiyoda-ku Tokyo 100-8251 (JP)
(72) Inventor: OTANI, Go, Tokyo 100-8251 (JP); MATSUMOTO, Akikazu, Tokyo 100-8251 (JP)
(74) Representative: Hoffmann Eitle
(86) International application number: PCT/JP2021/043500
(87) International publication number: WO 2022/114157

(57) **Abstract**

The present invention relates to a resin composition containing a polycarbonate resin (A) and a polymer (B), wherein: the polymer (B) is a copolymer having a polymer chain (B 1) and a polymer chain (B2); the glass transition temperature (Tg) of the polymer chain (B1) is greater than 80°C; the glass transition temperature (Tg) of the polymer chain (B2) is less than 0°C; and the difference in refractive index between the polycarbonate resin (A) and the polymer chain (B2) is less than 0.026.

## Description

### Technical Field

A first aspect of the present invention relates to a resin composition having both impact resistance and transparency, and a molded article therefrom. More specifically, the first aspect of the present invention relates to a resin composition which contains a polycarbonate resin, is excellent in impact resistance, and further has good transparency in a wide operating temperature range, and a molded article therefrom. A second aspect of the present invention relates to a resin composition which contains a polycarbonate resin having a specific structural unit and has both impact resistance and transparency. A third aspect of the present invention relates to a macromonomer copolymer having a specific structure.

### Background Art

A polycarbonate resin is generally produced using a raw material derived from a petroleum resource. However, in recent years, there is a concern about depletion of the petroleum resource, and there is a demand for providing a polycarbonate resin using a raw material obtained from a biomass resource such as a plant. Additionally, there is a concern that global warming due to increase and accumulation of carbon dioxide emissions will cause climate change, and the like. Therefore, there is a demand for development of a polycarbonate resin which uses a plant-derived monomer as a raw material and is carbon neutral even when disposed of after use.

For example, it has been proposed to obtain a polycarbonate resin by using isosorbide (ISB) as a plant-derived monomer and a transesterification between isosorbide and diphenyl carbonate (see, for example, Patent Literature 1).

While the polycarbonate resin obtained from a dihydroxy compound such as isosorbide is not only excellent in optical characteristics but also extremely excellent in weather resistance and surface hardness as compared with an aromatic polycarbonate resin which is generally used in related art, further improvement in mechanical properties such as tensile elongation or impact resistance in areas where stress is concentrated is required. In order to solve such a problem, it is known that impact resistance is improved by adding a core-shell type polymer to a polycarbonate resin as a method for improving impact resistance (see, for example, Patent Literature 2).

A method is also proposed in which a macromonomer copolymer is added to an aromatic polycarbonate resin to achieve both flowability-improvement and impact resistance (Patent Literature 3).

### Citation List

### Patent Literature

Patent Literature 1: Great Britain Patent No. 1079686 specification
Patent Literature 2: Japanese Patent No. 5927299
Patent Literature 3: JP-A-2017-206627

### Summary of Invention

### Technical Problem

According to studies by the present inventors, as in Patent Literature 2, a resin composition obtained by incorporating a core-shell type polymer in a polycarbonate resin using isosorbide as a monomer is transparent at room temperature and has excellent impact resistance. However, there is a problem that when a molded article is heated, the transparency decreases and the haze value increases.

As in Patent Literature 3, a resin composition obtained by adding a macromonomer copolymer to an aromatic polycarbonate has low transparency due to a difference in refractive index between the aromatic polycarbonate and the macromonomer copolymer.

Accordingly, an object of the first and second aspects of the present invention is to provide a resin composition having both impact resistance and transparency in a wide operating temperature range, and a molded article therefrom. An object of the third aspect of the present invention is to provide a macromonomer copolymer having both impact resistance and transparency in a wide operating temperature range.

### Solution to Problem

The present invention has the following aspects.
[1] A resin composition containing: a polycarbonate resin (A) and a polymer (B), in which
   the polymer (B) is a copolymer containing a polymer chain (B1) and a polymer chain (B2),
   the polymer chain (B1) has a glass transition temperature (Tg) of higher than 80°C,
   the polymer chain (B2) has a glass transition temperature (Tg) of lower than 0°C, and
   a refractive index difference between the polycarbonate resin (A) and the polymer chain (B2) is less than 0.026.
[2] The resin composition according to [1], in which the polymer (B) has a mass average molecular weight (Mw) of 20,000 to 10,000,000.
[3] The resin composition according to [1] or [2], in which a refractive index difference between the polycarbonate resin (A) and the polymer chain (B1) is less than 0.030.
[4] The resin composition according to any one of [1] to [3], in which the polymer chain (B2) has a radically polymerizable monomer unit containing an aromatic ring.
[5] The resin composition according to any one of [1] to [4], in which the polymer (B) is a block and/or graft copolymer.
[6] The resin composition according to any one of [1] to [5], in which the polymer (B) is a macromonomer copolymer containing a unit derived from a macromonomer (b1) of the following formula (2) and a unit derived from a comonomer (b2) which is copolymerizable with the macromonomer (b1). 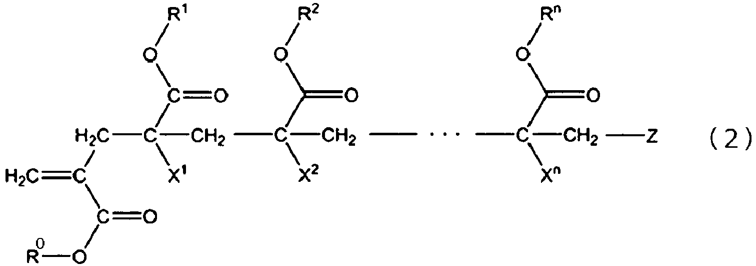 (In formula (2), R⁰ to Rⁿ are each independently a hydrogen atom, an alkyl group, a cycloalkyl group, an aryl group, or a heterocyclic group. X' to Xⁿ are each independently a hydrogen atom or a methyl group. Z is a terminal group. n is a natural number of 2 to 10,000.)
[7] The resin composition according to any one of [1] to [6], in which the polymer chain (B2) contains an alkyl acrylate unit in which a glass transition temperature (Tg) of a homopolymer is lower than 0°C.
[8] The resin composition according to any one of [1] to [7], in which the polymer chain (B 1) has a methacrylate unit in which a glass transition temperature of a homopolymer is higher than 80°C.
[9] The resin composition according to any one of [1] to [8], in which the polymer chain (B1) has a (meth)acrylate unit in which a refractive index of a homopolymer is 1.540 or more.
[10] The resin composition according to any one of [1] to [9], which is a molding material for melt molding.
[11] The resin composition according to any one of [1] to [10], in which a melt viscosity measured at 240°C and a shear rate of 1000/s is less than a melt viscosity of the polycarbonate resin (A) measured under the same conditions.
[12] The resin composition according to any one of [1] to [10], in which a melt viscosity at 240°C and a shear rate of 1000/s is 400 Pa s or less.
[13] A resin composition containing: a polycarbonate resin (A) and a polymer (B), in which
   the polycarbonate resin (A) has a structural unit derived from a dihydroxy compound of the following formula (1), the polymer (B) is a copolymer containing a polymer chain (B1) and a polymer chain (B2),
   the polymer chain (B1) has a glass transition temperature (Tg) of higher than 80°C,
   the polymer chain (B2) has a glass transition temperature (Tg) of lower than 0°C, and
   the polymer chain (B2) contains a radically polymerizable monomer unit containing an aromatic ring. 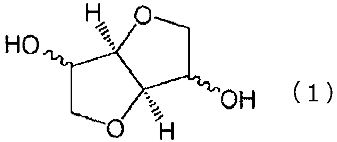
[14] The resin composition according to [13], in which the polymer (B) has a mass average molecular weight of 20,000 to 10,000,000.
[15] The resin composition according to [13] or [14], in which the polymer (B) is a block and/or graft copolymer.
[16] The resin composition according to any one of [13] to [15], in which the polymer (B) is a macromonomer copolymer containing a unit derived from a macromonomer (b1) of the following formula (2) and a unit derived from a comonomer (b2) which is copolymerizable with the macromonomer (b1). 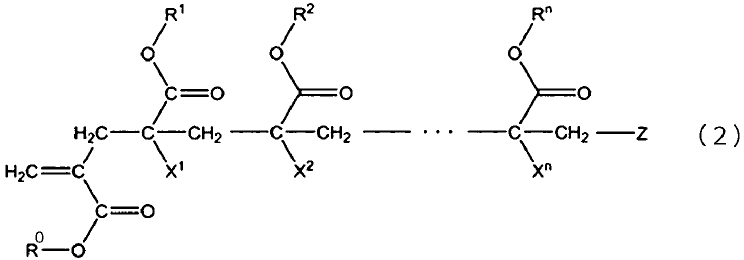 (In formula (2), R⁰ to Rⁿ are each independently a hydrogen atom, an alkyl group, a cycloalkyl group, an aryl group, or a heterocyclic group. X' to Xⁿ are each independently a hydrogen atom or a methyl group. Z is a terminal group. n is a natural number of 2 to 10,000.)
[17] A molded article containing the resin composition according to any one of [1] to [16].
[18] A macromonomer copolymer, containing a unit derived from a macromonomer (b1) of the following formula (2) and a unit derived from a comonomer (b2) which is copolymerizable with the macromonomer (b1),
   in which the unit derived from the macromonomer (b1) contains a methyl methacrylate unit and a phenyl methacrylate unit. 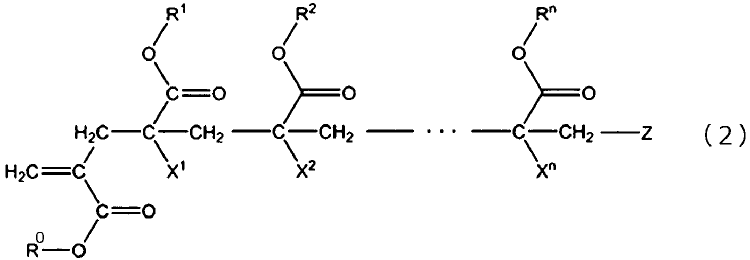 (In formula (2), R⁰ to Rⁿ are each independently a hydrogen atom, an alkyl group, a cycloalkyl group, an aryl group, or a heterocyclic group. X' to Xⁿ are each independently a hydrogen atom or a methyl group. Z is a terminal group. n is a natural number of 2 to 10,000.)
[19] The macromonomer copolymer according to [18], in which the unit derived from the comonomer (b2) contains an alkyl acrylate in which Tg of a homopolymer is lower than 0°C and an aromatic vinyl.
[20] The macromonomer copolymer according to claim 18 or 19, in which a melt viscosity at 240°C and a shear rate of 1000/s is 50 Pa s or more and 300 Pa s or less.
[21] The macromonomer copolymer according to any one of [18] to [20], in which a mass average molecular weight (Mw) is 20,000 or more and 10,000,000 or less.
[22] The macromonomer copolymer according to any one of [18] to [21], in which the unit derived from the comonomer (b2) further contains an aromatic acrylate.

### Effects of Invention

According to the present invention, a resin composition having both impact resistance and transparency in a wide operating temperature range, and a molded article therefrom are provided. Further, a macromonomer copolymer having both impact resistance and transparency in a wide operating temperature range is provided. Description of Embodiments

Hereinafter, the present invention will be described in detail, whereas the present invention is not limited to the following description, and can be optionally modified and implemented without departing from the gist of the present invention.

Hereinafter, a monomer component before polymerization is referred to as "-monomer", and may be abbreviated as "monomer". A structural unit constituting a polymer may be referred to as "-monomer unit". The term (meth)acrylate represents methacrylate and/or acrylate.

A resin composition according to a first aspect of the present invention contains a polycarbonate resin (A) and a polymer (B). Further, the polymer (B) is a copolymer containing a polymer chain (B 1) and a polymer chain (B2). Specifically, the resin composition according to the first aspect of the present invention is a resin composition containing the polycarbonate resin (A) and the polymer (B), in which
the polymer (B) is a copolymer containing the polymer chain (B1) and the polymer chain (B2),
the polymer chain (B1) has a glass transition temperature (Tg) of higher than 80°C,
the polymer chain (B2) has a glass transition temperature (Tg) of lower than 0°C, and
a refractive index difference between the polycarbonate resin (A) and the polymer chain (B2) is less than 0.026.

### [Polycarbonate Resin (A)]

The type of the polycarbonate resin used in the present invention is not particularly limited. One type of polycarbonate resin may be used, or two or more types of polycarbonate resins may be used in any combination and ratio.

The polycarbonate resin is a polymer having a carbonate bond represented by the formula: -[-O-X-O-C(=O)-]-. In the formula, X is generally a hydrocarbon group, but may have a heteroatom for imparting various properties.

The polycarbonate resin can be classified into an aromatic polycarbonate resin in which a carbon directly bound to the carbonate bond is an aromatic carbon and an aliphatic polycarbonate resin in which a carbon directly bound to the carbonate bond is an aliphatic carbon, and either can be used. From the viewpoint of weather resistance, an aliphatic polycarbonate resin is preferred, and an aliphatic polycarbonate resin containing an alicyclic dihydroxy compound is more preferred. From the viewpoint of heat resistance, mechanical properties, electrical characteristics, and the like, an aromatic polycarbonate resin is preferred.

Specific examples of the polycarbonate resin include, but are not limited to, a polycarbonate polymer obtained by allowing a carbonate precursor to react with a dihydroxy compound such as an aromatic dihydroxy compound and an aliphatic dihydroxy compound, cyclic ethers, or the like. At this time, a polyhydroxy compound or the like may be allowed to react in addition to the dihydroxy compound and the carbonate precursor. A method of using carbon dioxide as the carbonate precursor and allowing the carbon dioxide to react with a cyclic ether may be used. The polycarbonate polymer may be linear or branched. Further, the polycarbonate polymer may be a homopolymer composed of one kind of repeating unit, or a copolymer including two or more kinds of repeating units. In this case, the copolymer can be selected from various copolymerization forms such as a random copolymer and a block copolymer. Such a polycarbonate polymer is generally a thermoplastic resin.

Examples of the aromatic dihydroxy compound as a raw material for the aromatic polycarbonate resin include the following compounds.

Dihydroxybenzenes such as 1,2-dihydroxybenzene, 1,2-benzenedimethanol, 1,3-dihydroxybenzene (i.e., resorcinol), 1,3-benzenedimethanol, 1,4-dihydroxybenzene, 1,4-benzenedimethanol, 1,4-benzenediethanol, 1,3-bis(2-hydroxyethoxy)benzene, and 1,4-bis(2-hydroxyethoxy)benzene; dihydroxybiphenyls such as 4,4'-biphenyldimethanol, 4,4'-biphenyldiethanol, 1,4-bis(2-hydroxyethoxy)biphenyl, 2,5-dihydroxybiphenyl, 2,2'-dihydroxybiphenyl, and 4,4'-dihydroxybiphenyl; dihydroxynaphthalenes such as 2,2'-dihydroxy-1,1'-binaphthyl, 1,2-dihydroxynaphthalene, 1,3-dihydroxynaphthalene, 2,3-dihydroxynaphthalene, 2,3-bis(hydroxymethyl)naphthalene, 1,6-dihydroxynaphthalene, 1,6-bis(hydroxyethoxy)naphthalene, 2,6-dihydroxynaphthalene, 1,7-dihydroxynaphthalene, and 2,7-dihydroxynaphthalene; and bisphenols such as bisphenol A bis(2-hydroxyethyl) ether, and bisphenol S bis(2-hydroxyethyl) ether.

Dihydroxydiaryl ethers such as 2,2'-dihydroxydiphenyl ether, 3,3'-dihydroxydiphenyl ether, 4,4'-dihydroxydiphenyl ether, 4,4'-dihydroxy-3,3'-dimethyldiphenyl ether, 1,4-bis(3-hydroxyphenoxy)benzene, and 1,3-bis(4-hydroxyphenoxy)benzene.

Bis(hydroxyaryl)alkanes such as 2,2-bis(4-hydroxyphenyl)propane (i.e., bisphenol A), 1,1-bis(4-hydroxyphenyl)propane, 2,2-bis(3-methyl-4-hydroxyphenyl)propane (i.e., bisphenol C), 2,2-bis(3-methoxy-4-hydroxyphenyl)propane, 2-(4-hydroxyphenyl)-2-(3-methoxy-4-hydroxyphenyl)propane, 1,1-bis(3-tert- butyl-4-hydroxyphenyl)propane, 2,2-bis(3,5-dimethyl-4-hydroxyphenyl)propane, 2,2-bis(3-cyclohexyl-4-hydroxyphenyl)propane, 2-(4-hydroxyphenyl)-2-(3-cyclohexyl-4-hydroxyphenyl)propane, α,α'-bis(4-hydroxy phenyl)-1,4-diisopropylbenzene, 1,3-bis[2-(4-hydroxyphenyl)-2-propyl]benzene, bis(4-hydroxyphenyl)methane, bis(4-hydroxyphenyl)cyclohexylmethane, bis(4-hydroxyphenyl)phenylmethane, bis(4-hydroxyphenyl)(4-propenylphenyl)methane, bis(4-hydroxyphenyl)diphenylmethane, bis(4-hydroxyphenyl)naphthylmethane, 1,1-bis(4-hydroxyphenyl)ethane, 1,1-bis(4-hydroxyphenyl)-1-phenylethane, 1,1-bis(4-hydroxyphenyl)-1-naphthylethane, 1,1-bis(4-hydroxyphenyl)butane, 2,2-bis(4-hydroxyphenyl)butane, 2,2-bis(4-hydroxyphenyl)pentane, 1,1-bis(4-hydroxyphenyl)hexane, 2,2-bis(4-hydroxyphenyl)hexane, 1,1-bis(4-hydroxyphenyl)octane, 2,2-bis(4-hydroxyphenyl)octane, 1,1-bis(4-hydroxyphenyl)hexane, 2,2-bis(4-hydroxyphenyl)hexane, 4,4-bis(4-hydroxyphenyl)heptane, 2,2-bis(4-hydroxyphenyl)nonane, 1,1-bis(4-hydroxyphenyl)decane, and 1,1-bis(4-hydroxyphenyl)dodecane.

Bis(hydroxyaryl)cycloalkanes such as 1,1-bis(4-hydroxyphenyl)cyclopentane, 1,1-bis(4-hydroxyphenyl)cyclohexane, 1,1-bis(4-hydroxyphenyl)-3,3-dimethylcyclohexane, 1,1-bis(4-hydroxyphenyl)-3,4-dimethylcyclohexane, 1,1-bis(4-hydroxyphenyl)-3,5-dimethylcyclohexane, 1,1-bis(4-hydroxyphenyl)-3,3,5-trimethylcyclohexane, 1,1-bis(4-hydroxy-3,5-dimethylphenyl)-3,3,5-trimethylcyclohexane, 1,1-bis(4-hydroxyphenyl)-3-propyl-5-methylcyclohexane, 1,1-bis(4-hydroxyphenyl)-3-tert-butyl-cyclohexane, 1,1-bis(4-hydroxyphenyl)-3-tert-butyl-cyclohexane, 1,1-bis(4-hydroxyphenyl)-3-phenylcyclohexane, and 1,1-bis(4-hydroxyphenyl)-4-phenylcyclohexane.

Bisphenols containing a cardo structure such as 9,9-bis(4-hydroxyphenyl)fluorene and 9,9-bis(4-hydroxy-3-methylphenyl)fluorene.

Dihydroxydiaryl sulfides such as 4,4'-dihydroxydiphenyl sulfide and 4,4'-dihydroxy-3,3'-dimethyldiphenyl sulfide.

Dihydroxydiaryl sulfoxides such as 4,4'-dihydroxydiphenyl sulfoxide and 4,4'-dihydroxy-3,3'-dimethyldiphenyl sulfoxide.

Dihydroxydiaryl sulfones such as 4,4'-dihydroxydiphenyl sulfone and 4,4'-dihydroxy-3,3'-dimethyldiphenyl sulfone.

Among them, bis(hydroxyaryl)alkanes are preferred. Among them, bis(4-hydroxyphenyl)alkanes are preferred. In particular, from the point of the impact resistance and the heat resistance, 2,2-bis(4-hydroxyphenyl)propane (i.e., bisphenol A) and 2,2-bis(3-methyl-4-hydroxyphenyl)propane (i.e., bisphenol C) are preferred.

One kind of the aromatic dihydroxy compound may be used, or two or more kinds thereof may be used in any combination and ratio.

Examples of the aliphatic dihydroxy compound or cyclic ethers as a raw material for the aliphatic polycarbonate resin include the following compounds. In the present invention, the aliphatic dihydroxy compound is a dihydroxy compound having a saturated hydrocarbon group, and cyclic ethers in which a part of cyclic hydrocarbons is substituted with a heteroatom are not contained.

Examples of the aliphatic dihydroxy compound include: alkanediols such as ethane-1,2-diol, propane-1,2-diol, propane-1,3-diol, 2,2-dimethylpropane-1,3-diol, 2-methyl-2-propylpropane-1,3-diol, butane-1,4-diol, pentane-1,5-diol, hexane-1,6-diol, decane-1,10-diol, 2,2'-oxydiethanol (i.e., diethylene glycol), and triethylene glycol spiroglycol; and cycloalkanediols such as cyclopentane-1,2-diol, cyclohexane-1,2-diol, cyclohexane-1,4-diol, 1,4-cyclohexanedimethanol, 4-(2-hydroxyethyl)cyclohexanol, and 2,2,4,4-tetramethyl-cyclobutane-1,3-diol.

Examples of the cyclic ethers include: 1,2-epoxyethane (i.e., ethylene oxide), 1,2-epoxypropane (i.e., propylene oxide), 1,2-epoxycyclopentane, 1,2-epoxycyclohexane, 1,4-epoxycyclohexane, 1-methyl-1,2-epoxycyclohexane, 2,3-epoxynorbornane, and 1,3-epoxypropane; and isosorbide, isomannide, and isoidet (stereoisomers of compounds of the following formula (1)).

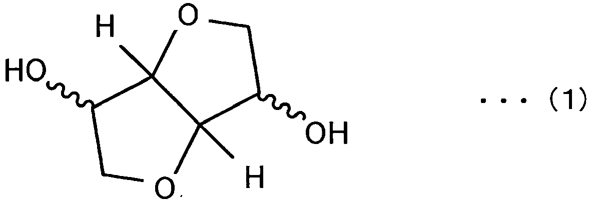

One kind of the aliphatic dihydroxy compound or cyclic ethers may be used, or two or more kinds thereof may be used in any combination and ratio. In addition, the aliphatic dihydroxy compound or cyclic ethers may be used in combination with the aromatic dihydroxy compound.

In the present invention, a method for producing the polycarbonate-based resin is not particularly limited, and any method such as an interfacial polymerization process, a melt transesterification process, a pyridine method, a ring-opening polymerization process of cyclic carbonate compounds, a process of solid phase transesterification of prepolymers may be selected by appropriately using the above raw material.

As described above, the polycarbonate resin (A) used in the present invention can be used by appropriately combining a monomer unit such as an aliphatic dihydroxy compound or an aromatic dihydroxy compound as a structural unit. It is preferred to include, as the dihydroxy compound, a structural unit derived from the compound of formula (1) (which is appropriately referred to as a "structural unit (a)").

When the polycarbonate resin (A) used in the present invention is a polycarbonate resin having the structural unit derived from the compound of formula (1), the polycarbonate resin may be a homopolycarbonate resin of the structural unit (a) or a copolymerized polycarbonate resin containing a structural unit other than the structural unit (a). The copolymerized polycarbonate resin is preferred from the viewpoint of more excellent impact resistance.

Examples of the dihydroxy compound of formula (1) includes isosorbide (ISB), isomannide, and isoidet, which are stereoisomers. These may be used alone or in combination of two or more kinds thereof.

Among the dihydroxy compound of formula (1), isosorbide (ISB), which is obtained by dehydration condensation of sorbitol, the sorbitol being produced from various starches which are present in a large amount as plant-derived resources and are easily available, is most preferred in terms of ease of availability and production, weather resistance, optical characteristics, moldability, heat resistance, and carbon neutral.

The dihydroxy compound of formula (1) is likely to be gradually oxidized by oxygen. Therefore, in order to prevent decomposition by oxygen during storage or handling at the time of production, it is preferred to prevent water from being mixed, to use a deoxidant, or to perform under a nitrogen atmosphere.

The polycarbonate resin (A) is preferably a copolymerized polycarbonate resin having the structural unit (a) derived from the dihydroxy compound of formula (1) and a structural unit derived from a dihydroxy compound other than the dihydroxy compound of the formula (1). A dihydroxy compound into which a structural unit (b) is introduced is not particularly limited, and is preferably one or more kinds of dihydroxy compounds selected from the group consisting of an aliphatic hydrocarbon dihydroxy compound, an alicyclic hydrocarbon dihydroxy compound, a dihydroxy compound containing an ether, and a dihydroxy compound containing an aromatic group. A structural unit derived from one or more kinds of dihydroxy compounds selected from the group consisting of an aliphatic hydrocarbon dihydroxy compound, an alicyclic hydrocarbon dihydroxy compound, a dihydroxy compound containing an ether, and a dihydroxy compound containing an aromatic group is appropriately referred to as the "structural unit (b)". In particular, one or more kinds of dihydroxy compounds selected from the group consisting of an aliphatic hydrocarbon dihydroxy compound, an alicyclic hydrocarbon dihydroxy compound, and a dihydroxy compound containing an ether are preferred. Since these dihydroxy compounds have a flexible molecular structure, by using these dihydroxy compounds as a raw material, obtained impact resistance of the polycarbonate resin can be improved. Among them, it is more preferred to use an aliphatic hydrocarbon dihydroxy compound or an alicyclic hydrocarbon dihydroxy compound, which has a large effect of improving impact resistance, and it is most preferred to use an alicyclic hydrocarbon dihydroxy compound. Specific examples of the aliphatic hydrocarbon dihydroxy compound, the alicyclic hydrocarbon dihydroxy compound, the dihydroxy compound containing an ether, and the dihydroxy compound containing an aromatic group are as follows.

As the aliphatic hydrocarbon dihydroxy compound, for example, the following dihydroxy compounds can be used. A linear aliphatic dihydroxy compound such as ethylene glycol, 1,3-propanediol, 1,2-propanediol, 1,4-butanediol, 1,5-heptanediol, 1,6-hexanediol, 1,9-nonanediol, 1,10-decanediol, and 1,12-dodecanediol; and an aliphatic dihydroxy compound having a branched chain such as 1,3-butanediol, 1,2-butanediol, neopentyl glycol, and hexylene glycol.

As the alicyclic hydrocarbon dihydroxy compound, for example, the following dihydroxy compounds can be used. A dihydroxy compound which is a primary alcohol of an alicyclic hydrocarbon, exemplified by a dihydroxy compound derived from a terpene compound such as 1,2-cyclohexanedimethanol, 1,3-cyclohexanedimethanol, 1,4-cyclohexanedimethanol, tricyclodecanedimethanol, pentacyclopentadecanedimethanol, 2,6-decalin dimethanol, 1,5-decalin dimethanol, 2,3-decalin dimethanol, 2,3-norbomane dimethanol, 2,5-norbornane dimethanol, 1,3-adamantane dimethanol, and limonene; and a dihydroxy compound which is a secondary or tertiary alcohol of an alicyclic hydrocarbon, exemplified by 1,2-cyclohexanediol, 1,4-cyclohexanediol, 1,3-adamantanediol, hydrogenated bisphenol A, 2,2,4,4-tetramethyl-1,3-cyclobutanediol, and the like.

Examples of the dihydroxy compound containing ether include oxyalkylene glycols and a dihydroxy compound containing an acetal ring.

As the oxyalkylene glycols, for example, diethylene glycol, triethylene glycol, tetraethylene glycol, polyethylene glycol, and polypropylene glycol can be used.

As the dihydroxy compound containing an acetal ring, for example, spiroglycol of the following structural formula (3), and dioxane glycol of the following structural formula (4) can be used.

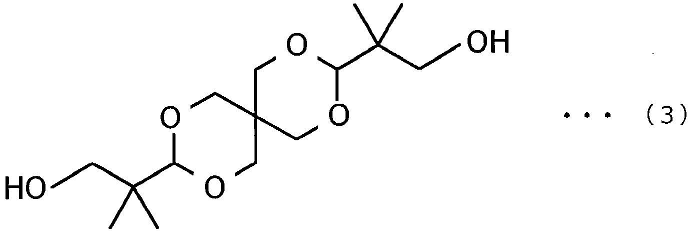

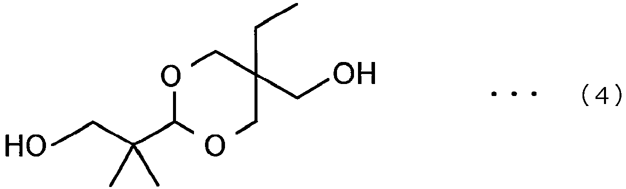

As the dihydroxy compound containing an aromatic group , for example, the following dihydroxy compounds can be used, but dihydroxy compounds other than these can also be used. An aromatic bisphenol compound such as 2,2-bis(4-hydroxyphenyl)propane, 2,2-bis(3-methyl-4-hydroxyphenyl)propane, 2,2-bis(4-hydroxy-3,5-dimethylphenyl)propane, 2,2-bis(4-hydroxy-3,5-diethylphenyl)propane, 2,2-bis(4-hydroxy-(3-phenyl)phenyl)propane, 2,2-bis(4-hydroxy-(3,5-diphenyl)phenyl)propane, 2,2-bis(4-hydroxy-3,5-dibromophenyl)propane, bis(4-hydroxyphenyl)methane, 1,1-bis(4-hydroxyphenyl)ethane, 2,2-bis(4-hydroxyphenyl)butane, 2,2-bis(4-hydroxyphenyl)pentane, 1,1-bis(4-hydroxyphenyl)-1-phenylethane, bis(4-hydroxyphenyl)diphenylmethane, 1,1-bis(4-hydroxyphenyl)-2-ethylhexane, 1,1-bis(4-hydroxyphenyl)decane, bis(4-hydroxy-3-nitrophenyl)methane, 3,3-bis(4-hydroxyphenyl)pentane, 1,3-bis(2-(4-hydroxyphenyl)-2-propyl)benzene, 1,3-bis(2-(4-hydroxyphenyl)-2-propyl)benzene, 2,2-bis(4-hydroxyphenyl)hexafluoropropane, 1,1-bis(4-hydroxyphenyl)cyclohexane, bis(4-hydroxyphenyl)sulfone, 2,4'-dihydroxydiphenylsulfone, bis(4-hydroxyphenyl)sulfide, bis(4-hydroxy-3-methylphenyl)sulfide, bis(4-hydroxyphenyl)disulfide, 4,4'-dihydroxydiphenyl ether, and 4,4'-dihydroxy-3,3'-dichlorodiphenyl ether; a dihydroxy compound having an ether group bonded to an aromatic group such as 2,2-bis(4-(2-hydroxyethoxy)phenyl)propane, 2,2-bis(4-(2-hydroxypropoxy)phenyl)propane, 1,3-bis(2-hydroxyethoxy)benzene, 4,4'-bis(2-hydroxyethoxy)biphenyl, and bis(4-(2-hydroxyethoxy)phenyl)sulfone; and a dihydroxy compound containing a fluorene ring such as 9,9-bis(4-(2-hydroxyethoxy)phenyl)fluorene, 9,9-bis(4-hydroxyphenyl)fluorene, 9,9-bis(4-hydroxy-3-methylphenyl)fluorene, 9,9-bis(4-(2-hydroxypropoxy)phenyl)fluorene, 9,9-bis(4-(2-hydroxyethoxy)-3-methylphenyl)fluorene, 9,9-bis(4-(2-hydroxypropoxy)-3-methylphenyl)fluorene, 9,9-bis(4-(2-hydroxyethoxy)-3-isopropylphenyl)fluorene, 9,9-bis(4-(2-hydroxyethoxy)-3-isobutylphenyl)fluorene, 9,9-bis(4-(2-hydroxyethoxy)-3-tert-butylphenyl)fluorene, 9,9-bis(4-(2-hydroxyethoxy)-3-cyclohexylphenyl)fluorene, 9,9-bis(4-(2-hydroxyethoxy)-3-phenylphenyl)fluorene, 9,9-bis(4-(2-hydroxyethoxy)-3,5-dimethylphenyl)fluorene, 9,9-bis(4-(2-hydroxyethoxy)-3-tert-butyl-6-methylphenyl)fluorene, and 9,9-bis(4-(3-hydroxy-2,2-dimethylpropoxy)phenyl)fluorene.

In the polycarbonate resin (A), a content ratio of the structural unit (a) to 100 mol% of structural unit derived from the total dihydroxy compound is not particularly limited, and the lower limit thereof is preferably 30 mol% or more, more preferably 40 mol% or more, even more preferably 50 mol% or more, particularly preferably 55 mol% or more, and most preferably 60 mol% or more. The upper limit thereof is more preferably 95 mol % or less, even more preferably 90 mol % or less, and particularly preferably 85 mol % or less. In this case, a biogenic material content can be further increased, and the heat resistance can be further improved. Although the content ratio of the structural unit (a) in the polycarbonate may be 100 mol%, from the viewpoint of further increasing the molecular weight and further improving the impact resistance, it is preferred that a structural unit other than the structural unit (a) is copolymerized.

When the polycarbonate resin (A) is a copolymerized polycarbonate containing the structural unit (a) and the structural unit (b), a content ratio of the structural unit (b) is not particularly limited, and the lower limit thereof is preferably 5 mol% or more, more preferably 10 mol% or more, and even more preferably 15 mol% or more. The upper limit thereof is preferably 70 mol% or less, more preferably 60 mol% or less, even more preferably 50 mol% or less, particularly preferably 45 mol% or less, and most preferably 40 mol% or less. In this case, since a flexible structure is introduced into the polymer chain, toughness of the resin can be further increased, and the impact resistance can be further improved.

The polycarbonate resin (A) may further have a structural unit (another dihydroxy compound) other than the structural unit (a) and the structural unit (b). In this connection, in order for the present invention to exhibit good effects, the content ratio of a structural unit derived from the other dihydroxy compound is preferably 10 mol% or less, and more preferably 5 mol% or less, with respective to 100 mol% of a structural unit(s) derived from the total dihydroxy compound.

The other dihydroxy compound can be appropriately selected according to the properties required for the polycarbonate resin. The other dihydroxy compound may be used alone or in combination of a plurality of kinds thereof. By using the other dihydroxy compound in combination with the dihydroxy compound of formula (1), effects such as improvement of flexibility and mechanical properties of the polycarbonate resin and improvement of moldability can be obtained.

The dihydroxy compound used as a raw material for the polycarbonate resin may contain a reducing agent, an antioxidant, a deoxidant, a light stabilizer, an antacid agent, and a stabilizer such as a pH stabilizer and a heat stabilizer. In particular, the dihydroxy compound of formula (1) has a property of being easily altered in an acidic state. Therefore, by using a basic stabilizer in the process of synthesizing the polycarbonate resin, alteration of the dihydroxy compound of formula (1) can be prevented, and the quality of the obtained polycarbonate resin composition can be further improved.

As the basic stabilizer, for example, the following compounds can be used. Hydroxides, carbonates, phosphates, phosphites, hypophosphites, borates and fatty acid salts of metals in Group 1 or 2 in the long-period periodic table (Nomenclature of Inorganic Chemistry IUPAC Recommendations 2005); a basic ammonium compound such as tetramethylammonium hydroxide, tetraethylammonium hydroxide, tetrapropylammonium hydroxide, tetrabutylammonium hydroxide, trimethylethylammonium hydroxide, trimethylbenzylammonium hydroxide, trimethylphenylammonium hydroxide, triethylmethylammonium hydroxide, triethylbenzylammonium hydroxide, triethylphenylammonium hydroxide, tributylbenzylammonium hydroxide, tributylphenylammonium hydroxide, tetraphenylammonium hydroxide, benzyltriphenylammonium hydroxide, methyltriphenylammonium hydroxide, and butyltriphenylammonium hydroxide; an amine-based compound such as diethylamine, dibutylamine, triethylamine, morpholine, N-methylmorpholine, pyrrolidine, piperidine, 3-amino-1-propanol, ethylenediamine, N-methyldiethanolamine, diethylethanolamine, diethanolamine, triethanolamine, 4-aminopyridine, 2-aminopyridine, N,N-dimethyl-4-aminopyridine, 4-diethylaminopyridine, 2-hydroxypyridine, 2-methoxypyridine, 4-methoxypyridine, 2-dimethylaminoimidazole, 2-methoxyimidazole, imidazole, 2-mercaptoimidazole, 2-methylimidazole, and aminoquinoline; and a hindered amine-based compound such as di-(tert-butyl)amine and 2,2,6,6-tetramethylpiperidine.

A content of the basic stabilizer in the dihydroxy compound is not particularly limited. Since the dihydroxy compound of formula (1) is unstable in the acidic state, it is preferred to set the content of the basic stabilizer such that the pH of the aqueous solution of the dihydroxy compound containing the basic stabilizer is around 7.

The content of the basic stabilizer with respect to the dihydroxy compound of formula (1) is preferably from 0.0001 wt% to 1 wt%. In this case, the effect of preventing alteration of the dihydroxy compound of formula (1) is sufficiently obtained. From the viewpoint of further enhancing the effect, the content of the basic stabilizer is more preferably from 0.001 wt% to 0.1 wt%.

Examples of the carbonate precursor as a raw material for the polycarbonate resin include a carbonyl halide and a carbonic acid diester. One kind of the carbonate precursor may be used, or two or more kinds thereof may be used in any combination and ratio.

Examples of the carbonyl halide include: phosgene; haloformates such as a bischloroformate of a dihydroxy compound and a monochloroformate of a dihydroxy compound.

As the carbonic acid diester used as a raw material for the polycarbonate resin, a compound of the following formula (5) can be generally used. The carbonic acid diester may be used alone or in combination of two or more kinds thereof.

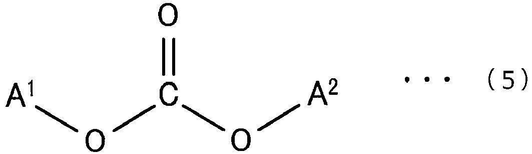

In formula (5), each of A¹ and A² is a substituted or unsubstituted aliphatic hydrocarbon group having 1 to 18 carbon atoms or a substituted or unsubstituted aromatic hydrocarbon group, and A' and A² may be the same as or different from each other. As A' and A², a substituted or unsubstituted aromatic hydrocarbon group is preferably used, and an unsubstituted aromatic hydrocarbon group is more preferably used.

As a carbonic acid diester of formula (5), for example, a diphenyl carbonate (DPC), a substituted diphenyl carbonate such as a ditolyl carbonate, a dimethyl carbonate, a diethyl carbonate, a di-tert-butyl carbonate, etc. can be used. Among the carbonic acid diester, it is preferred to use a diphenyl carbonate or a substituted diphenyl carbonate and it is particularly preferred to use a diphenyl carbonate. In this connection, the carbonic acid diester may contain impurities such as chloride ions, and the impurities may inhibit the polycondensation reaction or deteriorate a color tone of the polycarbonate resin to be obtained, so that it is preferred to use a carbonic acid diester purified by distillation or the like, if necessary.

In the present invention, a method for producing the polycarbonate resin is not particularly limited, and any method such as an interfacial polymerization process, a melt transesterification process, a pyridine method, a ring-opening polymerization process of cyclic carbonate compounds, a process of solid phase transesterification of prepolymers may be used by appropriately using the above raw material.

For example, the polycarbonate resin can be synthesized by polycondensation of the above-described dihydroxy compound and a carbonic acid diester through a transesterification reaction. More specifically, the polycarbonate resin can be obtained by removing out of the system a monohydroxy compound or the like which is produced as a by-product in the polycondensation and the transesterification reaction.

The transesterification reaction proceeds in the presence of a transesterification reaction catalyst (hereinafter, the transesterification reaction catalyst is referred to as a "polymerization catalyst"). The type of polymerization catalyst can greatly affect the reaction rate of the transesterification reaction and the quality of the polycarbonate resin to be obtained.

The polymerization catalyst is not limited as long as it can satisfy the transparency, color tone, heat resistance, weather resistance and mechanical strength of the polycarbonate resin to be obtained. As the polymerization catalyst, for example, a Group I or Group II metal compound (hereinafter, simply referred to as "Group 1" or "Group 2") in the long-period periodic table, and a basic compound such as a basic boron compound, a basic phosphorus compound, a basic ammonium compound, and an amine-based compound can be used. Among them, the Group 1 metal compound and/or the Group 2 metal compound are preferred, and the Group 2 metal compound is particularly preferred.

As the Group 1 metal compound, for example, the following compounds can be used. Sodium hydroxide, potassium hydroxide, lithium hydroxide, cesium hydroxide, sodium bicarbonate, potassium hydrogen carbonate, lithium hydrogen carbonate, cesium hydrogen carbonate, sodium carbonate, potassium carbonate, lithium carbonate, cesium carbonate, sodium acetate, potassium acetate, lithium acetate, cesium acetate, sodium stearate, potassium stearate, lithium stearate, cesium stearate, sodium borohydride, potassium borohydride, lithium borohydride, cesium borohydride, sodium phenylborohydride, potassium borophenylate, lithium borophenylate, cesium borophenylate, sodium benzoate, potassium benzoate, lithium benzoate, cesium benzoate, disodium hydrogen phosphate, dipotassium hydrogen phosphate, dilithium hydrogen phosphate, dicesium hydrogen phosphate, disodium phenyl phosphate, dipotassium phenyl phosphate, dilithium phenyl phosphate, dicesium phenyl phosphate, alcoholate of sodium, potassium, lithium, and cesium, phenolate, a disodium salt, a dipotassium salt, a dilithium salt, or a dicesium salt of bisphenol A, and the like.

As the Group 1 metal compound, a lithium compound is preferred from the viewpoint of polymerization activity and the color tone of the polycarbonate resin to be obtained.

As the Group 2 metal compound, for example, the following compounds can be used. Calcium hydroxide, barium hydroxide, magnesium hydroxide, strontium hydroxide, calcium hydrogen carbonate, barium hydrogen carbonate, magnesium hydrogen carbonate, strontium hydrogen carbonate, calcium carbonate, barium carbonate, magnesium carbonate, strontium carbonate, calcium acetate, barium acetate, magnesium acetate, strontium acetate, calcium stearate, barium stearate, magnesium stearate, strontium stearate, and the like.

The Group 2 metal compound is preferably a magnesium compound, a calcium compound or a barium compound, more preferably a magnesium compound and/or a calcium compound, and most preferably a calcium compound, from the viewpoint of the polymerization activity and the color tone of the polycarbonate resin to be obtained.

A basic compound such as a basic boron compound, a basic phosphorus compound, a basic ammonium compound, or an amine-based compound can be used in combination with the Group 1 metal compound and/or the Group 2 metal compound, and it is particularly preferred to use only the Group 1 metal compound and/or the Group 2 metal compound.

As the basic phosphorus compound, for example, the following compounds can be used. Triethylphosphine, tri-n-propylphosphine, triisopropylphosphine, tri-n-butylphosphine, triphenylphosphine, tributylphosphine, a quaternary phosphonium salt, and the like.

As the basic ammonium compound, for example, the following compounds can be used. Tetramethylammonium hydroxide, tetraethylammonium hydroxide, tetrapropylammonium hydroxide, tetrabutylammonium hydroxide, trimethylethylammonium hydroxide, trimethylbenzylammonium hydroxide, trimethylphenylammonium hydroxide, triethylmethylammonium hydroxide, triethylbenzylammonium hydroxide, triethylphenylammonium hydroxide, tributylbenzylammonium hydroxide, tributylphenylammonium hydroxide, tetraphenylammonium hydroxide, benzyltriphenylammonium hydroxide, methyltriphenylammonium hydroxide, butyltriphenylammonium hydroxide, and the like.

As the amine-based compound, for example, the following compounds can be used. 4-aminopyridine, 2-aminopyridine, N,N-dimethyl-4-aminopyridine, 4-diethylaminopyridine, 2-hydroxypyridine, 2-methoxypyridine, 4-methoxypyridine, 2-dimethylaminoimidazole, 2-methoxyimidazole, imidazole, 2-mercaptoimidazole, 2-methylimidazole, aminoquinoline, guanidine, and the like.

An amount of the polymerization catalyst to be used is preferably from 0.1 µmol to 300 µmol, more preferably from 0.5 µmol to 100 µmol, and particularly preferably from 1 µmol to 50 µmol, per 1 mol of the total dihydroxy compound used in the reaction.

When a compound containing at least one metal selected from the group consisting of Group 2 metals and lithium in the long-period periodic table is used as the polymerization catalyst, for example, when a compound containing at least one metal selected from the group consisting of a magnesium compound, a calcium compound, and a barium compound is used, and particularly when a magnesium compound and/or a calcium compound is used, the amount of the polymerization catalyst to be used is preferably 0.1 µmol or more, more preferably 0.3 µmol or more, and particularly preferably 0.5 µmol or more, per 1 mol of the total dihydroxy compound used in the reaction, in terms of the atomic weight of metal of the compound containing the metal. The upper limit thereof is preferably 10 µmol or less, more preferably 5 µmol or less, and particularly preferably 3 µmol or less.

Since the polymerization velocity can be increased by adjusting the amount of the polymerization catalyst to be used within the above-described range, a polycarbonate resin having a desired molecular weight can be obtained without necessarily increasing the polymerization temperature. Therefore, deterioration of the color tone of the polycarbonate resin can be prevented. Additionally, an unreacted raw material can be prevented from volatilizing during polymerization, and thus a molar ratio of the dihydroxy compound to the carbonic acid diester can be prevented from being disturbed, so that a resin having a desired molecular weight can be more reliably obtained. Further, since coincidence of the side reaction can be prevented, deterioration of the color tone or coloring during the molding process of the polycarbonate resin can be further prevented.

In consideration of the adverse effect of sodium, potassium, or cesium among the Group 1 metals on the color tone of the polycarbonate resin and the adverse effect of iron on the color tone of the polycarbonate resin, the total content of sodium, potassium, cesium, and iron in the polycarbonate resin (A) is preferably 1 ppm by weight or less. In this case, the deterioration of the color tone of the polycarbonate resin can be further prevented, and the color tone of the polycarbonate resin can be further improved. From the same viewpoint, the total content of sodium, potassium, cesium and iron in the polycarbonate resin is more preferably 0.5 ppm by weight or less. The metals may be introduced not only from the catalyst to be used, but also from the raw material or a reaction device. Regardless of the source, a total amount of these metal compounds in the polycarbonate resin is preferably within the above-described range as a total content of sodium, potassium, cesium and iron.

### (Synthesis of Polycarbonate Resin)

The polycarbonate resin is suitably obtained by polycondensation of a carbonic acid diester and a dihydroxy compound used as a raw material, such as the dihydroxy compound of formula (1), in the presence of a polymerization catalyst through a transesterification reaction.

It is preferred to uniformly mix the dihydroxy compound and the carbonic acid diester as the raw material before the transesterification reaction. A temperature for mixing is generally 80°C or higher, and preferably 90°C or higher, and is generally 250°C or lower, preferably 200°C or lower, and more preferably 150°C or lower. Among them, the temperature for mixing is preferably 100°C or higher and 120°C or lower. In this case, the dissolution speed can be increased, the solubility can be sufficiently improved, and problems such as solidification can be sufficiently avoided. Further, in this case, thermal deterioration of the dihydroxy compound can be sufficiently prevented, and as a result, the color tone of the polycarbonate resin to be obtained can be further improved, and the weather resistance can be improved.

An operation of mixing the dihydroxy compound and the carbonic acid diester as the raw material is performed in an atmosphere with an oxygen concentration of 10 vol% or less, more preferably from 0.0001 vol% to 10 vol%, even more preferably from 0.0001 vol% to 5 vol%, and particularly preferably from 0.0001 vol% to 1 vol%. In this case, the color tone can be improved and the reactivity can be increased.

In order to obtain the polycarbonate resin, it is preferred to use the carbonic acid diester at a molar ratio of 0.90 to 1.20 with respect to the total dihydroxy compound used in the reaction. In this case, an increase in the amount of a hydroxy terminal group in the polycarbonate resin can be prevented, so that thermal stability of the polymer can be improved. Therefore, coloring during molding can be further prevented, and a transesterification reaction rate can be increased. A desired polymer can be more reliably obtained. Further, by adjusting the amount of the carbonic acid diester to be used within the above range, the transesterification reaction rate can be prevented from lowering, thereby enabling more reliable production of a polycarbonate resin having a desired molecular weight. In this case, an increase in thermal history during the reaction can be prevented, so that the color tone and weather resistance of the polycarbonate resin can be further improved. Further, in this case, the amount of the carbonic acid diester remaining in the polycarbonate resin can be reduced, and the generation of stains and odors during the molding can be avoided or alleviated. From the same viewpoint as described above, the amount of the carbonic acid diester to be used with respect to the total dihydroxy compound is more preferably from 0.95 to 1.10 in molar ratio.

A method of performing polycondensation between the dihydroxy compound and the carbonic acid diester is carried out in multiple stages using a plurality of reactors in the presence of the catalyst described above. A reaction format can be a batch system, a continuous system, or a combination of a batch system and a continuous system, and it is preferred to use the continuous system, which produces a polycarbonate resin with a smaller thermal history and has excellent productivity.

From the viewpoint of controlling the polymerization velocity and the quality of the polycarbonate resin to be obtained, it is important to appropriately select a jacket temperature, an internal temperature, and a pressure in the reaction system depending on the reaction stage. Specifically, it is preferred to obtain a prepolymer at a relatively low temperature and relatively low vacuum in the initial stage of the polycondensation reaction, and to increase the molecular weight to a predetermined value at a relatively high temperature and relatively high vacuum in the latter stage of the reaction. In this case, distillation of unreacted monomers can be prevented, and the molar ratio of the dihydroxy compound to the carbonic acid diester can be easily adjusted to a desired ratio. As a result, a decrease in the polymerization velocity can be prevented. Additionally, a polymer having a desired molecular weight and a desired terminal group can be more reliably obtained.

The polymerization velocity in the polycondensation reaction is controlled by a balance between a hydroxy terminal group and a carbonate terminal group. Therefore, when the balance of terminal groups fluctuates due to the distillation of unreacted monomers, it becomes difficult to control the polymerization velocity to be constant, and the molecular weight of the resin to be obtained may fluctuate greatly. Since the molecular weight of the resin correlates with a melt viscosity, the melt viscosity may fluctuate when the resin to be obtained is meltprocessed, making it difficult to keep the quality of a molded article constant. Such a problem is likely to occur particularly when the polycondensation reaction is performed in a continuous manner.

In order to prevent the amount of unreacted monomer to be distilled, it is effective to use a reflux condenser in a polymerization reactor, and it is particularly effective in the initial stage of the reaction when a large amount of unreacted monomer is present. A temperature of a refrigerant introduced into the reflux condenser can be appropriately selected according to the monomer to be used. The temperature of the refrigerant introduced into the reflux condenser is generally from 45°C to 180°C, preferably from 80°C to 150°C, and particularly preferably from 100°C to 130°C, at an inlet of the reflux condenser. By adjusting the refrigerant temperature within the above range, the reflux amount can be sufficiently increased, the effect can be sufficiently obtained, and the distillation efficiency of the monohydroxy compound to be distilled off can be sufficiently improved. As a result, the reaction rate can be prevented from lowering, and the resin to be obtained can be further prevented from being colored. Hot water, steam, heat medium oil, and the like are used as the refrigerant, and steam and heat medium oil are preferred.

It is important to select the type and amount of the polymerization catalyst described above in order to maintain a suitable polymerization velocity and prevent the distillation of monomers with improving the color tone of the polycarbonate resin to be obtained.

The polycarbonate resin is generally produced through two or more steps using the polymerization catalyst. The polycondensation reaction may be performed in two or more steps by sequentially changing the conditions using one polycondensation reactor. From the viewpoint of production efficiency, it is preferred to use a plurality of reactors and perform the reaction in multiple stages under different conditions.

From the viewpoint of efficiently performing the polycondensation reaction, it is important to prevent volatilization of the monomers with maintaining the required polymerization velocity at the initial stage of the reaction when the reaction solution contains a large amount of monomers. In the latter stage of the reaction, it is important to shift an equilibrium toward the polycondensation reaction side by sufficiently distilling off the monohydroxy compound produced as a by-product. Therefore, the reaction conditions suitable for the initial stage of the reaction are generally different from the reaction conditions suitable for the latter stage of the reaction. Therefore, by using a plurality of reactors arranged in series, each condition can be easily changed, and production efficiency can be improved.

The number of polymerization reactors used in the production of the polycarbonate resin may be at least two or more as described above, but from the viewpoint of production efficiency and the like, the number of polymerization reactors is 3 or more, preferably from 3 to 5, and particularly preferably 4. When there are two or more polymerization reactors, a plurality of reaction stages with different conditions may be performed in each polymerization reactor, or the temperature and pressure may be changed continuously.

The polymerization catalyst can be added to a raw material preparation tank or a raw material storage tank, or can be added directly to the polymerization reactor. From the viewpoint of stability of supply and control of the polycondensation reaction, it is preferred to install a catalyst supply line in the middle of a raw material line before supplying to the polymerization reactor and supply the polymerization catalyst in a form of an aqueous solution.

By adjusting the temperature of the polycondensation reaction, productivity can be improved and an increase in the thermal history of the product can be avoided. Further, volatilization of the monomers and decomposition or coloring of the polycarbonate resin can be further prevented. Specifically, the following conditions can be selected as the reaction conditions in a first stage reaction. That is, the maximum internal temperature of the polymerization reactor is generally set in a range of from 150°C to 250°C, preferably from 160°C to 240°C, and more preferably from 170°C to 230°C. The pressure (hereinafter, the pressure represents an absolute pressure) in the polymerization reactor is generally set in a range of from 1 kPa to 110 kPa, preferably from 5 kPa to 70 kPa, and more preferably from 7 kPa to 30 kPa. The reaction time is generally set in a range of from 0.1 hour to 10 hours, and preferably from 0.5 hour to 3 hours. The first stage reaction is preferably carried out with distilling off the generated monohydroxy compound out of the reaction system.

It is preferred that, from the second and subsequent stages, the pressure in the reaction system is gradually lowered from the pressure in the first stage, and the pressure (absolute pressure) in the reaction system is finally reduced to 1 kPa or less with removing the subsequently generated monohydroxy compound out of the reaction system. The maximum internal temperature of the polymerization reactor is generally set in a range of 200°C to 260°C, and preferably 210°C to 250°C. The reaction time is generally set in a range of 0.1 hour to 10 hours, preferably 0.3 hour to 6 hours, and particularly preferably 0.5 hour to 3 hours.

From the viewpoint of further preventing the coloring and thermal deterioration of the polycarbonate resin and obtaining the polycarbonate resin (A) having a better color tone, the maximum internal temperature of the polymerization reactor in the entire reaction stage is preferably from 210°C to 240°C. In order to prevent the decrease in the polymerization velocity in the latter half of the reaction and to minimize the deterioration due to the thermal history, it is preferred to use a lateral-type reactor having excellent plug-flow properties and interface renewal properties in the final stage of the polycondensation reaction.

In order to control the molecular weight of the polycarbonate resin finally obtained in the continuous polymerization to a certain level, the polymerization velocity is preferably adjusted as necessary. In this case, adjusting the pressure in the polymerization reactor at the final stage is a method with good operability.

As described above, the polymerization velocity varies depending on a ratio of the hydroxy terminal group to the carbonate terminal group, so that by intentionally reducing the amount of one of the terminal groups to lower the polymerization velocity and keeping the pressure in the polymerization reactor at the final stage at a high vacuum, the amount of low molecular weight components remaining in the resin, including the monohydroxy compound, can be reduced. However, in this case, when the amount of one terminal group is too small, even a slight change in the balance of the terminal groups may lead to an extreme decrease in reactivity, and the polycarbonate resin to be obtained may have a molecular weight less than a desired molecular weight. In order to avoid such a problem, the polycarbonate resin obtained in the final stage polymerization reactor preferably has the hydroxy terminal group and the carbonate terminal group both at 10 mol/ton or more. On the other hand, when the amount of both terminal groups is too large, the polymerization velocity is high and the molecular weight is too high, so that the amount of one terminal group is preferably 60 mol/ton or less.

By thus adjusting the amount of terminal groups and the pressure in the polymerization reactor at the final stage to be within a preferred range, the amount of the monohydroxy compound remaining in the resin can be reduced at an outlet of the polymerization reactor. The amount of the monohydroxy compound remaining in the resin at the outlet of the polymerization reactor is preferably 2000 ppm by weight or less, more preferably 1500 ppm by weight or less, and even more preferably 1000 ppm by weight or less. Thus, by reducing the content of the monohydroxy compound at the outlet of the polymerization reactor, devolatilization of the monohydroxy compound and the like can be easily performed in subsequent steps.

The amount of the remaining monohydroxy compound is preferably as small as possible, but when attempting to reduce the amount of the remaining monohydroxy compound to less than 100 ppm by weight, it is necessary to extremely reduce the amount of one of the terminal groups and to select operating conditions such that the pressure in the polymerization reactor is maintained at a high vacuum. In this case, as described above, it is difficult to maintain the molecular weight of the polycarbonate resin to be obtained at a certain level, so that the amount of the remaining monohydroxy compound is generally 100 ppm by weight or more, and preferably 150 ppm by weight or more.

From the viewpoint of effective utilization of resources, it is preferred that the monohydroxy compound produced as a by-product is purified as necessary and then reused as a raw material for another compound. For example, when the monohydroxy compound is phenol, the monohydroxy compound can be used as a raw material for diphenyl carbonate, bisphenol A, and the like.

A glass transition temperature of the polycarbonate resin is preferably 90°C or higher. In this case, the heat resistance and impact resistance of the polycarbonate resin composition can be improved in a well-balanced manner. From the same viewpoint, the glass transition temperature of the polycarbonate resin is more preferably 100°C or higher, even more preferably 110°C or higher, and particularly preferably 120°C or higher. On the other hand, the glass transition temperature of the polycarbonate resin is preferably 250°C or lower, more preferably 200°C or lower, and particularly preferably 170°C or lower. In this case, the melt viscosity can be reduced by the melt polymerization described above, and a polymer having a sufficient molecular weight can be obtained. When an attempt is made to increase the molecular weight by increasing the polymerization temperature to decrease the melt viscosity, the structural component (a) may become easily colored due to insufficient heat resistance. From the viewpoint of increasing the molecular weight and preventing coloring in a more balanced manner, the glass transition temperature of the polycarbonate resin is preferably 165°C or lower, more preferably 160°C or lower, and particularly preferably 150°C or lower. The glass transition temperature of the polycarbonate resin can be adjusted, for example, by selecting the structural unit of the resin or changing the ratio. The glass transition temperature can be measured by a method to be described later.

The refractive index of the polycarbonate resin (A) is preferably 1.480 or more and 1.620 or less, and more preferably 1.490 or more and 1.600 or less. Within the range, the composition has excellent transparency in a case of being combined with the polymer (B). The refractive index of the polycarbonate resin can be adjusted, for example, by selecting the structural unit of the resin or changing the ratio. The refractive index can be measured by a method to be described later.

The molecular weight of the polycarbonate resin can be represented by a reduced viscosity, and the higher the reduced viscosity, the larger the molecular weight. The reduced viscosity is generally 0.30 dL/g or more, and preferably 0.33 dL/g or more. In this case, the mechanical strength of the molded article can be further improved. On the other hand, the reduced viscosity is generally 1.20 dL/g or less, preferably 1.00 dL/g or less, and even more preferably 0.80 dL/g or less. In this case, fluidity during molding can be improved, and productivity and moldability can be further improved. The reduced viscosity of the polycarbonate resin is measured with an Ubbelohde viscometer under the condition of a temperature of 20.0°C±0.1°C by using a solution prepared by precisely adjusting a concentration of the resin composition to 0.6 g/dL using methylene chloride as a solvent. The details of the method for measuring the reduced viscosity will be described in Examples.

The polycarbonate resin preferably contains a catalyst deactivator. The catalyst deactivator is not particularly limited as long as it is an acidic substance and has a function of deactivating a polymerization catalyst, and examples thereof include: phosphoric acid, trimethyl phosphate, triethyl phosphate, phosphorous acid, phosphonium salts such as tetrabutylphosphonium octylsulfonate, a benzene sulfonic acid tetramethylphosphonium salt, a benzenesulfonic acid tetrabutylphosphonium salt, a dodecylbenzenesulfonic acid tetrabutylphosphonium salt, and a p-toluenesulfonic acid tetrabutylphosphonium salt; ammonium salts such as a decylsulfonic acid tetramethylammonium salt, and a dodecylbenzenesulfonic acid tetrabutylammonium salt; and alkyl esters such as methyl benzenesulfonate, butyl benzenesulfonate, methyl p-toluenesulfonate, butyl p-toluenesulfonate, and ethyl hexadecylsulfonate.

The catalyst deactivator preferably contains a phosphorus-based compound including either a partial structure of the following structural formula (6) or the following structural formula (7) (hereinafter, referred to as a "specific phosphorus-based compound"). When the specific phosphorus-based compound is added after completion of the polycondensation reaction, that is, for example, at the time of a kneading step, a pelletization step, or the like, the specific phosphorus-based compound can deactivate a polymerization catalyst to be described later, and unnecessary progress of the polycondensation reaction thereafter can be prevented. As a result, the progress of the polycondensation when the polycarbonate resin is heated in the molding step or the like can be prevented, and thus desorption of the monohydroxy compound can be prevented. By deactivating the polymerization catalyst, the coloring of the polycarbonate resin at a high temperature can be further prevented.

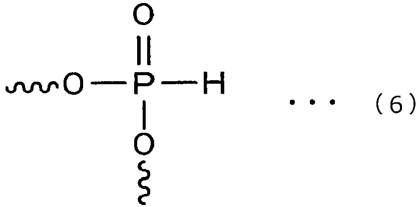

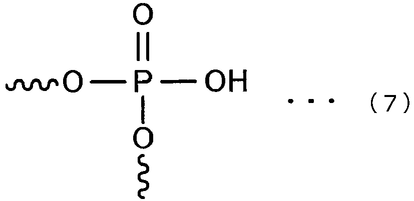

As the specific phosphorus-based compound including the partial structure of the structural formula (6) or structural formula (7), phosphoric acid, phosphorous acid, phosphonic acid, hypophosphorous acid, polyphosphoric acid, phosphonates, acid phosphates, and the like can be employed. Among the specific phosphorus-based compound, phosphorous acid, phosphonic acid, and phosphonates are more effective in deactivating the catalyst and preventing coloring, and phosphorous acid is particularly preferred.

As the phosphonic acid, for example, the following compounds can be used. Phosphonic acid (phosphorous acid), methylphosphonic acid, ethylphosphonic acid, vinylphosphonic acid, decylphosphonic acid, phenylphosphonic acid, benzylphosphonic acid, aminomethylphosphonic acid, methylenediphosphonic acid, 1-hydroxyethane-1,1-diphosphonic acid, 4-methoxyphenylphosphonic acid, nitrilotris(methylenephosphonic acid), propylphosphonic anhydride, and the like.

As the phosphonates, for example, the following compounds can be used. Dimethyl phosphonate, diethyl phosphonate, bis(2-ethylhexyl)phosphonate, dilauryl phosphonate, dioleyl phosphonate, diphenyl phosphonate, dibenzyl phosphonate, dimethyl methylphosphonate, diphenyl methylphosphonate, diethyl ethylphosphonate, diethyl benzylphosphonate, dimethyl phenylphosphonate, diethyl phenylphosphonate, dipropyl phenylphosphonate, (methoxymethyl)diethyl phosphonate, diethyl vinylphosphonate, diethyl hydroxymethylphosphonate, (2-hydroxyethyl)dimethyl phosphonate, diethyl p-methylbenzylphosphonate, diethylphosphonoacetic acid, ethyl diethylphosphonoacetate, tert-butyl diethylphosphonoacetate, (4-chlorobenzyl)diethylphosphonate, diethyl cyanophosphonate, diethyl cyanomethylphosphonate, diethyl 3,5-di-tert-butyl-4-hydroxybenzylphosphonate, diethylphosphonoacetaldehyde diethyl acetal, diethyl (methylthiomethyl)phosphonate, and the like.

As the acidic phosphates, for example, the following compounds can be used. Phosphate diesters such as dimethyl phosphate, diethyl phosphate, divinyl phosphate, dipropyl phosphate, dibutyl phosphate, bis(butoxyethyl) phosphate, bis(2-ethylhexyl) phosphate, diisotridecyl phosphate, dioleyl phosphate, distearyl phosphate, diphenyl phosphate, and dibenzyl phosphate, a mixture of a diester and a monoester, diethyl chlorophosphate, stearyl zinc phosphate, and the like.

One kind of the specific phosphorus-based compound may be used alone, or two or more kinds thereof may be mixed and used in any combination and ratio.

A content of the specific phosphorus-based compound in the polycarbonate resin is preferably 0.1 ppm by weight or more and 5 ppm by weight or less in terms of phosphorus atoms. In this case, the effect of deactivating the catalyst and preventing coloring by the specific phosphorus-based compound can be sufficiently obtained. In this case, coloring of the polycarbonate resin can be further prevented particularly in a durability test at a high temperature and high humidity.

By adjusting the content of the specific phosphorus-based compound according to the amount of the polymerization catalyst, the effects of deactivating the catalyst and preventing coloring can be more reliably obtained. The content of the specific phosphorus-based compound is preferably 0.5 time or more and 5 times or less, more preferably 0.7 time or more and 4 times or less, and particularly preferably 0.8 times or more and 3 times or less, per 1 mol of metal atoms of the polymerization catalyst, in terms of the amount of phosphorus atoms.

### [Polymer (B)]

The polymer (B) is a copolymer containing at least the polymer chain (B1) and the polymer chain (B2), and has a role of imparting impact resistance to the resin composition according to the present invention and a molded article therefrom. The polymer (B) is a block copolymer and/or a graft copolymer (which may be abbreviated as a block-graft copolymer) containing the polymer chain (B1) and the polymer chain (B2). The block copolymer is a copolymer in which the polymer chain (B1) and the polymer chain (B2) are bonded in one polymer chain, and the graft copolymer is a branched form in which either one of the polymer chain (B1) or the polymer chain (B2) forms a backbone polymer and the other forms a branch polymer. From the viewpoint of excellent transparency of the resin composition, the polymer (B) is preferably a graft copolymer. Among them, it is particularly preferred to contain a graft copolymer in which the polymer chain (B 1) is a branch polymer and the polymer chain (B2) is a backbone polymer.

Here, it is preferred that the polymer (B) does not have a crosslinked structure. When the polymer (B) does not have a crosslinked structure, the polycarbonate resin composition has good fluidity during melt kneading and melt molding.

A mass average molecular weight (Mw) of the polymer (B) is preferably 20,000 or more, more preferably 30,000 or more, even more preferably 100,000 or more, and particularly preferably 300,000 or more, from the viewpoint of mechanical properties of the resin composition containing the polymer (B) and the molded article therefrom. On the other hand, the mass average molecular weight (Mw) of the polymer (B) is preferably 10,000,000 or less, more preferably 9,000,000 or less, even more preferably 8,000,000 or less, and particularly preferably 7,000,000 or less, from the viewpoint of optical performance and the fluidity during melt molding of the resin composition containing the polymer (B) and the molded article therefrom.

A number average molecular weight (Mn) of the polymer (B) is preferably 10,000 or more, more preferably 20,000 or more, even more preferably 40,000 or more, and particularly preferably 60,000 or more, from the viewpoint of mechanical properties of the resin composition containing the polymer (B) and the molded article therefrom. On the other hand, the number average molecular weight (Mn) of the polymer (B) is preferably 5,000,000 or less, more preferably 1,000,000 or less, even more preferably 500,000 or less, and particularly preferably 200,000 or less, from the viewpoint of the optical performance and the fluidity during melt molding of the resin composition containing the polymer (B) and the molded article therefrom.

The polymer (B) may be used alone or in combination of two or more kinds thereof. The content of the polymer (B) is not particularly limited, and is preferably from 1 mass% to 30 mass%, more preferably from 2 mass% to 20 mass%, and particularly preferably from 3 mass% to 15 mass%, with respect to 100 mass% of the resin composition. When the content of the polymer (B) is equal to or more than the lower limit value, the impact resistance of the resin composition and the molded article therefrom can be improved. When the content of the polymer (B) is equal to or less than the upper limit value, a decrease in elastic modulus of the resin composition and the molded article therefrom can be prevented.

### [Polymer Chain (B1)]

The polymer chain (B1) is required to have a glass transition temperature (Tg) of higher than 80°C, and preferably 82°C or higher. The polymer chain (B 1) has the role of adjusting miscibility and compatibility when the polymer (B) is mixed with the polycarbonate resin (A), and controlling a phase separation size and phase separation form. Therefore, the polymer chain (B1) is preferably designed to have good compatibility with the polycarbonate resin (A). In order that the compatibility between the polymer chain (B1) and the polycarbonate resin (A) is good and the heat resistance of the resin composition and the molded article therefrom is not lowered, it is important that the polymer chain (B1) has a relatively high glass transition temperature (Tg). When the glass transition temperature (Tg) of the polymer chain (B1) is relatively high, the melt viscosities of the polymer chain (B1) and the polymer (B) are high, and a melt viscosity difference with the polycarbonate resin (A) is small. As a result, the compatibility between the polycarbonate resin (A) and the polymer (B) can be improved when the resin composition is meltkneaded, and fine particles are easily dispersed. Accordingly, the resin composition and the molded article therefrom can exhibit transparency in a wide operating temperature range.

The glass transition temperature (Tg) of the polymer chain (B1) is more preferably 85°C or higher, even more preferably 90°C or higher, and particularly preferably 98°C or higher. When the glass transition temperature of the polymer chain (B1) is 80°C or lower, a resin composition having sufficient heat resistance cannot be obtained. On the other hand, when the glass transition temperature of the polymer chain (B 1) is too high, the resin composition and the molded article therefrom become hard and brittle, so that the glass transition temperature of the polymer chain (B1) is preferably 150°C or lower, more preferably 130°C or lower, and particularly preferably 120°C or lower. From the same viewpoint, the glass transition temperature of the polymer chain (B 1) is preferably close to that of the polycarbonate resin (A). A glass transition temperature difference (an absolute value) between the polycarbonate resin (A) and the polymer chain (B1) is preferably 50°C or lower, more preferably 40°C or lower, and even more preferably 30°C or lower.

Generally, the glass transition temperature of a polymer can be determined using differential scanning calorimetry (DSC). Alternatively, a temperature at which loss tangent (tan δ) gives a peak using dynamic mechanical analysis (DMA) can be used as the glass transition temperature. Regarding the glass transition temperature of the resin composition, the glass transition temperature derived from the polycarbonate resin (A), the glass transition temperature derived from the polymer chain (B 1), and the glass transition temperature derived from the polymer chain (B2) can be confirmed separately. When the polymer chain (B2) functions as a rubber in the resin composition and the impact resistance becomes good, the glass transition temperature derived from the polymer chain (B2) may be confirmed.

Additionally, when the glass transition temperature of a homopolymer for an each monomer unit is known, a Fox equation can be used to calculate the glass transition temperature of the entire random copolymer.

The closer the refractive index between the polycarbonate resin (A) and the polymer chain (B1), the better the transparency of the resin composition and the molded article therefrom.

The refractive index of the polymer is expressed as nD20, with a temperature of 20°C and a light ray of D in a sodium spectrum. In the present invention, a nD20 value measured with an Abbe refractometer is used, and a similar refractive index value can be obtained by using a V block refractometer or a prism coupling refractometer.

The refractive index difference between the polycarbonate resin (A) and the polymer chain (B1) is obtained as a difference in nD20 values, and the refractive index difference is preferably less than 0.030, more preferably less than 0.015, even more preferably less than 0.010, and particularly preferably less than 0.005. When the refractive index difference between the polycarbonate resin (A) and the polymer chain (B1) is less than 0.030, the transparency of the resin composition and the molded article therefrom is good in a wide temperature range.

It is preferable that the polymer chain (B1) contains a methacrylate unit in which a glass transition temperature of a homopolymer is higher than 80°C. In this case, the polymer (B) has sufficient heat resistance, and the polycarbonate resin composition has good heat resistance. Examples of the methacrylate unit in which a glass transition temperature of a homopolymer is higher than 80°C include methacrylic acid, alkyl methacrylates, cycloalkyl methacrylates, and methacrylates containing an aryl group. Examples of the alkyl methacrylate in which a glass transition temperature of a homopolymer is higher than 80°C include methyl methacrylate, isopropyl methacrylate, and t-butyl methacrylate. Examples of the cycloalkyl methacrylate in which a glass transition temperature of a homopolymer is higher than 80°C include cyclohexyl methacrylate, isobornyl methacrylate, t-butylcyclohexyl methacrylate, 3,3,5-trimethylcyclohexyl methacrylate, dicyclopentadienyl methacrylate, dicyclopentanyl methacrylate, and adamantyl methacrylate. Examples of the methacrylate containing an aryl group in which a glass transition temperature of a homopolymer is higher than 80°C include phenyl methacrylate. Among them, methyl methacrylate and phenyl methacrylate are preferred. Among them, it is particularly preferred to contain a methyl methacrylate unit in terms of glass transition temperature, availability, and the like.

The polymer chain (B1) preferably contains a (meth)acrylate unit in which a refractive index of a homopolymer is 1.540 or more. In this case, the refractive index difference between the polycarbonate resin (A) and the polymer chain (B 1) can be easily designed to be small, and the transparency of the polycarbonate resin composition is good. Examples of the (meth)acrylate unit in which the refractive index of a homopolymer is 1.540 or more include cycloalkyl (meth)acrylates and (meth)acrylates containing an aryl group. Examples of the cycloalkyl (meth)acrylate in which the refractive index of a homopolymer is 1.540 or more include adamantyl (meth)acrylate. Examples of the (meth)acrylate containing an aryl group in which the refractive index of a homopolymer is 1.540 or more include phenyl (meth)acrylate, benzyl (meth)acrylate, and 2-phenoxyethyl (meth)acrylate. As a result of intensive studies by the present inventors, it is found that among the monomer units, the phenyl methacrylate unit is not only effective as a component having high refractive index for refractive index adjustment, but also contributes to improvement of compatibility with the polycarbonate resin (A) and improves the heat resistance. Therefore, it is particularly preferred to contain a phenyl methacrylate unit.

### [Polymer Chain (B2)]

The polymer chain (B2) is required to have a glass transition temperature (Tg) of lower than 0°C. The polymer chain (B2) serves as a flexible rubber component when the polymer (B) is mixed with the polycarbonate resin (A) and has a role of improving the impact resistance. Therefore, it is important that the polymer chain (B2) is incompatible with the polycarbonate resin (A) and has a low glass transition temperature. When the glass transition temperature of the polymer chain (B2) is lower than 0°C, the resin composition containing the polymer (B) has good impact resistance. From the same viewpoint, the glass transition temperature of the polymer chain (B2) is preferably -5°C or lower, more preferably -10°C or lower, and particularly preferably -20°C or lower.

In the present invention, a refractive index difference between the polycarbonate resin (A) and the polymer chain (B2) is determined as a nD20 value difference, and the refractive index difference is less than 0.026, and preferably less than 0.020. When the refractive index difference between the polycarbonate resin (A) and the polymer chain (B2) is less than 0.026, the resin composition and the molded article therefrom have good transparency. The closer the refractive index between the polycarbonate resin (A) and the polymer chain (B2), the better the transparency of the resin composition and the molded article therefrom, so that the refractive index difference is more preferably less than 0.010, even more preferably less than 0.008, and particularly preferably less than 0.004.

When the difference between the refractive index of the polymer chain (B2) and the refractive index of the polycarbonate resin (A) is less than 0.026, not only the transparency of the resin composition and the molded article therefrom at room temperature (23°C) is good, but also the transparency can be maintained even when the molded article is heated. The reason for this is not necessarily clear, but the inventors presume as follows.

That is, while a dispersion size of the polymer (B) in the resin composition is important for good transparency of the resin composition, the polymer (B) and the polymer chain (B2) can be dispersed in a small size with respect to the polycarbonate resin (A) due to the compatibility improvement effect of the polymer chain (B1) contained in the polymer (B). The fact that the transparency can be maintained even when the molded article is heated means that dispersion sizes of the polymer (B) and the polymer chain (B2), which serve as a light scattering source, are sufficiently smaller than a wavelength of light when the sizes are viewed from a light traveling direction. Specifically, a wavelength of visible light in vacuum and air is about 380 nm to about 780 nm, and a wavelength of visible light in a resin having a refractive index of about 1.5 is 250 nm to 520 nm. Here, when the dispersion size is about 125 nm or less, which is half the wavelength, the polymer (B) does not become a light scattering source. That is, it is considered that an average value of the dispersion size of the polymer (B) is about 125 nm or less when viewed in a film thickness direction (a direction perpendicular to the in-plane) of a molded plate, which is the light traveling direction.

On the other hand, a relationship between the refractive index of the polycarbonate resin (A) and the refractive index of the polymer (B) is also important for good transparency of the resin composition. As described above, the compatibility between the polymer chain (B1) and the polycarbonate resin (A) is high, and the polymer chain (B1) and the polycarbonate resin (A) are partially integrated, while the polymer chain (B2) has a Tg of lower than 0°C and is incompatible with the polycarbonate resin (A). Therefore, it is considered more important for the transparency of the resin composition that the refractive index difference between the polymer chain (B2) and the polycarbonate resin (A) is small. On the other hand, the effect of the refractive index difference between the polymer chain (B 1) and the polycarbonate resin (A) on the transparency of the resin composition is considered to be less than that of the polymer chain (B2).

For this reason, where the polymer (B) in the present invention contains the polymer chain (B 1) and the polymer chain (B2), when the refractive index difference between the polymer chain (B2) and the polycarbonate resin (A) is less than 0.026 as described above, the transparency in a wide temperature range can be maintained, and the refractive index difference between the polymer chain (B 1) and the polycarbonate resin (A) is not particularly limited. That is, when the polymer chain (B1) is compared with the polymer chain (B2), the polymer chain (B1) has a wider allowable range of the refractive index difference.

From the viewpoint of obtaining a resin composition excellent in impact resistance and transparency at a higher level, it is preferred that the refractive index difference between the polymer chain (B2) and the polycarbonate resin (A) is small, and the refractive index difference between the polymer chain (B 1) and the polycarbonate resin (A) is small. Therefore, it is preferred that the refractive index difference (nD20) between the polycarbonate resin (A) and the polymer chain (B2) is less than 0.026, and the refractive index difference (nD20) between the polycarbonate resin (A) and the polymer chain (B1) is less than 0.030. From the same viewpoint, the refractive index difference (nD20) between the polycarbonate resin (A) and the polymer chain (B2) is less than 0.010, and the refractive index difference (nD20) between the polycarbonate resin (A) and the polymer chain (B 1) is less than 0.015.

The polymer chain (B2) preferably contains an alkyl acrylate unit in which a glass transition temperature of a homopolymer is lower than 0°C. In this case, the impact resistance of the polycarbonate resin composition becomes good. Suitable examples of the alkyl acrylate unit in which the glass transition temperature of a homopolymer is lower than 0°C include 2-ethylhexyl acrylate, 4-hydroxybutyl acrylate, n-butyl acrylate, n-propyl acrylate, ethyl acrylate, and 2-hydroxyethyl acrylate. Alternatively, methyl acrylate, ethyl acrylate, and n-butyl acrylate are preferred since the compatibility between the polymer chain (B 1) and the polymer chain (B2) becomes good and the transparency and impact resistance of the resin composition and the molded article therefrom become good.

From the viewpoint that the refractive index of the polymer chain (B2) can be more easily adjusted to the refractive index of the polycarbonate resin (A), the polymer chain (B2) preferably contains a radically polymerizable monomer unit containing an aromatic ring, and more preferably contains an aromatic vinyl unit. The aromatic vinyl unit has a role as a high refractive component and can further improve the transparency of the polycarbonate resin composition.

Examples of the aromatic vinyl include styrene, α-methylstyrene, o-methylstyrene, p-methylstyrene, o-ethylstyrene, p-ethylstyrene, p-t-butylstyrene, vinylethylbenzene, vinyltoluene, vinylxylene, vinylnaphthalene, diphenylethylene, and divinylbenzene. Among them, styrene is preferred from the viewpoint of practical physical properties and productivity. These can be used alone or in combination of two or more kinds thereof.

### [Method for Producing Polymer (B)]

Examples of a method for producing the polymer (B) include a method of obtaining a block copolymer by a controlled polymerization method and a method of obtaining a block-graft copolymer by copolymerizing a macromonomer and a comonomer. Here, the macromonomer is a polymer having a polymerizable functional group at one end, and is also called macromer. A copolymer of a macromonomer and a comonomer is called a macromonomer copolymer.

Examples of a method for synthesizing a block copolymer by a controlled polymerization method include an atom transfer radical polymerization (ATRP) method, a reversible addition fragmentation chain transfer (RAFT) polymerization method, and an organometallic-mediated radical polymerization (CMRP) method. In the method of obtaining a block copolymer by a controlled polymerization method, there are problems such as limitation on the types of applicable monomers, coloring due to the residue of a catalyst to be used, odor, and deterioration in durability. On the other hand, a macromonomer copolymer can efficiently bond two or more kinds of polymer chains, and is suitably used as the polymer (B) according to the present invention.

### [Macromonomer Copolymer]

In the case of using the macromonomer copolymer as the polymer (B), two kinds of methods are considered: a method in which the polymer chain (B 1) is a macromonomer-derived polymer chain, and a method in which the polymer chain (B2) is a macromonomer-derived polymer chain. Both the macromonomer copolymers can be used as the polymer (B), but a method in which the polymer chain (B1) is derived from a macromonomer is preferred since a plurality of polymer chains (B 1), which are components compatible with the polycarbonate resin (A), can be introduced into one molecule. At this time, the macromonomer as a raw material for the polymer chain (B1) is referred to as a macromonomer (b1), and the comonomer copolymerizable with the macromonomer (b 1) is referred to as a comonomer (b2). That is, the macromonomer copolymer at this time contains a unit derived from the macromonomer (b1) and a unit derived from the comonomer (b2), the macromonomer (b1) is the polymer chain (B1), and the polymer of the comonomer (b2) is the polymer chain (B2).

The macromonomer copolymer preferably contains (meth)acrylate as a monomer unit. The use of (meth)acrylate as a monomer facilitates adjustment of the refractive index and the glass transition temperature, thereby facilitating the design of the polymer (B). Further, the polymer (B) excellent in performance such as transparency and weather resistance can be obtained.

The macromonomer copolymer includes at least one selected from a block copolymer containing a unit derived from the macromonomer (b1) and a unit derived from the comonomer (b2), and a graft copolymer containing a unit derived from the macromonomer (b1) in a side chain.

Further, the macromonomer copolymer may include at least one selected from a polymer only containing a unit derived from the macromonomer (b1), a polymer composed only of the comonomer (b2), the unreacted macromonomer (b1), and the unreacted comonomer (b2).

A mass average molecular weight (Mw) of the macromonomer copolymer is preferably 20,000 or more, more preferably 30,000 or more, even more preferably 100,000 or more, and particularly preferably 300,000 or more, from the viewpoint of the mechanical properties of the resin composition containing the macromonomer copolymer and the molded article therefrom. On the other hand, the mass average molecular weight (Mw) of the macromonomer copolymer is preferably 10,000,000 or less, more preferably 9,000,000 or less, even more preferably 8,000,000 or less, and particularly preferably 7,000,000 or less, from the viewpoint of the optical performance and the fluidity during melt molding of the resin composition containing the macromonomer copolymer and the molded article therefrom.

A number average molecular weight (Mn) of the macromonomer copolymer is preferably 10,000 or more, more preferably 20,000 or more, even more preferably 40,000 or more, and particularly preferably 60,000 or more, from the viewpoint of the mechanical properties of the resin composition containing the macromonomer copolymer and the molded article therefrom. On the other hand, the number average molecular weight (Mn) of the macromonomer copolymer is preferably 5,000,000 or less, more preferably 1,000,000 or less, even more preferably 500,000 or less, and particularly preferably 200,000 or less, from the viewpoint of the optical performance and the fluidity during melt molding of the resin composition containing the macromonomer copolymer and the molded article therefrom.

A melt viscosity of the macromonomer copolymer at 240°C and a shear rate of 1000/s is preferably 50 Pa s or more, more preferably 75 Pa·s or more, and particularly preferably 100 Pa·s or more, from the viewpoint of dispersibility in the resin composition. On the other hand, the melt viscosity of the macromonomer copolymer at 240°C and a shear rate of 1000/s is preferably 300 Pa s or less, more preferably 275 Pa s or less, and particularly preferably 250 Pa·s or less, from the viewpoint of decreasing the melt viscosity of the resin composition.

### [Macromonomer (b1)]

The macromonomer (b1) according to the present invention has a group containing a radically polymerizable unsaturated double bond at one end of a poly(meth)acrylate segment. As the macromonomer (b1), for example, a compound of the following formula (2) can be used.

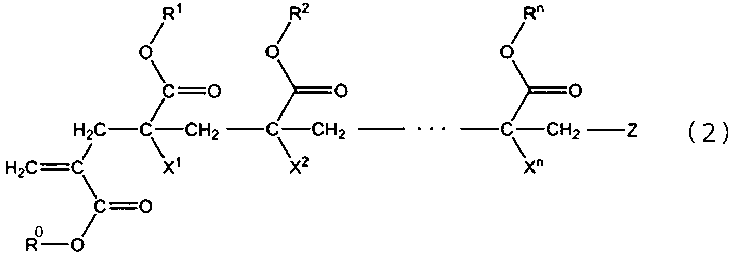

In formula (2), R⁰ to Rⁿ are each independently a hydrogen atom, an alkyl group, a cycloalkyl group, an aryl group, or a heterocyclic group. X' to Xⁿ are each independently a hydrogen atom or a methyl group. Z is a terminal group. n is a natural number of 2 to 10,000.

### [R⁰ to Rⁿ]

In formula (2), R⁰ to Rⁿ are each independently a hydrogen atom, an alkyl group, a cycloalkyl group, an aryl group, or a heterocyclic group. The alkyl group, the cycloalkyl group, the aryl group or the heterocyclic group may have a substituent.

Examples of the alkyl group of R⁰ to Rⁿ include a branched or linear alkyl group having 1 to 20 carbon atoms. Specific examples thereof include a methyl group, an ethyl group, an n-propyl group, an i-propyl group, an n-butyl group, an i-butyl group, a t-butyl group, a pentyl group, a hexyl group, a heptyl group, an octyl group, a nonyl group, a decyl group, an undecyl group, a dodecyl group, a tridecyl group, a tetradecyl group, a pentadecyl group, a hexadecyl group, a heptadecyl group, an octadecyl group, a nonadecyl group, and an icosyl group. Among them, from the viewpoint of availability, a methyl group, an ethyl group, an n-propyl group, an i-propyl group, an n-butyl group, a t-butyl group, a pentyl group, a hexyl group, a heptyl group, and an octyl group are preferred, a methyl group, an ethyl group, an n-propyl group, an i-propyl group, an n-butyl group, and a t-butyl group are more preferred, and a methyl group is particularly preferred.

Examples of the cycloalkyl group of R⁰ to Rⁿ include a cycloalkyl group having 3 to 20 carbon atoms. Specific examples thereof include a cyclopropyl group, a cyclobutyl group, a cyclopentyl group, a cyclohexyl group, a cycloheptyl group, a cyclooctyl group, a t-butylcyclohexyl group, an isobornyl group, an adamantyl group, etc. In terms of availability, a cyclopropyl group, a cyclobutyl group, and an adamantyl group are preferred.

Examples of the aryl group of R⁰ to Rⁿ include an aryl group having 6 to 18 carbon atoms. Specific examples thereof include a phenyl group, a benzyl group, a naphthyl group, etc.

Examples of the heterocyclic group of R⁰ to Rⁿ include a heterocyclic group having 5 to 18 carbon atoms. Specific examples thereof include a γ-lactone group, an ε-caprolactone group, a morpholine group, etc. Examples of a heteroatom contained in a heterocyclic ring include an oxygen atom, a nitrogen atom, a sulfur atom, etc.

Examples of the substituent of R⁰ to Rⁿ each independently include a group or an atom selected from the group consisting of an alkyl group, an aryl group, a carboxy group, an alkoxy carbonyl group (-COOR'), a carbamoyl group (-CONR'R"), a cyano group, a hydroxy group, an amino group, an amide group (-NR'R"), a halogen atom, an allyl group, an epoxy group, an alkoxy group (-OR'), and a hydrophilic or ionic group. Examples of R' or R" each independently include a group same as R (excluding the heterocyclic group).

Examples of the alkoxy carbonyl group as the substituent of R⁰ to Rⁿ include a methoxy carbonyl group.

Examples of the carbamoyl group as the substituent of R⁰ to Rⁿ include an N-methylcarbamoyl group and an N,N-dimethylcarbamoyl group.

Examples of the amide group as the substituent of R⁰ to Rⁿ include a dimethylamide group.

Examples of the halogen atom as the substituent of R⁰ to Rⁿ include a fluorine atom, a chlorine atom, a bromine atom, and a iodine atom.

Examples of the alkoxy group as the substituent of R⁰ to Rⁿ include an alkoxy group having 1 to 12 carbon atoms. Specific examples thereof include a methoxy group.

Examples of the hydrophilic or ionic group as the substituent of R⁰ to Rⁿ include an alkali salt of a carboxy group, an alkali salt of a sulfoxyl group, a poly(alkylene oxide) group such as a polyethylene oxide group, a polypropylene oxide group, etc. and a cationic substituent such as a quaternary ammonium salt group.

R⁰ to Rⁿ are preferably at least one selected from an alkyl group, a cycloalkyl group, an aryl group, and a hydroxy group.

The alkyl group is preferably a methyl group, an ethyl group, an n-propyl group, or an i-propyl group, and more preferably a methyl group from the viewpoint of availability.

The aryl group is preferably a benzyl group or a phenyl group since it contributes to improvement of compatibility of the polymer chain (B 1) with the polycarbonate resin (A) and can also be used as a high refractive index component for adjusting the refractive index of the polymer (B 1), and is more preferably a phenyl group since the glass transition temperature of the macromonomer becomes higher.

Since the hydroxy group contributes to improvement of compatibility of the polymer chain (B 1) with the polycarbonate resin (A) and can also be used as a high refractive index component for adjusting the refractive index of the polymer (B1), the hydroxy group is preferably used as necessary.

### [X¹ to Xⁿ]

In formula (2), X¹ to Xⁿ each are a hydrogen atom or a methyl group, and preferably a methyl group. Further, from the viewpoint of ease of synthesis of the macromonomer (b1), it is preferred that half or more of X' to Xⁿ are a methyl group.

### [Z]

In formula (2), Z is a terminal group of the macromonomer (b1). Examples of the terminal group of the macromonomer (b1) include a hydrogen atom and a group derived from a radical polymerization initiator, similar to a terminal group of a polymer obtained by known radical polymerization.

A number average molecular weight (Mn) of the macromonomer (b1) is preferably 1,000 or more and 1,000,000 or less, more preferably 5,000 or more and 100,000 or less, and particularly preferably 10,000 or more and 50,000 or less, in terms of mechanical properties, and phase separation size and phase separation structure control of the resin composition containing a macromonomer copolymer as the polymer (B) and a molded article therefrom. The lower limit value of the Mn of the macromonomer (b1) is more preferably 1,000 or more, and even more preferably 5,000 or more. The upper limit value of the Mn of the macromonomer (b1) is preferably 1,000,000 or less, and more preferably 300,000 or less. When the Mn is equal to or more than the lower limit value, a weight ratio of the polymer chain (B 1) derived from the macromonomer (b1) contained in the macromonomer copolymer can be increased, the phase separation size and phase separation structure control can be facilitated, and the mechanical properties and optical performance of the resin composition and the molded article therefrom becomes good. When the Mn is equal to or less than the upper limit value, a weight ratio of the segment derived from the comonomer (b2) contained in the macromonomer copolymer can be increased, the phase separation size and phase separation structure control can be facilitated, and the mechanical properties and optical performance of the resin composition and the molded article therefrom becomes good.

From the same viewpoint, a mass average molecular weight (Mw) of the macromonomer (b1) is preferably 2,000 or more and 2,000,000 or less, more preferably 10,000 or more and 200,000 or less, and particularly preferably 20,000 or more and 100,000 or less.

The number average molecular weight (Mn) and mass average molecular weight (Mw) of the macromonomer (b 1) are values calculated based on a calibration curve of polymethyl methacrylate (PMMA) using gel permeation chromatography (GPC).

### [Raw Material Monomer for Macromonomer (b1)]

Examples of a raw material monomer for obtaining the macromonomer (b1) include: (meth)acrylates such as methyl (meth)acrylate, ethyl (meth)acrylate, n-propyl (meth)acrylate, i-propyl (meth)acrylate, n-butyl (meth)acrylate, i-butyl (meth)acrylate, t-butyl (meth)acrylate, 2-ethylhexyl (meth)acrylate, n-lauryl (meth)acrylate, n-stearyl (meth)acrylate, cyclohexyl (meth)acrylate, phenyl (meth)acrylate, benzyl (meth)acrylate, isobornyl (meth)acrylate, 2-methoxyethyl (meth)acrylate, 2-ethoxyethyl (meth)acrylate, phenoxy ethyl (meth)acrylate etc.; (meth)acrylates containing a hydroxyl group(s) such as 2-hydroxyethyl (meth)acrylate, 2-hydroxypropyl (meth)acrylate, 4-hydroxybutyl (meth)acrylate, glycerol (meth)acrylate etc.; vinyl-based monomers containing a carboxy group(s) such as (meth)acrylic acid, 2-(meth)acryloyloxyethylhexahydrophthalic acid, 2-(meth)acryloyloxypropylhexahydrophthalic acid, 2-(meth)acryloyloxyethyl phthalate, 2-(meth)acryloyloxypropyl phthalic acid, 2-(meth)acryloyloxyethyl maleate, 2-(meth)acryloyloxypropyl maleate, 2-(meth)acryloyloxyethyl succinic acid, 2-(meth)acryloyloxypropylsuccinic acid, crotonic acid, fumaric acid, maleic acid, itaconic acid, monomethyl maleate, monomethyl itaconate, etc.; vinyl monomers containing an acid anhydride group(s) such as maleic anhydride, itaconic anhydride etc.; vinyl monomers containing an epoxy group(s) such as glycidyl (meth)acrylate, glycidyl α-ethyl acrylate, 3,4-epoxybutyl (meth)acrylate, etc.; (meth)acrylate-based vinyl-based monomers containing an amino group(s) such as dimethylaminoethyl (meth)acrylate, diethylaminoethyl (meth)acrylate etc.; vinyl-based monomers containing an amide group(s) such as (meth)acrylamide, N-t-butyl (meth)acrylamide, N-methylol (meth)acrylamide, N-methoxymethyl (meth)acrylamide, N-butoxymethyl (meth)acrylamide, diacetone acrylamide, maleic acid amide, maleimide, etc.; vinyl-based monomers such as styrene, α-methylstyrene, vinyltoluene, (meth)acrylonitrile, vinyl chloride, vinyl acetate, vinyl propionate, etc.; and polyfunctional vinyl-based monomers such as divinylbenzene, ethylene glycol di(meth)acrylate, 1,3-butylene glycol di(meth)acrylate, 1,6-hexanediol di(meth)acrylate, triethylene glycol di(meth)acrylate, tetraethylene glycol di(meth)acrylate, tripropylene glycol di(meth)acrylate, trimethylolpropane tri(meth)acrylate, allyl (meth)acrylate, N,N'-methylenebis(meth)acrylamide, etc. One or more kinds of these can be appropriately selected and used.

Among them, methacrylate is preferred in terms of availability of monomers.

The methacrylate is preferably methyl methacrylate, n-butyl methacrylate, lauryl methacrylate, dodecyl methacrylate, stearyl methacrylate, 2-ethylhexyl methacrylate, phenyl methacrylate, benzyl methacrylate, isobornyl methacrylate, glycidyl methacrylate, 2-hydroxy ethyl methacrylate, or 4-hydroxy butyl methacrylate, and more preferably methyl methacrylate, phenyl methacrylate, benzyl methacrylate, 2-hydroxy ethyl methacrylate, or 4-hydroxy butyl methacrylate.

It is preferred to use methyl methacrylate in terms of the glass transition temperature of the macromonomer (b1), availability, and the like. A ratio of the methyl methacrylate based on 100 mass% of the total macromonomer (b1) is preferably 50 mass% or more, more preferably 60 mass% or more, and particularly preferably 70 mass% or more.

It is preferred to use a methacrylate containing an aryl group such as phenyl methacrylate, benzyl methacrylate, etc. since it contributes to improvement of compatibility of the macromonomer (b1) with the polycarbonate resin (A) and can also be used as a high refractive index component for adjusting the refractive index of the macromonomer (b1), and phenyl methacrylate is more preferred since the glass transition temperature of the macromonomer (b1) becomes high. A ratio of the methacrylate containing an aryl group based on 100 mass% of the total macromonomer (b1) is preferably 2 mass% or more, more preferably 5 mass% or more, and particularly preferably 10 mass% or more. When the ratio of the methacrylate containing an aryl group based on the macromonomer (b 1) is 2 mass% or more, the compatibility of the macromonomer (b1) with the polycarbonate resin (A) can be improved, and the refractive index can be easily adjusted. The ratio of the methacrylate containing an aryl group based on 100 mass% of the total macromonomer (b1) is preferably 70 mass% or less, more preferably 50 mass% or less, and particularly preferably 30 mass% or less. When the ratio of the methacrylate containing an aryl group based on the macromonomer (b1) is 70 mass% or less, yellowing of the resin composition and the molded article therefrom can be prevented.

It is preferred to use a methacrylate containing a hydroxy group such as 2-hydroxyethyl methacrylate and 4-hydroxybutyl methacrylate as necessary since it contributes to improvement of compatibility of the macromonomer (b1) with the polycarbonate resin (A) and can also be used as a high refractive index component for adjusting the refractive index of the macromonomer (b1). A ratio of the methacrylate containing a hydroxy group based on 100 mass% of the total macromonomer (b1) is preferably 1 mass% or more, more preferably 2 mass% or more, and particularly preferably 5 mass% or more. When the ratio of the methacrylate containing a hydroxy group based on the macromonomer (b1) is 1 mass% or more, the compatibility of the macromonomer (b1) with the polycarbonate resin (A) can be improved, and the refractive index can be easily adjusted. The ratio of the methacrylate containing a hydroxy group based on 100 mass% of the total macromonomer (b1) is preferably 30 mass% or less, more preferably 20 mass% or less, and particularly preferably 15 mass% or less. When the ratio of the methacrylate containing a hydroxy group based on the macromonomer (b1) is 30 mass% or less, moisture absorption of the resin composition and the molded article therefrom can be prevented.

As the raw material monomer for obtaining the macromonomer (b1), a monomer composition containing the above methacrylate or acrylate is preferred from the point of thermal decomposition resistance of the macromonomer copolymer using the macromonomer (b1) as a raw material, the resin composition containing the same, and the molded article therefrom.

Examples of the acrylate include methyl acrylate, ethyl acrylate, n-propyl acrylate, i-propyl acrylate, n-butyl acrylate, i-butyl acrylate, and t-butyl acrylate. Among them, methyl acrylate is preferred in terms of availability.

The content of the methacrylate in the monomer composition for obtaining the macromonomer (b1) is preferably 80 mass% or more and 100 mass% or less from the point of heat resistance of the macromonomer copolymer as a product, the resin composition containing the macromonomer copolymer, and the molded article therefrom. The content of the methacrylate is more preferably 82 mass% or more and 99 mass% or less, and even more preferably 84 mass% more and 98 mass% or less. The content of the acrylate in the monomer composition for obtaining the macromonomer (b1) is preferably 0 mass% or more and 20 mass% or less, more preferably 1 mass% or more and 18 mass% or less, and even more preferably 2 mass% or more and 16 mass% or less.

### [Method for Producing Macromonomer (b1)]

The macromonomer (b 1) can be produced by a known method. Examples of a method for producing the macromonomer include a production method using a cobalt chain transfer agent (US Patent No. 4,680,352 specification), a method using an α-substituted unsaturated compound such as α-bromomethylstyrene as a chain transfer agent (WO 88/04304), a method of chemically bonding polymerizable groups (JP-A-S60-133007, US Patent No. 5,147,952 specification), and a method by thermal decomposition (JP-A-H11-240854).

Among them, as the method for producing the macromonomer (b1), the production method using a cobalt chain transfer agent is preferred since the number of production steps is small and a catalyst with a high chain transfer constant is used.

Examples of the method for producing the macromonomer (b 1) using a cobalt chain transfer agent include bulk polymerization, solution polymerization, and aqueous dispersion polymerization such as suspension polymerization and emulsion polymerization. Among them, the aqueous dispersion polymerization is preferred from the point of simplification of the recovery step of the macromonomer (b1). When the method for producing the macromonomer (b 1) is solution polymerization, the macromonomer copolymer can be obtained by a polymerization reaction by additionally adding the comonomer (b2) and a thermal polymerization initiator without recovering the macromonomer (b1).

As the cobalt chain transfer agent used in the present invention, a cobalt chain transfer agent of formula (8) can be used, and for example, those described in JP-A-3587530, JP-A-H06-23209, JP-A-H07-35411, US Patent No. 45,269,945 specification, US Patent No. 4,694,054 specification, US Patent No. 4,834,326 specification, US Patent No. 4,886,861 specification, US Patent No. 5,324,879 specification, WO 95/17435, and JP-H09-510499 can be used.

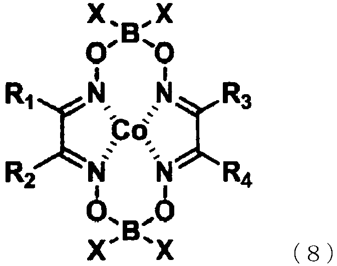

[In the formula, R₁ to R₄ are each independently an alkyl group, a cycloalkyl group, and an aryl group; Xs are each independently an F atom, a Cl atom, a Br atom, an OH group, an alkoxy group, an aryloxy group, an alkyl group, and an aryl group.]

Specific examples of the cobalt chain transfer agent include cobalt(II) bis(borondifluorodimethyldioxyiminocyclohexane), cobalt(II) bis(borondifluorodimethylglyoximate), cobalt(II) bis(borondifluorodiphenylglyoximate), a cobalt(II) complex of a vicinaliminohydroxyimino compound, a cobalt(II) complex of tetraazatetraalkylcyclotetradecatetraene, a cobalt(II) complex of N,N'-bis(salicylidene)ethylenediamino, a cobalt(II) complex of dialkyldiazadioxodialkyldodecadiene, and a cobalt (II) porphyrin complex. Among them, cobalt(II) bis(borondifluorodiphenylglyoximate) (R₁ to R₄: phenyl group, X: F atom), which stably exists in an aqueous medium and has a high chain transfer effect, is preferred. One or more kinds of these can be appropriately selected and used.

An amount of the cobalt chain transfer agent to be used is preferably 5 ppm to 350 ppm with respect to 100 parts of the monomer for obtaining the macromonomer (b1). When the amount of the cobalt chain transfer agent to be used is less than 5 ppm, the molecular weight tends to decrease insufficiently, and when the amount of the cobalt chain transfer agent to be used exceeds 350 ppm, the obtained macromonomer (b1) tends to be colored.

Examples of a solvent used for obtaining the macromonomer (b 1) by solution polymerization include: hydrocarbons such as toluene; ethers such as diethyl ether and tetrahydrofuran; halogenated hydrocarbons such as dichloromethane and chloroform; ketones such as acetone; alcohols such as methanol; nitriles such as acetonitrile; vinyl esters such as ethyl acetate; carbonates such as ethylene carbonate; and supercritical carbon dioxide. These can be used alone or in combination of two or more kinds thereof.

### [Comonomer (b2)]

The comonomer (b2) is not particularly limited as long as it is copolymerizable with the macromonomer (b1), and various polymerizable monomers can be used as necessary. The copolymerization reaction mechanism of the macromonomer (b1) and the comonomer (b2) is described in detail in a report by Yamada et al. (Prog. Polym. Sci. 31 (2006) p 835-877). As the comonomer (b2), a monomer having a double bond and is radical polymerizable can be used alone or in combination of two or more kinds thereof.

Specific examples thereof include those similar to the monomer for obtaining the macromonomer (b1). The comonomer (b2) is preferably a (meth)acrylate or an aromatic vinyl because of good copolymerizability with the macromonomer (b1). Preferred are methyl (meth)acrylate, ethyl (meth)acrylate, n-propyl (meth)acrylate, n-butyl (meth)acrylate, lauryl (meth)acrylate, stearyl (meth)acrylate, 2-ethylhexyl (meth)acrylate, glycidyl (meth)acrylate, 2-hydroxyethyl (meth)acrylate, 4-hydroxybutyl (meth)acrylate, phenyl (meth)acrylate, benzyl (meth)acrylate, styrene, α-methylstyrene, o-methylstyrene, p-methylstyrene, o-ethylstyrene, p-ethylstyrene, p-t-butylstyrene, vinylethylbenzene, vinyltoluene, vinylxylene, vinylnaphthalene, diphenylethylene, and divinylbenzene. The comonomer (b2) may be used alone or in combination of two or more kinds thereof.

The polymer of the comonomer (b2) is the polymer chain (B2). The glass transition temperature (Tg) of the polymer chain (B2) is preferably as low as described above. That is, the comonomer (b2) preferably includes a monomer in which a glass transition temperature of a homopolymer is low, and more preferably to use an acrylate in which a glass transition temperature of homopolymer is low. In the present invention, as the glass transition temperature (Tg) of a homopolymer for the comonomer (b2), numerical values described in known documents such as "POLYMER HANDBOOK", FOURTH EDITION, JOHN WILEY & SONS, INC., 2003 can be used. Alternatively, dynamic mechanical analysis of the obtained molded article can be carried out and a value of tan δ can be used as the Tg.

Examples of the acrylate in which the glass transition temperature of a homopolymer is low include: acrylates such as methyl acrylate, ethyl acrylate, n-propyl acrylate, i-propyl acrylate, n-butyl acrylate, i-butyl acrylate, t-butyl acrylate, 2-ethylhexyl acrylate, n-lauryl acrylate, n-stearyl acrylate, cyclohexyl acrylate, phenyl acrylate, benzyl acrylate, isobornyl acrylate, 2-methoxyethyl acrylate, 2-ethoxyethyl acrylate, phenoxyethyl acrylate, etc.; acrylates containing a hydroxy group(s) such as 2-hydroxyethyl acrylate, 2-hydroxypropyl acrylate, 4-hydroxybutyl acrylate, glycerol acrylate, etc.; acrylates containing a carboxy group(s) such as 2-acryloyloxyethyl hexahydrophthalate, 2-acryloyloxypropyl hexahydrophthalate, 2-acryloyloxyethyl phthalate, 2-acryloyloxypropyl phthalate, 2-acryloyloxyethyl maleate, 2-acryloyloxypropyl maleate, 2-acryloyloxyethyl succinate, 2-acryloyloxypropyl succinate etc.; acrylates containing an epoxy group(s) such as glycidyl acrylate, glycidyl α-ethyl acrylate, 3,4-epoxybutyl acrylate, etc.; acrylates containing an amino group(s) such as dimethylaminoethyl acrylate, diethylaminoethyl acrylate, etc.; and polyfunctional acrylates such as ethylene glycol diacrylate, 1,3-butylene glycol diacrylate, 1,6-hexanediol diacrylate, triethylene glycol diacrylate, tetraethylene glycol diacrylate, tripropylene glycol diacrylate, trimethylolpropane triacrylate, allyl acrylate, N,N'-methylenebisacrylamide, etc. These can be used alone or in combination of two or more kinds thereof.

Among the above monomers, 2-ethylhexyl acrylate, 4-hydroxybutyl acrylate, n-butyl acrylate, n-propyl acrylate, ethyl acrylate, and 2-hydroxyethyl acrylate are preferred since the homopolymer Tg is lower than 0°C. Alternatively, the comonomer (b2) more preferably includes an alkyl acrylate unit in which the glass transition temperature (Tg) of a homopolymer is lower than 0°C since the compatibility between the macromonomer (b1) and the comonomer (b2) can be improved, and the transparency and impact resistance of the resin composition and the molded article therefrom is good. As the alkyl acrylate in which the glass transition temperature (Tg) of a homopolymer is lower than 0°C, methyl acrylate, ethyl acrylate, and n-butyl acrylate are particularly preferred.

A ratio of the alkyl acrylate unit in which the homopolymer Tg is lower than 0°C based on 100 mass% of the total comonomer (b2) is preferably 50 mass% or more, more preferably 60 mass% or more, and particularly preferably 70 mass% or more. In this case, the transparency and impact resistance of the resin composition using the macromonomer copolymer and the molded article therefrom becomes good.

The comonomer (b2) preferably includes an aromatic vinyl as a high refractive index component for the purpose of matching the refractive index of homopolymer of the comonomer (b2) with that of the polycarbonate resin (A).

Examples of the aromatic vinyl include styrene, α-methylstyrene, o-methylstyrene, p-methylstyrene, o-ethylstyrene, p-ethylstyrene, p-t-butylstyrene, vinylethylbenzene, vinyltoluene, vinylxylene, vinylnaphthalene, diphenylethylene, and divinylbenzene. Among them, styrene is preferred from the viewpoint of practical properties and productivity. These can be used alone or in combination of two or more kinds thereof.

When the acrylate in which the glass transition temperature of a homopolymer is low and the aromatic vinyl are used as the comonomer (b2), a ratio of the aromatic vinyl based on 100 mass% of the total comonomer (b2) is preferably 10 mass% or more, more preferably 15 mass% or more, even more preferably 20 mass% or more, and particularly preferably 26 mass% or more. When the ratio of the aromatic vinyl is 10 mass% or more, the transparency of the resin composition and the molded article therefrom is good. When the acrylate in which the glass transition temperature of a homopolymer is low and the aromatic vinyl are used as the comonomer (b2), the ratio of the aromatic vinyl based on 100 mass% of the total comonomer (b2) is preferably 50 mass% or less, more preferably 45 mass% or less, and particularly preferably 40 mass% or less. When the ratio of the aromatic vinyl is 50 mass% or less, the weather resistance is good.

The comonomer (b2) preferably includes an aromatic acrylate.

Examples of the aromatic acrylate include benzyl acrylate and phenyl acrylate. Among them, benzyl acrylate is preferred from the viewpoint of achieving both a high refractive index and a low glass transition temperature.

### [Method for Producing Macromonomer Copolymer]

A method for producing the macromonomer copolymer is not particularly limited, and various methods such as solution polymerization, suspension polymerization, emulsion polymerization, bulk polymerization, etc. can be used. Aqueous polymerization such as suspension polymerization or emulsion polymerization is preferred since the heat generated by polymerization can be easily controlled and the productivity is excellent. Suspension polymerization is more preferred since the polymerization and recovery operations are simpler.

Examples of a method for producing the macromonomer copolymer by suspension polymerization include the following [I] or [II].
[I] The macromonomer (b1) is dissolved in the comonomer (b2), and a radical polymerization initiator is added thereto. The macromonomer (b1) solution is dispersed in an aqueous solution with dissolved dispersant to obtain a syrup dispersion. Then, the obtained syrup dispersion is subjected to suspension polymerization.
[II] The comonomer (b2) is added to an aqueous suspension obtained by synthesizing the macromonomer (b1) by suspension polymerization to obtain, as a syrup suspension, a comonomer (b2) dispersion with dissolved macromonomer (b1). Then, the obtained syrup suspension is subjected to suspension polymerization.

The macromonomer copolymer obtained by the production method [I] tends to have excellent optical characteristics. In the production method [II], the production process can be shortened since the step of recovering the macromonomer (b1) can be omitted.

In either method [I] or [II], it is preferred to perform heating when the macromonomer (b1) is dissolved in the comonomer (b2). A heating temperature is preferably 30°C to 90°C. When the heating temperature is 30°C or higher, the solubility of the macromonomer (b1) can be improved. When the heating temperature is 90°C or lower, volatilization of the comonomer (b2) can be prevented. The lower limit of the heating temperature is more preferably 35°C or higher. The upper limit of the heating temperature is more preferably 75°C or lower.

In the production method [I], a timing of adding the radical polymerization initiator to the comonomer (b2) wherein the macromonomer (b1) is dissolved is preferably added after the macromonomer (b1) is dissolved in the comonomer (b2).

A temperature at which the radical polymerization initiator is added is preferably from 0°C to (10-hour half-life temperature of the radical polymerization initiator +15°C). When the temperature at which the radical polymerization initiator is added is 0°C or higher, the solubility of the radical polymerization initiator in the monomer becomes good. Stable polymerization can be performed at the temperature at which the radical polymerization initiator is added is (10-hour half-life temperature of the radical polymerization initiator +15°C).

Examples of the radical polymerization initiator include an organic peroxide and an azo compound.

Specific examples of the organic peroxide include 2,4-dichlorobenzoyl peroxide, t-butyl peroxypivalate, o-methylbenzoyl peroxide, bis-3,5,5-trimethylhexanoyl peroxide, octanoyl peroxide, t-butyl peroxy-2-ethylhexanoate, t-hexylperoxy-2-ethylhexanoate, 1,1,3,3-tetramethylbutyl peroxy 2-ethylhexanoate, cyclohexanone peroxide, benzoyl peroxide, methyl ethyl ketone peroxide, dicumyl peroxide, lauroyl peroxide, diisopropylbenzene hydroperoxide, t-butyl hydroperoxide, and di-t-butyl peroxide.

Specific examples of the azo compound include 2,2'-azobisisobutyronitrile, 2,2'-azobis(2-methylbutyronitrile), 2,2'-azobis(2,4-dimethylvaleronitrile), 2,2'-azobis(2,4-dimethyl-4-methoxyvaleronitrile), and dimethyl 2,2'-azobis(isobutyrate).

In terms of availability, benzoyl peroxide, 1,1,3,3-tetramethylbutyl peroxy 2-ethylhexanoate, 2,2'-azobisisobutyronitrile, 2,2'-azobis(2-methylbutyronitrile), 2,2'-azobis(2,4-dimethylvaleronitrile), and 2,2'-azobis(2,4-dimethyl-4-methoxyvaleronitrile) are preferred.

The radical polymerization initiator can be used alone or in combination of two or more kinds thereof.

An amount of the radical polymerization initiator to be added is preferably 0.0001 part by mass or more and 10 parts by mass or less with respect to 100 parts by mass of the total amount of the macromonomer (b1) and comonomer (b2), from the viewpoint of controlling the heat generated by polymerization.

A polymerization temperature in the suspension polymerization is not particularly limited, and is generally 50°C to 120°C. In the suspension polymerization, a chain transfer agent can be used depending on the purpose. Examples of the chain transfer agent include mercaptan, α-methylstyrene dimer, and terpenoid.

### [Additive (E)]

An additive (E) can be added to the resin composition according to the present invention, if necessary. Examples of the additive (E) include: an antioxidant, an ultraviolet absorber, and various stabilizers such as a heat stabilizer; a colorant such as an inorganic pigment, an organic pigment, a dye etc.; a conductivity imparting agent such as carbon black, ferrite, etc.; an inorganic filler; a lubricant; a release agent; a plasticizer; an organic peroxide; a neutralizing agent; a crosslinking agent; and a strengthening agent.

A ratio of the additive (E) is preferably 0 mass% to 20 mass%, and more preferably 0 mass% to 10 mass%, with respect to 100 mass% of the resin composition.

### [[Physical Properties of Resin Composition]]

The physical properties of the resin composition according to the first aspect of the present invention are not particularly limited, but preferably have the following physical properties.

### •Charpy Impact Strength

The Charpy impact strength of the resin composition is preferably 3 kJ/m² or more, more preferably 5 kJ/m² or more, even more preferably 8 kJ/m² or more, and particularly preferably 10 kJ/m² or more, as compared with the Charpy impact strength of the polycarbonate resin (A) alone. The higher the value, the more excellent the impact resistance of the resin composition. The Charpy impact strength is specifically measured by a method to be described later.

### •Flexural Modulus

The flexural modulus of the resin composition is preferably 2400 MPa or more, more preferably 2500 MPa or more, even more preferably 2600 MPa or more, and particularly preferably 3000 MPa or more. When the flexural modulus is equal to or more than the lower limit, the resin composition has excellent rigidity. The upper limit of the flexural modulus is generally about 10000 MPa. The flexural modulus is specifically measured by a method to be described later.

### •Transparency

The haze of a 2 mm-thick plate-shaped molded article of the resin composition at room temperature of 23°C is preferably less than 5.0%, and more preferably less than 1.5%. The haze at 80°C is preferably less than 7.0%, and more preferably less than 2.0%. When the haze is less than the upper limit, the transparency of the resin composition is excellent. An absolute value of a difference between the haze at a room temperature of 23°C and the haze at 80°C of the 2 mm-thick plate-shaped molded article of the resin composition is preferably 7.0 or less, and more preferably 2.0 or less. When the absolute value of the haze difference is less than the upper limit, the resin composition is excellent in prevention of a change in transparency depending on the temperature. The haze is specifically measured by a method to be described later.

### •Melt Viscosity

The melt viscosity of the resin composition at 240°C and a shear rate of 1000/s is preferably 400 Pa s or less, and more preferably 375 Pa s or less. When the melt viscosity is equal to or less than the upper limit, the productivity during melt molding is excellent. The melt viscosity of the resin composition measured at 240°C and a shear rate of 1000/s is preferably less than the melt viscosity of the polycarbonate resin (A) measured under the same conditions. When the melt viscosity of the resin composition is equal to or less than the melt viscosity of the polycarbonate resin (A), the productivity during melt molding is superior to that of the polycarbonate resin (A). The melt viscosity is specifically measured by a method to be described later.

### [Method for Producing Resin Composition]

The resin composition according to the present invention can be produced, for example, by a method of mechanically melt-kneading the above components. Examples of a melt kneader that can be used here include a single-screw extruder, a twin-screw extruder, a brabender, a Banbury mixer, a kneader blender, and a roll mill. The lower limit of a kneading temperature is generally 100°C or higher, preferably 145°C or higher, and more preferably 160°C or higher. The upper limit of the kneading temperature is generally 350°C, preferably 300°C, and more preferably 250°C. For kneading, each component may be kneaded all at once, or a multi-stage divided kneading method may be used in which optional components are kneaded and then other remaining components are added and kneaded.

### [Method for Producing Molded Article]

The resin composition according to the present invention can be processed into various molded articles by a molding method such as injection molding (an insert molding method, a two-color molding method, a sandwich molding method, a gas injection molding method, etc.), an extrusion molding method, an inflation molding method, a T-die film molding method, a laminate molding method, a blow molding method, a hollow molding method, a compression molding method, and a calender molding method. The shape of the molded article is not particularly limited, and examples thereof include a sheet shape, a film shape, a plate shape, a particulate shape, a lump shape, a fiber shape, a rod shape, a porous body shape, and a foam shape. Preferred are a sheet shape, a film shape, and a plate shape. A molded film can be uniaxially or biaxially stretched. Examples of the stretching method include a roll method, a tenter method, and a tubular method. Further, a surface treatment such as a corona discharge treatment, a flame treatment, a plasma treatment, or an ozone treatment, which is generally used industrially, may be performed.

### [Use]

The use of the molded article containing the resin composition according to the present invention is not particularly limited, and examples thereof include the following use. That is, examples thereof include: a wire, a cord, a covering material for wire harnesses, an insulating sheet, a display and a touch panel of OA equipment, a membrane switch, a photo cover, a relay component, a coil bobbin, an IC socket, a fuse case, a camera pressure plate, an FDD collet, and a floppy hub in the field of electrical and electronic components; an optical disc substrate, an optical disc pickup lens, an optical lens, an LCD substrate, a PDP substrate, a television screen for projection television, a retardation film, a fog lamp lens, an illumination switch lens, a sensor switch lens, a Fresnel lens, a protective glass, a projection lens, a camera lens, a sunglass, a light guide plate, a camera strobe reflector, an LED reflector in the field of optical components; a headlamp lens, a winker lamp lens, a tail lamp lens, a resin window glass, a meter cover, an outer panel, a door handle, a rear panel, a wheel cap, a visor, a roof rail, a sunroof, an instrument panel, panels, an in-vehicle display, a control cable covering material, an airbag cover, a mudguard, a bumper, a boot, an air hose, lamp packings, gaskets, various moldings such as a window molding, a sight shield, a weather strip, a glass run channel, grommets, and a vibration control and sound insulation material in automobile components; a joint material, a handrail, a window, a table edge material, a sash, a bathtub, a window frame, a signboard, a lighting cover, a water tank, a stair wainscot, a carport, a highway noise barrier, a multi-wall sheet, a steel wire covering material, a lighting globe, a switch breaker, a protective cover for a machine tool, an industrial deep drawing vacuum molded container, and a pump housing in the field of building materials; various packings, grips, belts, a rubber foot, a roller, a protector, a suction cup, gaskets for a refrigerators, switches, a connector cover, a game machine cover, a pachinko machine, an OA housing, a notebook PC housing, an HDD head tray, a window of instruments, a transparent housing, an OA geared roller, a switch case slider, a gas cock knob, a clock frame, a clock register, an amber cap, various rolls for OA equipment, tubular molded articles such as a hose and a tube, an irregular-shaped extrusion product, a leather product, an articulator, toys such as dolls with a soft touch, general household goods such as a pen grip, a strap, a suction cup, a watch, an umbrella bone, a cosmetic case, and a toothbrush pattern, containers such as a houseware and a Tupperware, a bundling band, and various bottles such as a blow molded infusion bottle, a food bottle, a water bottle, a personal care bottle for cosmetics in the field of home appliances and light electrical appliances; and a catheters, a syringe, a syringe gasket, an drip tube, a tube, a port, a cap, a rubber stopper, a dialyzer, a blood connector, a denture, and a disposable container. In addition, the molded article can also be applied to use by foam molding.

The use of the molded article containing the resin composition according to the present invention in the field of film and sheet is not particularly limited, and examples thereof include the following use. That is, examples thereof include: a packaging for food and household goods such as a stretch film for packaging, a wrap film for business or household, a pallet stretch film, a stretch label, a shrink film, a shrink label, a sealant film, a retort film, a retort sealant film, an aroma-retaining heat seal film, an A-PET sealant, a container and a lid for frozen food, a cap seal, a thermal bonding film, a thermal adhesive film, a heat sealing film, a bag-in-box sealant film, a retort pouch, a standing pouch, a spout pouch, a laminated tube, a heavy duty bag, and a fiber packaging film; an agricultural film such as a house film and a mulch film; a medical film and sheet such as an infusion bag, high-calorie infusion and peritoneal dialysis (CAPD), a multi-chamber container such as an antibiotic kit bag, a drainage bag for peritoneal dialysis, a blood bag, an urine bag, a surgical bag, an ice pillow, an ampoule case, a PTP packaging; a construction material such as a civil engineering waterproof sheet, a waterproof material, a mat, a joint material, a floor material, a roofing, a decorative film, a skin film, and a wallpaper; an automobile component such as a leather, a ceiling material, a trunk room lining, an interior skin material, an anti-vibration sheet, and a sound insulation sheet; a light electric appliance such as a display cover, a battery case, a mouse pad, a mobile phone case, an IC card case, a floppy disk case, and a CD-ROM case; a toiletry or sanitary such as a toothbrush case, a puff case, a cosmetic case, a medicine case for eye drops, a tissue case, and a face pack; an office supply such as a stationery film and sheet, a clear file, a pen case, a notebook cover, a desk mat, a keyboard cover, a book cover, and a binder; a general household good such a furniture leather, a toy such as a beach ball, a rain gear such as an umbrella and a raincoat, a table cloth, a blister package, a bath lid, a towel case, a fancy case, a tag case, a pouch, an amulet bag, an insurance card cover, a passbook case, a passport case, and a cutlery case; a retroreflective sheet; and synthetic paper. Examples of an adhesive composition in the field of film and sheet in which an adhesive is applied to a base material to impart adhesiveness include a carrier tape, an adhesive tape, a marking film, a semiconductor or glass dicing film, a surface protective film, a steel plate and plywood protective film, an automotive protective film, a packaging and bunding adhesive tape, an office and home adhesive tape, a bonding adhesive tape, a paint masking adhesive tape, a surface protection adhesive tape, a sealing adhesive tape, an anti-corrosion and waterproof adhesive tape, an electrical insulating adhesive tape, an electronic device adhesive tape, a patch film, a medical and sanitary material adhesive tape such as a bandage base film, an identification and decorative adhesive tape, a display tape, a packaging tape, a surgical tape, and a label adhesive tape.

### [Film]

Among the various uses described above, the resin composition according to the present invention is particularly useful as a molding material of a film because of excellent transparency, color tone, mechanical properties, heat resistance, wet heat resistance, and dry heat resistance.

The film containing the resin composition according to the present invention may be a single layer film made of the resin composition according to the present invention, or a laminated film of two or more layers formed with another resin composition by coextrusion.

Such a film is useful as an original film for processing and molding into a container to be described later, or as a protective film for a display surface of an electronic device, a mobile phone, a smartphone, and the like. The excellent transparency of the film does not impair visibility of the display surface under the film, and the excellent impact resistance of the film provides excellent protection for equipment. Further, such a film can withstand long-term use in various environments because of excellent long-term wet heat resistance and long-term dry heat resistance.

A resin composition according to a second aspect of the present invention contains the polycarbonate resin (A) and the polymer (B), in which
the polycarbonate resin (A) has a structural unit derived from a dihydroxy compound of the following formula (1),
the polymer (B) is a copolymer containing the polymer chain (B1) and the polymer chain (B2),
the polymer chain (B1) has a glass transition temperature (Tg) of higher than 80°C,
the polymer chain (B2) has a glass transition temperature (Tg) of lower than 0°C, and
the polymer chain (B2) contains a radically polymerizable monomer unit containing an aromatic ring.

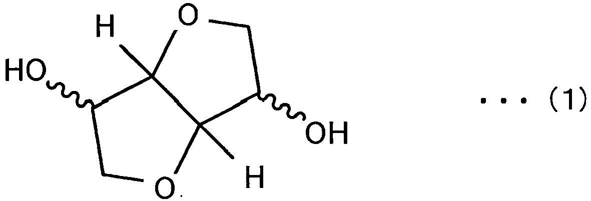

The polycarbonate resin (A) used in the resin composition according to the second aspect of the present invention is a polycarbonate resin containing the structural unit derived from the compound of formula (1), may be a homopolycarbonate resin composed only of the structural unit derived from the compound of formula (1), and may be a copolymerized polycarbonate resin containing a structural unit other than the structural unit derived from the compound of formula (1). The copolymerized polycarbonate resin is preferred from the viewpoint of more excellent impact resistance.

Examples of the dihydroxy compound of formula (1) includes isosorbide (ISB), isomannide, and isoidet, which are stereoisomers. These may be used alone or in combination of two or more kinds thereof.

Among the dihydroxy compound of formula (1), isosorbide (ISB), which is obtained by dehydration condensation of sorbitol, the sorbitol being produced from various starches which are present in a large amount as plant-derived resources and are easily available, is most preferred in terms of ease of availability and production, weather resistance, optical characteristics, moldability, heat resistance, and carbon neutral.

The dihydroxy compound of formula (1) is likely to be gradually oxidized by oxygen. Therefore, in order to prevent decomposition by oxygen during storage or handling at the time of production, it is preferred to prevent water from being mixed, to use a deoxidant, or to perform under a nitrogen atmosphere.

The polycarbonate resin (A) according to the second aspect of the present invention is preferably a copolymerized polycarbonate resin containing the structural unit derived from the dihydroxy compound of formula (1) and a structural unit derived from a dihydroxy compound other than the dihydroxy compound of formula (1). A dihydroxy compound into which a structural unit (b) is introduced is not particularly limited, and is preferably one or more kinds of dihydroxy compounds selected from the group consisting of an aliphatic hydrocarbon dihydroxy compound, an alicyclic hydrocarbon dihydroxy compound, a dihydroxy compound containing an ether, and a dihydroxy compound containing an aromatic group. A structural unit derived from one or more kinds of dihydroxy compounds selected from the group consisting of an aliphatic hydrocarbon dihydroxy compound, an alicyclic hydrocarbon dihydroxy compound, a dihydroxy compound containing an ether, and a dihydroxy compound containing an aromatic group is appropriately referred to as the "structural unit (b)". In particular, one or more kinds of dihydroxy compounds selected from the group consisting of an aliphatic hydrocarbon dihydroxy compound, an alicyclic hydrocarbon dihydroxy compound, and a dihydroxy compound containing an ether are preferred. Since these dihydroxy compounds have a flexible molecular structure, by using these dihydroxy compounds as a raw material, obtained impact resistance of the polycarbonate resin can be improved. Among them, it is more preferred to use an aliphatic hydrocarbon dihydroxy compound or an alicyclic hydrocarbon dihydroxy compound, which has a large effect of improving impact resistance, and it is most preferred to use an alicyclic hydrocarbon dihydroxy compound. Specific examples of the aliphatic hydrocarbon dihydroxy compound, the alicyclic hydrocarbon dihydroxy compound, the dihydroxy compound containing an ether, and the dihydroxy compound containing an aromatic group are as follows.

As the aliphatic hydrocarbon dihydroxy compound, for example, the following dihydroxy compounds can be used. A linear aliphatic dihydroxy compound such as ethylene glycol, 1,3-propanediol, 1,2-propanediol, 1,4-butanediol, 1,5-heptanediol, 1,6-hexanediol, 1,9-nonanediol, 1,10-decanediol, 1,12-dodecanediol, etc.; and an aliphatic dihydroxy compound having a branched chain such as 1,3-butanediol, 1,2-butanediol, neopentyl glycol, hexylene glycol, etc.

As the alicyclic hydrocarbon dihydroxy compound, for example, the following dihydroxy compounds can be used. A dihydroxy compound which is a primary alcohol of an alicyclic hydrocarbon, exemplified by a dihydroxy compound derived from a terpene compound such as 1,2-cyclohexanedimethanol, 1,3-cyclohexanedimethanol, 1,4-cyclohexanedimethanol, tricyclodecanedimethanol, pentacyclopentadecanedimethanol, 2,6-decalin dimethanol, 1,5-decalin dimethanol, 2,3-decalin dimethanol, 2,3-norbomane dimethanol, 2,5-norbornane dimethanol, 1,3-adamantane dimethanol, limonene, etc.; and a dihydroxy compound which is a secondary or tertiary alcohol of an alicyclic hydrocarbon, exemplified by 1,2-cyclohexanediol, 1,4-cyclohexanediol, 1,3-adamantanediol, hydrogenated bisphenol A, 2,2,4,4-tetramethyl-1,3-cyclobutanediol, etc.

Examples of the dihydroxy compound containing ether include oxyalkylene glycols and a dihydroxy compound containing an acetal ring.

As the oxyalkylene glycols, for example, diethylene glycol, triethylene glycol, tetraethylene glycol, polyethylene glycol, and polypropylene glycol etc. can be used.

As the dihydroxy compound containing an acetal ring, for example, spiroglycol of the following structural formula (3), and dioxane glycol of the following structural formula (4) can be used.

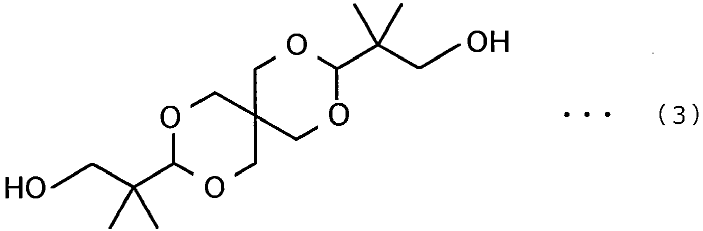

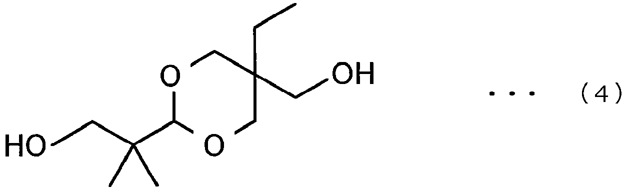

As the dihydroxy compound containing an aromatic group , for example, the following dihydroxy compounds can be used, but dihydroxy compounds other than these can also be used. An aromatic bisphenol compound such as 2,2-bis(4-hydroxyphenyl)propane, 2,2-bis(3-methyl-4-hydroxyphenyl)propane, 2,2-bis(4-hydroxy-3,5-dimethylphenyl)propane, 2,2-bis(4-hydroxy-3,5-diethylphenyl)propane, 2,2-bis(4-hydroxy-(3-phenyl)phenyl)propane, 2,2-bis(4-hydroxy-(3,5-diphenyl)phenyl)propane, 2,2-bis(4-hydroxy-3,5-dibromophenyl)propane, bis(4-hydroxyphenyl)methane, 1,1-bis(4-hydroxyphenyl)ethane, 2,2-bis(4-hydroxyphenyl)butane, 2,2-bis(4-hydroxyphenyl)pentane, 1,1-bis(4-hydroxyphenyl)-1-phenylethane, bis(4-hydroxyphenyl)diphenylmethane, 1,1-bis(4-hydroxyphenyl)-2-ethylhexane, 1,1-bis(4-hydroxyphenyl)decane, bis(4-hydroxy-3-nitrophenyl)methane, 3,3-bis(4-hydroxyphenyl)pentane, 1,3-bis(2-(4-hydroxyphenyl)-2-propyl)benzene, 1,3-bis(2-(4-hydroxyphenyl)-2-propyl)benzene, 2,2-bis(4-hydroxyphenyl)hexafluoropropane, 1,1-bis(4-hydroxyphenyl)cyclohexane, bis(4-hydroxyphenyl)sulfone, 2,4'-dihydroxydiphenylsulfone, bis(4-hydroxyphenyl)sulfide, bis(4-hydroxy-3-methylphenyl)sulfide, bis(4-hydroxyphenyl)disulfide, 4,4'-dihydroxydiphenyl ether, and 4,4'-dihydroxy-3,3'-dichlorodiphenyl ether; a dihydroxy compound having an ether group bonded to an aromatic group such as 2,2-bis(4-(2-hydroxyethoxy)phenyl)propane, 2,2-bis(4-(2-hydroxypropoxy)phenyl)propane, 1,3-bis(2-hydroxyethoxy)benzene, 4,4'-bis(2-hydroxyethoxy)biphenyl, and bis(4-(2-hydroxyethoxy)phenyl)sulfone; and a dihydroxy compound containing a fluorene ring such as 9,9-bis(4-(2-hydroxyethoxy)phenyl)fluorene, 9,9-bis(4-hydroxyphenyl)fluorene, 9,9-bis(4-hydroxy-3-methylphenyl)fluorene, 9,9-bis(4-(2-hydroxypropoxy)phenyl)fluorene, 9,9-bis(4-(2-hydroxyethoxy)-3-methylphenyl)fluorene, 9,9-bis(4-(2-hydroxypropoxy)-3-methylphenyl)fluorene, 9,9-bis(4-(2-hydroxyethoxy)-3-isopropylphenyl)fluorene, 9,9-bis(4-(2-hydroxyethoxy)-3-isobutylphenyl)fluorene, 9,9-bis(4-(2-hydroxyethoxy)-3-tert-butylphenyl)fluorene, 9,9-bis(4-(2-hydroxyethoxy)-3-cyclohexylphenyl)fluorene, 9,9-bis(4-(2-hydroxyethoxy)-3-phenylphenyl)fluorene, 9,9-bis(4-(2-hydroxyethoxy)-3,5-dimethylphenyl)fluorene, 9,9-bis(4-(2-hydroxyethoxy)-3-tert-butyl-6-methylphenyl)fluorene, and 9,9-bis(4-(3-hydroxy-2,2-dimethylpropoxy)phenyl)fluorene.

In the polycarbonate resin (A), a content ratio of the structural unit derived from the compound of formula (1) with respect to 100 mol% of structural unit derived from all dihydroxy compounds is not particularly limited, and the lower limit thereof is preferably 30 mol% or more, more preferably 40 mol% or more, even more preferably 50 mol% or more, particularly preferably 55 mol% or more, and most preferably 60 mol% or more. The upper limit thereof is more preferably 95 mol % or less, even more preferably 90 mol % or less, and particularly preferably 85 mol % or less. In this case, a biogenic material content can be further increased, and the heat resistance can be further improved. The content ratio of the structural unit derived from the compound of formula (1) in the polycarbonate may be 100 mol%, but from the viewpoint of further increasing the molecular weight and further improving the impact resistance, it is preferred that a structural unit other than the structural unit derived from the compound of formula (1) is copolymerized.

When the polycarbonate resin (A) is a copolymerized polycarbonate having the structural unit derived from the compound of formula (1) and the structural unit (b), a content ratio of the structural unit (b) is not particularly limited, and the lower limit thereof is preferably 5 mol% or more, more preferably 10 mol% or more, and even more preferably 15 mol% or more. The upper limit thereof is preferably 70 mol% or less, more preferably 60 mol% or less, even more preferably 50 mol% or less, particularly preferably 45 mol% or less, and most preferably 40 mol% or less. In this case, since a flexible structure is introduced into the polymer chain, toughness of the resin can be further increased, and the impact resistance can be further improved.

The polycarbonate resin (A) may further contain a structural unit (another dihydroxy compound) other than the structural unit derived from the compound of formula (1) and the structural unit (b). In this connection, in order for the present invention to exhibit good effects, the content ratio of a structural unit derived from the other dihydroxy compound is preferably 10 mol% or less, and more preferably 5 mol% or less, with respective to 100 mol% of a structural unit(s) derived from the total dihydroxy compound.

The other dihydroxy compound can be appropriately selected according to the properties required for the polycarbonate resin. The other dihydroxy compound may be used alone or in combination of a plurality of kinds thereof. By using the other dihydroxy compound in combination with the dihydroxy compound of formula (1), effects such as improvement of flexibility and mechanical properties of the polycarbonate resin and improvement of moldability can be obtained.

The dihydroxy compound used as a raw material for the polycarbonate resin may contain a reducing agent, an antioxidant, a deoxidant, a light stabilizer, an antacid agent, and a stabilizer such as a pH stabilizer and a heat stabilizer. In particular, the dihydroxy compound of formula (1) has a property of being easily altered in an acidic state. Therefore, by using a basic stabilizer in the process of synthesizing the polycarbonate resin, alteration of the dihydroxy compound of formula (1) can be prevented, and the quality of the obtained polycarbonate resin composition can be further improved.

As the carbonic acid diester used as a raw material for the polycarbonate resin, a compound of the following formula (5) can be generally used. The carbonic acid diester may be used alone or in combination of two or more kinds thereof.

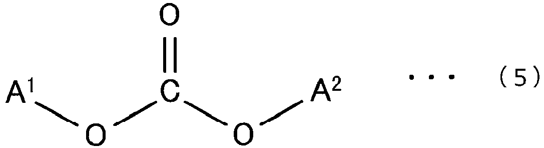

In formula (5), each of A¹ and A² is a substituted or unsubstituted aliphatic hydrocarbon group having 1 to 18 carbon atoms or a substituted or unsubstituted aromatic hydrocarbon group, and A' and A² may be the same as or different from each other. As A' and A², a substituted or unsubstituted aromatic hydrocarbon group is preferably used, and an unsubstituted aromatic hydrocarbon group is more preferably used.

As a carbonic acid diester of formula (5), for example, a diphenyl carbonate (DPC), a substituted diphenyl carbonate such as a ditolyl carbonate, a dimethyl carbonate, a diethyl carbonate, a di-tert-butyl carbonate, etc. can be used. Among the carbonic acid diester, it is preferred to use a diphenyl carbonate or a substituted diphenyl carbonate and it is particularly preferred to use a diphenyl carbonate. In this connection, the carbonic acid diester may contain impurities such as chloride ions, and the impurities may inhibit the polycondensation reaction or deteriorate a color tone of the polycarbonate resin to be obtained, so that it is preferred to use a carbonic acid diester purified by distillation or the like, if necessary.

In the present invention, a method for producing the polycarbonate resin is not particularly limited, and any method such as an interfacial polymerization process, a melt transesterification process, a pyridine method, a ring-opening polymerization process of cyclic carbonate compounds, a process of solid phase transesterification of prepolymers may be used by appropriately using the above raw material.

For example, the polycarbonate resin can be synthesized by polycondensation of the above-described dihydroxy compound and a carbonic acid diester through a transesterification reaction. More specifically, the polycarbonate resin can be obtained by removing out of the system a monohydroxy compound or the like which is produced as a by-product in the polycondensation and the transesterification reaction.

The transesterification reaction proceeds in the presence of a transesterification reaction catalyst (hereinafter, the transesterification reaction catalyst is referred to as a "polymerization catalyst"). The type of polymerization catalyst can greatly affect the reaction rate of the transesterification reaction and the quality of the polycarbonate resin to be obtained.

The polymerization catalyst is not limited as long as it can satisfy the transparency, color tone, heat resistance, weather resistance and mechanical strength of the polycarbonate resin to be obtained. As the polymerization catalyst, for example, a Group I or Group II metal compound (hereinafter, simply referred to as "Group 1" or "Group 2") in the long-period periodic table, and a basic compound such as a basic boron compound, a basic phosphorus compound, a basic ammonium compound, and an amine-based compound can be used. Among them, the Group 1 metal compound and/or the Group 2 metal compound are preferred, and the Group 2 metal compound is particularly preferred.

An amount of the polymerization catalyst to be used is preferably from 0.1 µmol to 300 µmol, more preferably from 0.5 µmol to 100 µmol, and particularly preferably from 1 µmol to 50 µmol, per 1 mol of the total dihydroxy compound used in the reaction.

Since the polymerization velocity can be increased by adjusting the amount of the polymerization catalyst to be used within the above-described range, a polycarbonate resin having a desired molecular weight can be obtained without necessarily increasing the polymerization temperature. Therefore, deterioration of the color tone of the polycarbonate resin can be prevented. Additionally, an unreacted raw material can be prevented from volatilizing during polymerization, and thus a molar ratio of the dihydroxy compound to the carbonic acid diester can be prevented from being disturbed, so that a resin having a desired molecular weight can be more reliably obtained. Further, since coincidence of the side reaction can be prevented, deterioration of the color tone or coloring during the molding process of the polycarbonate resin can be further prevented.

In consideration of the adverse effect of sodium, potassium, or cesium among the Group 1 metals on the color tone of the polycarbonate resin and the adverse effect of iron on the color tone of the polycarbonate resin, the total content of sodium, potassium, cesium, and iron in the polycarbonate resin (A) is preferably 1 ppm by weight or less. In this case, the deterioration of the color tone of the polycarbonate resin can be further prevented, and the color tone of the polycarbonate resin can be further improved. From the same viewpoint, the total content of sodium, potassium, cesium and iron in the polycarbonate resin is more preferably 0.5 ppm by weight or less. The metals may be introduced not only from the catalyst to be used, but also from the raw material or a reaction device. Regardless of the source, a total amount of these metal compounds in the polycarbonate resin is preferably within the above-described range as a total content of sodium, potassium, cesium and iron.

### (Synthesis of Polycarbonate Resin)

The polycarbonate resin is suitably obtained by polycondensation of a carbonic acid diester and a dihydroxy compound used as a raw material, such as the dihydroxy compound of formula (1), in the presence of a polymerization catalyst through a transesterification reaction.

A glass transition temperature of the polycarbonate resin is preferably 90°C or higher. In this case, the heat resistance and impact resistance of the polycarbonate resin composition can be improved in a well-balanced manner. From the same viewpoint, the glass transition temperature of the polycarbonate resin is more preferably 100°C or higher, even more preferably 110°C or higher, and particularly preferably 120°C or higher. On the other hand, the glass transition temperature of the polycarbonate resin is preferably 250°C or lower, more preferably 200°C or lower, and particularly preferably 170°C or lower. In this case, the melt viscosity can be reduced by the melt polymerization described above, and a polymer having a sufficient molecular weight can be obtained. When an attempt is made to increase the molecular weight by increasing the polymerization temperature to decrease the melt viscosity, the structural component (a) may become easily colored due to insufficient heat resistance. From the viewpoint of increasing the molecular weight and preventing coloring in a more balanced manner, the glass transition temperature of the polycarbonate resin is preferably 165°C or lower, more preferably 160°C or lower, and particularly preferably 150°C or lower. The glass transition temperature of the polycarbonate resin can be adjusted, for example, by selecting the structural unit of the resin or changing the ratio. The glass transition temperature can be measured by a method to be described later.

The refractive index of the polycarbonate resin (A) is preferably 1.480 or more and 1.620 or less, and more preferably 1.490 or more and 1.600 or less. Within the range, the composition has excellent transparency in a case of being combined with the polymer (B). The refractive index of the polycarbonate resin can be adjusted, for example, by selecting the structural unit of the resin or changing the ratio. The refractive index can be measured by a method to be described later.

The molecular weight of the polycarbonate resin can be represented by a reduced viscosity, and the higher the reduced viscosity, the larger the molecular weight. The reduced viscosity is generally 0.30 dL/g or more, and preferably 0.33 dL/g or more. In this case, the mechanical strength of the molded article can be further improved. On the other hand, the reduced viscosity is generally 1.20 dL/g or less, preferably 1.00 dL/g or less, and even more preferably 0.80 dL/g or less. In this case, fluidity during molding can be improved, and productivity and moldability can be further improved. The reduced viscosity of the polycarbonate resin is measured with an Ubbelohde viscometer under the condition of a temperature of 20.0°C±0.1°C by using a solution prepared by precisely adjusting a concentration of the resin composition to 0.6 g/dL using methylene chloride as a solvent. The details of the method for measuring the reduced viscosity will be described in Examples.

The polycarbonate resin preferably contains a catalyst deactivator. The catalyst deactivator is not particularly limited as long as it is an acidic substance and has a function of deactivating a polymerization catalyst, and examples thereof include: phosphoric acid, trimethyl phosphate, triethyl phosphate, phosphorous acid, phosphonium salts such as tetrabutylphosphonium octylsulfonate, a benzene sulfonic acid tetramethylphosphonium salt, a benzenesulfonic acid tetrabutylphosphonium salt, a dodecylbenzenesulfonic acid tetrabutylphosphonium salt, and a p-toluenesulfonic acid tetrabutylphosphonium salt; ammonium salts such as a decylsulfonic acid tetramethylammonium salt, and a dodecylbenzenesulfonic acid tetrabutylammonium salt; and alkyl esters such as methyl benzenesulfonate, butyl benzenesulfonate, methyl p-toluenesulfonate, butyl p-toluenesulfonate, and ethyl hexadecylsulfonate.

The catalyst deactivator preferably contains a phosphorus-based compound including either a partial structure of the following structural formula (6) or the following structural formula (7) (hereinafter, referred to as a "specific phosphorus-based compound"). When the specific phosphorus-based compound is added after completion of the polycondensation reaction, that is, for example, at the time of a kneading step, a pelletization step, or the like, the specific phosphorus-based compound can deactivate a polymerization catalyst to be described later, and unnecessary progress of the polycondensation reaction thereafter can be prevented. As a result, the progress of the polycondensation when the polycarbonate resin is heated in the molding step or the like can be prevented, and thus desorption of the monohydroxy compound can be prevented. By deactivating the polymerization catalyst, the coloring of the polycarbonate resin at a high temperature can be further prevented.

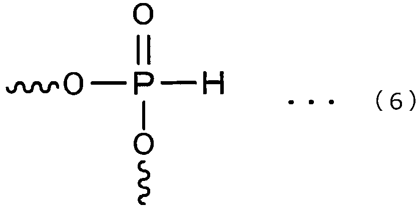

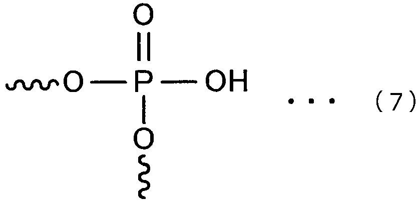

As the specific phosphorus-based compound including the partial structure of the structural formula (6) or structural formula (7), phosphoric acid, phosphorous acid, phosphonic acid, hypophosphorous acid, polyphosphoric acid, phosphonates, acid phosphates, and the like can be employed. Among the specific phosphorus-based compound, phosphorous acid, phosphonic acid, and phosphonates are more effective in deactivating the catalyst and preventing coloring, and phosphorous acid is particularly preferred.

One kind of the specific phosphorus-based compound may be used alone, or two or more kinds thereof may be mixed and used in any combination and ratio.

A content of the specific phosphorus-based compound in the polycarbonate resin is preferably 0.1 ppm by weight or more and 5 ppm by weight or less in terms of phosphorus atoms. In this case, the effect of deactivating the catalyst and preventing coloring by the specific phosphorus-based compound can be sufficiently obtained. In this case, coloring of the polycarbonate resin can be further prevented particularly in a durability test at a high temperature and high humidity.

By adjusting the content of the specific phosphorus-based compound according to the amount of the polymerization catalyst, the effects of deactivating the catalyst and preventing coloring can be more reliably obtained. The content of the specific phosphorus-based compound is preferably 0.5 time or more and 5 times or less, more preferably 0.7 time or more and 4 times or less, and particularly preferably 0.8 times or more and 3 times or less, per 1 mol of metal atoms of the polymerization catalyst, in terms of the amount of phosphorus atoms.

### [Polymer (B)]

The polymer (B) in the resin composition according to the second aspect of the present invention is a copolymer having at least the polymer chain (B1) and the polymer chain (B2), and has a role of imparting impact resistance to the resin composition according to the present invention and a molded article therefrom. The polymer (B) is a block copolymer and/or a graft copolymer (which may be abbreviated as a block-graft copolymer) containing the polymer chain (B1) and the polymer chain (B2). The block copolymer is a copolymer in which the polymer chain (B1) and the polymer chain (B2) are bonded in one polymer chain, and the graft copolymer is a branched form in which either one of the polymer chain (B1) or the polymer chain (B2) forms a backbone polymer and the other forms a branch polymer. From the viewpoint of excellent transparency of the resin composition, the polymer (B) is preferably a graft copolymer. Among them, it is particularly preferred to contain a graft copolymer in which the polymer chain (B 1) is a branch polymer and the polymer chain (B2) is a backbone polymer.

Here, it is preferred that the polymer (B) does not have a crosslinked structure. When the polymer (B) does not have a crosslinked structure, the polycarbonate resin composition has good fluidity during melt kneading and melt molding.

A mass average molecular weight (Mw) of the polymer (B) is preferably 20,000 or more, more preferably 30,000 or more, even more preferably 100,000 or more, and particularly preferably 300,000 or more, from the viewpoint of mechanical properties of the resin composition containing the polymer (B) and the molded article therefrom. On the other hand, the mass average molecular weight (Mw) of the polymer (B) is preferably 10,000,000 or less, more preferably 9,000,000 or less, even more preferably 8,000,000 or less, and particularly preferably 7,000,000 or less, from the viewpoint of optical performance and the fluidity during melt molding of the resin composition containing the polymer (B) and the molded article therefrom.

A number average molecular weight (Mn) of the polymer (B) is preferably 10,000 or more, more preferably 20,000 or more, even more preferably 40,000 or more, and particularly preferably 60,000 or more, from the viewpoint of mechanical properties of the resin composition containing the polymer (B) and the molded article therefrom. On the other hand, the number average molecular weight (Mn) of the polymer (B) is preferably 5,000,000 or less, more preferably 1,000,000 or less, even more preferably 500,000 or less, and particularly preferably 200,000 or less, from the viewpoint of the optical performance and the fluidity during melt molding of the resin composition containing the polymer (B) and the molded article therefrom.

The polymer (B) may be used alone or in combination of two or more kinds thereof. The content of the polymer (B) is not particularly limited, and is preferably from 1 mass% to 30 mass%, more preferably from 2 mass% to 20 mass%, and particularly preferably from 3 mass% to 15 mass%, with respect to 100 mass% of the resin composition. When the content of the polymer (B) is equal to or more than the lower limit value, the impact resistance of the resin composition and the molded article therefrom can be improved. When the content of the polymer (B) is equal to or less than the upper limit value, a decrease in elastic modulus of the resin composition and the molded article therefrom can be prevented.

### [Polymer Chain (B 1)]

The polymer chain (B 1) is required to have a glass transition temperature (Tg) of higher than 80°C, and preferably 82°C or higher. The polymer chain (B 1) has the role of adjusting miscibility and compatibility when the polymer (B) is mixed with the polycarbonate resin (A), and controlling a phase separation size and phase separation form. Therefore, the polymer chain (B 1) is preferably designed to have good compatibility with the polycarbonate resin (A). In order that the compatibility between the polymer chain (B 1) and the polycarbonate resin (A) is good and the heat resistance of the resin composition and the molded article therefrom is not lowered, it is important that the polymer chain (B1) has a relatively high glass transition temperature (Tg). When the glass transition temperature (Tg) of the polymer chain (B1) is relatively high, the melt viscosities of the polymer chain (B1) and the polymer (B) are high, and a melt viscosity difference with the polycarbonate resin (A) is small. As a result, the compatibility between the polycarbonate resin (A) and the polymer (B) can be improved when the resin composition is meltkneaded, and fine particles are easily dispersed. Accordingly, the resin composition and the molded article therefrom can exhibit transparency in a wide operating temperature range.

The glass transition temperature (Tg) of the polymer chain (B1) is more preferably 85°C or higher, even more preferably 90°C or higher, and particularly preferably 98°C or higher. When the glass transition temperature of the polymer chain (B1) is lower than 82°C and 80°C or lower, a resin composition having sufficient heat resistance cannot be obtained. On the other hand, when the glass transition temperature of the polymer chain (B1) is too high, the resin composition and the molded article therefrom become hard and brittle, so that the glass transition temperature of the polymer chain (B1) is preferably 150°C or lower, more preferably 130°C or lower, and particularly preferably 120°C or lower. From the same viewpoint, the glass transition temperature of the polymer chain (B1) is preferably close to that of the polycarbonate resin (A). A glass transition temperature difference (an absolute value) between the polycarbonate resin (A) and the polymer chain (B1) is preferably 50°C or lower, more preferably 40°C or lower, and even more preferably 30°C or lower.

Generally, the glass transition temperature of a polymer can be determined using differential scanning calorimetry (DSC). Alternatively, a temperature at which loss tangent (tan δ) gives a peak using dynamic viscoelasticity measuring (DMA) can be used as the glass transition temperature. Regarding the glass transition temperature of the resin composition, the glass transition temperature derived from the polycarbonate resin (A), the glass transition temperature derived from the polymer chain (B1), and the glass transition temperature derived from the polymer chain (B2) can be confirmed separately. When the polymer chain (B2) functions as a rubber in the resin composition and the impact resistance becomes good, the glass transition temperature derived from the polymer chain (B2) may be confirmed.

Additionally, when the glass transition temperature of a homopolymer for an each monomer unit is known, a Fox equation can be used to calculate the glass transition temperature of the entire random copolymer.

### [Polymer Chain (B2)]

The polymer chain (B2) is required to have a glass transition temperature (Tg) of lower than 0°C. The polymer chain (B2) serves as a flexible rubber component when the polymer (B) is mixed with the polycarbonate resin (A) and has a role of improving the impact resistance. Therefore, it is important that the polymer chain (B2) is incompatible with the polycarbonate resin (A) and has a low glass transition temperature. When the glass transition temperature of the polymer chain (B2) is lower than 0°C, the resin composition containing the polymer (B) has good impact resistance. From the same viewpoint, the glass transition temperature of the polymer chain (B2) is preferably -5°C or lower, more preferably -10°C or lower, and particularly preferably -20°C or lower.

The polymer chain (B2) includes a radically polymerizable monomer unit containing an aromatic ring(s), and more preferably includes an aromatic vinyl unit. The aromatic vinyl unit has a role as a high refractive component and can further improve the transparency of the polycarbonate resin composition.

Examples of the aromatic vinyl include styrene, α-methylstyrene, o-methylstyrene, p-methylstyrene, o-ethylstyrene, p-ethylstyrene, p-t-butylstyrene, vinylethylbenzene, vinyltoluene, vinylxylene, vinylnaphthalene, diphenylethylene, and divinylbenzene. Among them, styrene is preferred from the viewpoint of practical properties and productivity. These can be used alone or in combination of two or more kinds thereof.

### [Method for Producing Polymer (B)]

Examples of a method for producing the polymer (B) include a method of obtaining a block copolymer by a controlled polymerization method and a method of obtaining a block-graft copolymer by copolymerizing a macromonomer and a comonomer. Here, the macromonomer is a polymer having a polymerizable functional group at one terminal, and is also called macromer. A copolymer of a macromonomer and a comonomer is called a macromonomer copolymer.

Examples of a method for synthesizing a block copolymer by a controlled polymerization method include an atom transfer radical polymerization (ATRP) method, a reversible addition fragmentation chain transfer (RAFT) polymerization method, and an organometallic-mediated radical polymerization (CMRP) method. In the method of obtaining a block copolymer by a controlled polymerization method, there are problems such as limitation on the types of applicable monomers, coloring due to the residue of a catalyst to be used, odor, and deterioration in durability. On the other hand, a macromonomer copolymer can efficiently bond two or more kinds of polymer chains, and is suitably used as the polymer (B) according to the present invention.

### [Macromonomer Copolymer]

In the case of using the macromonomer copolymer as the polymer (B), two kinds of methods are considered: a method in which the polymer chain (B 1) is a macromonomer-derived polymer chain, and a method in which the polymer chain (B2) is a macromonomer-derived polymer chain. Both the macromonomer copolymers can be used as the polymer (B), but a method in which the polymer chain (B 1) is derived from a macromonomer is preferred since a plurality of polymer chains (B 1), which are components compatible with the polycarbonate resin (A), can be introduced into one molecule. At this time, the macromonomer as a raw material for the polymer chain (B 1) is referred to as a macromonomer (b 1), and the comonomer copolymerizable with the macromonomer (b 1) is referred to as a comonomer (b2). That is, the macromonomer copolymer at this time contains a unit derived from the macromonomer (b1) and a unit derived from the comonomer (b2), the macromonomer (b1) is the polymer chain (B 1), and the polymer of the comonomer (b2) is the polymer chain (B2).

The macromonomer copolymer includes at least one selected from a block copolymer containing a unit derived from the macromonomer (b1) and a unit derived from the comonomer (b2), and a graft copolymer containing a unit derived from the macromonomer (b 1) in a side chain.

Further, the macromonomer copolymer may include at least one selected from a polymer only containing a unit derived from the macromonomer (b1), a polymer composed only of the comonomer (b2), the unreacted macromonomer (b1), and the unreacted comonomer (b2).

### [Macromonomer (b1)]

The macromonomer (b 1) according to the present invention has a group containing a radically polymerizable unsaturated double bond at one end of a poly(meth)acrylate segment. As the macromonomer (b1), for example, a compound of the following formula (2) can be used.

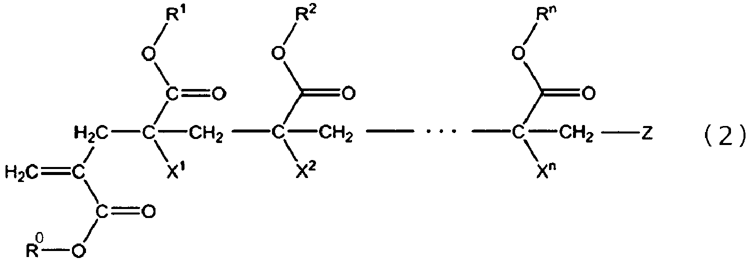

In formula (2), R⁰ to Rⁿ are each independently a hydrogen atom, an alkyl group, a cycloalkyl group, an aryl group, or a heterocyclic group. X' to Xⁿ are each independently a hydrogen atom or a methyl group. Z is a terminal group. n is a natural number of 2 to 10,000.

### [R° to Rⁿ]

In formula (2), R⁰ to Rⁿ are each independently a hydrogen atom, an alkyl group, a cycloalkyl group, an aryl group, or a heterocyclic group. The alkyl group, the cycloalkyl group, the aryl group or the heterocyclic group may have a substituent.

Examples of the alkyl group of R° to Rⁿ include a branched or linear alkyl group having 1 to 20 carbon atoms. Specific examples thereof include a methyl group, an ethyl group, an n-propyl group, an i-propyl group, an n-butyl group, an i-butyl group, a t-butyl group, a pentyl group, a hexyl group, a heptyl group, an octyl group, a nonyl group, a decyl group, an undecyl group, a dodecyl group, a tridecyl group, a tetradecyl group, a pentadecyl group, a hexadecyl group, a heptadecyl group, an octadecyl group, a nonadecyl group, and an icosyl group. Among them, from the viewpoint of availability, a methyl group, an ethyl group, an n-propyl group, an i-propyl group, an n-butyl group, a t-butyl group, a pentyl group, a hexyl group, a heptyl group, and an octyl group are preferred, a methyl group, an ethyl group, an n-propyl group, an i-propyl group, an n-butyl group, and a t-butyl group are more preferred, and a methyl group is particularly preferred.

Examples of the cycloalkyl group of R° to Rⁿ include a cycloalkyl group having 3 to 20 carbon atoms. Specific examples thereof include a cyclopropyl group, a cyclobutyl group, a cyclopentyl group, a cyclohexyl group, a cycloheptyl group, a cyclooctyl group, a t-butylcyclohexyl group, an isobornyl group, an adamantyl group, etc. In terms of availability, a cyclopropyl group, a cyclobutyl group, and an adamantyl group are preferred.

Examples of the aryl group of R⁰ to Rⁿ include an aryl group having 6 to 18 carbon atoms. Specific examples thereof include a phenyl group, a benzyl group, a naphthyl group, etc.

Examples of the heterocyclic group of R° to Rⁿ include a heterocyclic group having 5 to 18 carbon atoms. Specific examples thereof include a γ-lactone group, an ε-caprolactone group, a morpholine group, etc. Examples of a heteroatom contained in a heterocyclic ring include an oxygen atom, a nitrogen atom, a sulfur atom, etc.

Examples of the substituent of R⁰ to Rⁿ each independently include a group or an atom selected from the group consisting of an alkyl group, an aryl group, a carboxy group, an alkoxy carbonyl group (-COOR'), a carbamoyl group (-CONR'R"), a cyano group, a hydroxy group, an amino group, an amide group (-NR'R"), a halogen atom, an allyl group, an epoxy group, an alkoxy group (-OR'), and a hydrophilic or ionic group. Examples of R' or R" each independently include a group same as R (excluding the heterocyclic group).

Examples of the alkoxy carbonyl group as the substituent of R⁰ to Rⁿ include a methoxy carbonyl group.

Examples of the carbamoyl group as the substituent of R⁰ to Rⁿ include an N-methylcarbamoyl group and an N,N-dimethylcarbamoyl group.

Examples of the amide group as the substituent of R⁰ to Rⁿ include a dimethylamide group.

Examples of the halogen atom as the substituent of R⁰ to Rⁿ include a fluorine atom, a chlorine atom, a bromine atom, and a iodine atom.

Examples of the alkoxy group as the substituent of R⁰ to Rⁿ include an alkoxy group having 1 to 12 carbon atoms. Specific examples thereof include a methoxy group.

Examples of the hydrophilic or ionic group as the substituent of R⁰ to Rⁿ include an alkali salt of a carboxy group, an alkali salt of a sulfoxyl group, a poly(alkylene oxide) group such as a polyethylene oxide group, a polypropylene oxide group, etc. and a cationic substituent such as a quaternary ammonium salt group.

R⁰ to Rⁿ are preferably at least one selected from an alkyl group, a cycloalkyl group, an aryl group, and a hydroxy group.

The alkyl group is preferably a methyl group, an ethyl group, an n-propyl group, or an i-propyl group, and more preferably a methyl group from the viewpoint of availability.

The aryl group is preferably a benzyl group or a phenyl group since it contributes to improvement of compatibility of the polymer chain (B 1) with the polycarbonate resin (A) and can also be used as a high refractive index component for adjusting the refractive index of the polymer (B 1), and is more preferably a phenyl group since the glass transition temperature of the macromonomer becomes higher.

Since the hydroxy group contributes to improvement of compatibility of the polymer chain (B 1) with the polycarbonate resin (A) and can also be used as a high refractive index component for adjusting the refractive index of the polymer (B 1), the hydroxy group is preferably used as necessary.

### [X¹ to X¹]

In formula (2), X' to X¹ each are a hydrogen atom or a methyl group, and preferably a methyl group. Further, from the viewpoint of ease of synthesis of the macromonomer (b 1), it is preferred that half or more of X' to Xⁿ are a methyl group.

### [Z]

In formula (2), Z is a terminal group of the macromonomer (b 1). Examples of the terminal group of the macromonomer (b 1) include a hydrogen atom and a group derived from a radical polymerization initiator, similar to a terminal group of a polymer obtained by known radical polymerization.

It is preferred to use methyl methacrylate in terms of the glass transition temperature of the macromonomer (b1), availability, and the like. A ratio of the methyl methacrylate based on 100 mass% of the total macromonomer (b1) is preferably 50 mass% or more, more preferably 60 mass% or more, and particularly preferably 70 mass% or more.

It is preferred to use a methacrylate containing an aryl group such as phenyl methacrylate, benzyl methacrylate, etc. since it contributes to improvement of compatibility of the macromonomer (b 1) with the polycarbonate resin (A) and can also be used as a high refractive index component for adjusting the refractive index of the macromonomer (b 1), and phenyl methacrylate is more preferred since the glass transition temperature of the macromonomer (b 1) becomes high. A ratio of the methacrylate containing an aryl group based on 100 mass% of the total macromonomer (b1) is preferably 2 mass% or more, more preferably 5 mass% or more, and particularly preferably 10 mass% or more. When the ratio of the methacrylate containing an aryl group based on the macromonomer (b 1) is 2 mass% or more, the compatibility of the macromonomer (b 1) with the polycarbonate resin (A) can be improved, and the refractive index can be easily adjusted. The ratio of the methacrylate containing an aryl group based on 100 mass% of the total macromonomer (b1) is preferably 70 mass% or less, more preferably 50 mass% or less, and particularly preferably 30 mass% or less. When the ratio of the methacrylate containing an aryl group based on the macromonomer (b1) is 70 mass% or less, yellowing of the resin composition and the molded article therefrom can be prevented.

The content of the methacrylate in the monomer composition for obtaining the macromonomer (b 1) is preferably 80 mass% or more and 100 mass% or less from the point of heat resistance of the macromonomer copolymer as a product, the resin composition containing the macromonomer copolymer, and the molded article therefrom. The content of the methacrylate is more preferably 82 mass% or more and 99 mass% or less, and even more preferably 84 mass% more and 98 mass% or less. The content of the acrylate in the monomer composition for obtaining the macromonomer (b1) is preferably 0 mass% or more and 20 mass% or less, more preferably 1 mass% or more and 18 mass% or less, and even more preferably 2 mass% or more and 16 mass% or less.

### [Method for Producing Macromonomer (b 1)]

The macromonomer (b 1) can be produced by a known method. Examples of a method for producing the macromonomer include a production method using a cobalt chain transfer agent (US Patent No. 4,680,352 specification), a method using an α-subsututed unsaturated compound such as α-bromomethylstyrene as a chain transfer agent (WO 88/04304), a method of chemically bonding polymerizable groups (JP-A-S60-133007, US Patent No. 5,147,952 specification), and a method by thermal decomposition (JP-A-H11-240854).

Among them, as the method for producing the macromonomer (b 1), the production method using a cobalt chain transfer agent is preferred since the number of production steps is small and a catalyst with a high chain transfer constant is used.

### [Comonomer (b2)]

The comonomer (b2) is not particularly limited as long as it is copolymerizable with the macromonomer (b 1), and various polymerizable monomers can be used as necessary. The copolymerization reaction mechanism of the macromonomer (b1) and the comonomer (b2) is described in detail in a report by Yamada et al. (Prog. Polym. Sci. 31 (2006) p 835-877). As the comonomer (b2), a monomer having a double bond and is radical polymerizable can be used alone or in combination of two or more kinds thereof.

Specific examples thereof include those similar to the monomer for obtaining the macromonomer (b 1). The comonomer (b2) is preferably a (meth)acrylate or an aromatic vinyl because of good copolymerizability with the macromonomer (b1). Preferred are methyl (meth)acrylate, ethyl (meth)acrylate, n-propyl (meth)acrylate, n-butyl (meth)acrylate, lauryl (meth)acrylate, stearyl (meth)acrylate, 2-ethylhexyl (meth)acrylate, glycidyl (meth)acrylate, 2-hydroxyethyl (meth)acrylate, 4-hydroxybutyl (meth)acrylate, phenyl (meth)acrylate, benzyl (meth)acrylate, styrene, α-methylstyrene, o-methylstyrene, p-methylstyrene, o-ethylstyrene, p-ethylstyrene, p-t-butylstyrene, vinylethylbenzene, vinyltoluene, vinylxylene, vinylnaphthalene, diphenylethylene, and divinylbenzene. The comonomer (b2) may be used alone or in combination of two or more kinds thereof.

The polymer of the comonomer (b2) is the polymer chain (B2). The glass transition temperature (Tg) of the polymer chain (B2) is preferably as low as described above. That is, the comonomer (b2) preferably includes a monomer in which a glass transition temperature of a homopolymer is low, and more preferably to use an acrylate in which a glass transition temperature of homopolymer is low. In the present invention, as the glass transition temperature (Tg) of a homopolymer of the comonomer (b2), numerical values described in known documents such as "POLYMER HANDBOOK", FOURTH EDITION, JOHN WILEY & SONS, INC., 2003 can be used. Alternatively, dynamic mechanical analysis of the obtained molded article can be carried out and a value of tan δ can be used as the Tg.

Examples of the acrylate in which the glass transition temperature of a homopolymer is low include: acrylates such as methyl acrylate, ethyl acrylate, n-propyl acrylate, i-propyl acrylate, n-butyl acrylate, i-butyl acrylate, t-butyl acrylate, 2-ethylhexyl acrylate, n-lauryl acrylate, n-stearyl acrylate, cyclohexyl acrylate, phenyl acrylate, benzyl acrylate, isobornyl acrylate, 2-methoxyethyl acrylate, 2-ethoxyethyl acrylate, phenoxyethyl acrylate, etc.; acrylates containing a hydroxy group(s) such as 2-hydroxyethyl acrylate, 2-hydroxypropyl acrylate, 4-hydroxybutyl acrylate, glycerol acrylate, etc.; acrylates containing a carboxy group(s) such as 2-acryloyloxyethyl hexahydrophthalate, 2-acryloyloxypropyl hexahydrophthalate, 2-acryloyloxyethyl phthalate, 2-acryloyloxypropyl phthalate, 2-acryloyloxyethyl maleate, 2-acryloyloxypropyl maleate, 2-acryloyloxyethyl succinate, 2-acryloyloxypropyl succinate etc.; acrylates containing an epoxy group(s) such as glycidyl acrylate, glycidyl α-ethyl acrylate, 3,4-epoxybutyl acrylate, etc.; acrylates containing an amino group(s) such as dimethylaminoethyl acrylate, diethylaminoethyl acrylate, etc.; and polyfunctional acrylates such as ethylene glycol diacrylate, 1,3-butylene glycol diacrylate, 1,6-hexanediol diacrylate, triethylene glycol diacrylate, tetraethylene glycol diacrylate, tripropylene glycol diacrylate, trimethylolpropane triacrylate, allyl acrylate, N,N'-methylenebisacrylamide, etc. These can be used alone or in combination of two or more kinds thereof.

Among the above monomers, 2-ethylhexyl acrylate, 4-hydroxybutyl acrylate, n-butyl acrylate, n-propyl acrylate, ethyl acrylate, and 2-hydroxyethyl acrylate are preferred since the homopolymer Tg is lower than 0°C. Alternatively, the comonomer (b2) more preferably includes an alkyl acrylate unit in which the glass transition temperature (Tg) of a homopolymer is lower than 0°C since the compatibility between the macromonomer (b1) and the comonomer (b2) can be improved, and the transparency and impact resistance of the resin composition and the molded article therefrom is good. As the alkyl acrylate in which the glass transition temperature (Tg) of a homopolymer is lower than 0°C, methyl acrylate, ethyl acrylate, and n-butyl acrylate are particularly preferred.

A ratio of the alkyl acrylate unit in which the homopolymer Tg is lower than 0°C based on 100 mass% of the total comonomer (b2) is preferably 50 mass% or more, more preferably 60 mass% or more, and particularly preferably 70 mass% or more. In this case, the transparency and impact resistance of the resin composition using the macromonomer copolymer and the molded article therefrom becomes good.

The comonomer (b2) preferably includes an aromatic vinyl as a high refractive index component for the purpose of matching the refractive index of homopolymer of the comonomer (b2) with that of the polycarbonate resin (A).

Examples of the aromatic vinyl include styrene, α-methylstyrene, o-methylstyrene, p-methylstyrene, o-ethylstyrene, p-ethylstyrene, p-t-butylstyrene, vinylethylbenzene, vinyltoluene, vinylxylene, vinylnaphthalene, diphenylethylene, and divinylbenzene. Among them, styrene is preferred from the viewpoint of practical properties and productivity. These can be used alone or in combination of two or more kinds thereof.

When the acrylate in which the glass transition temperature of a homopolymer is low and the aromatic vinyl are used as the comonomer (b2), a ratio of the aromatic vinyl based on 100 mass% of the total comonomer (b2) is preferably 10 mass% or more, more preferably 15 mass% or more, even more preferably 20 mass% or more, and particularly preferably 26 mass% or more. When the ratio of the aromatic vinyl is 10 mass% or more, the transparency of the resin composition and the molded article therefrom is good. When the acrylate in which the glass transition temperature of a homopolymer is low and the aromatic vinyl are used as the comonomer (b2), the ratio of the aromatic vinyl based on 100 mass% of the total comonomer (b2) is preferably 50 mass% or less, more preferably 45 mass% or less, and particularly preferably 40 mass% or less. When the ratio of the aromatic vinyl is 50 mass% or less, the weather resistance is good.

### [Method for Producing Macromonomer Copolymer]

A method for producing the macromonomer copolymer is not particularly limited, and various methods such as solution polymerization, suspension polymerization, emulsion polymerization, bulk polymerization, etc. can be used. Aqueous polymerization such as suspension polymerization or emulsion polymerization is preferred since the heat generated by polymerization can be easily controlled and the productivity is excellent. Suspension polymerization is more preferred since the polymerization and recovery operations are simpler.

Examples of a method for producing the macromonomer copolymer by suspension polymerization include the following [I] or [II].
[I] The macromonomer (b1) is dissolved in the comonomer (b2), and a radical polymerization initiator is added thereto. The macromonomer (b1) solution is dispersed in an aqueous solution with dissolved dispersant to obtain a syrup dispersion. Then, the obtained syrup dispersion is subjected to suspension polymerization.
[II] The comonomer (b2) is added to an aqueous suspension obtained by synthesizing the macromonomer (b1) by suspension polymerization to obtain, as a syrup suspension, a comonomer (b2) dispersion with dissolved macromonomer (b1). Then, the obtained syrup suspension is subjected to suspension polymerization.

The macromonomer copolymer obtained by the production method [I] tends to have excellent optical characteristics. In the production method [II], the production process can be shortened since the step of recovering the macromonomer (b1) can be omitted.

In either method [I] or [II], it is preferred to perform heating when the macromonomer (b1) is dissolved in the comonomer (b2). A heating temperature is preferably 30°C to 90°C. When the heating temperature is 30°C or higher, the solubility of the macromonomer (b1) can be improved. When the heating temperature is 90°C or lower, volatilization of the comonomer (b2) can be prevented. The lower limit of the heating temperature is more preferably 35°C or higher. The upper limit of the heating temperature is more preferably 75°C or lower.

In the production method [I], a timing of adding the radical polymerization initiator to the comonomer (b2) wherein the macromonomer (b1) is dissolved is preferably added after the macromonomer (b1) is dissolved in the comonomer (b2).

A temperature at which the radical polymerization initiator is added is preferably from 0°C to (10-hour half-life temperature of the radical polymerization initiator +15°C). When the temperature at which the radical polymerization initiator is added is 0°C or higher, the solubility of the radical polymerization initiator in the monomer becomes good. Stable polymerization can be performed at the temperature at which the radical polymerization initiator is added is (10-hour half-life temperature of the radical polymerization initiator +15°C).

Examples of the radical polymerization initiator include an organic peroxide and an azo compound.

Specific examples of the organic peroxide include 2,4-dichlorobenzoyl peroxide, t-butyl peroxypivalate, o-methylbenzoyl peroxide, bis-3,5,5-trimethylhexanoyl peroxide, octanoyl peroxide, t-butyl peroxy-2-ethylhexanoate, t-hexylperoxy-2-ethylhexanoate, 1,1,3,3-tetramethylbutyl peroxy 2-ethylhexanoate, cyclohexanone peroxide, benzoyl peroxide, methyl ethyl ketone peroxide, dicumyl peroxide, lauroyl peroxide, diisopropylbenzene hydroperoxide, t-butyl hydroperoxide, and di-t-butyl peroxide.

Specific examples of the azo compound include 2,2'-azobisisobutyronitrile, 2,2'-azobis(2-methylbutyronitrile), 2,2'-azobis(2,4-dimethylvaleronitrile), 2,2'-azobis(2,4-dimethyl-4-methoxyvaleronitrile), and dimethyl 2,2'-azobis(isobutyrate).

In terms of availability, benzoyl peroxide, 1,1,3,3-tetramethylbutyl peroxy 2-ethylhexanoate, 2,2'-azobisisobutyronitrile, 2,2'-azobis(2-methylbutyronitrile), 2,2'-azobis(2,4-dimethylvaleronitrile), and 2,2'-azobis(2,4-dimethyl-4-methoxyvaleronitrile) are preferred.

The radical polymerization initiator can be used alone or in combination of two or more kinds thereof.

An amount of the radical polymerization initiator to be added is preferably 0.0001 part by mass or more and 10 parts by mass or less with respect to 100 parts by mass of the total amount of the macromonomer (b1) and comonomer (b2), from the viewpoint of controlling the heat generated by polymerization.

A polymerization temperature in the suspension polymerization is not particularly limited, and is generally 50°C to 120°C. In the suspension polymerization, a chain transfer agent can be used depending on the purpose. Examples of the chain transfer agent include mercaptan, α-methylstyrene dimer, and terpenoid.

### [Additive (E)]

An additive (E) can be added to the resin composition according to the present invention, if necessary. Examples of the additive (E) include: an antioxidant, an ultraviolet absorber, and various stabilizers such as a heat stabilizer; a colorant such as an inorganic pigment, an organic pigment, a dye etc.; a conductivity imparting agent such as carbon black, ferrite, etc.; an inorganic filler; a lubricant; a release agent; a plasticizer; an organic peroxide; a neutralizing agent; a crosslinking agent; and a strengthening agent.

A ratio of the additive (E) is preferably 0 mass% to 20 mass%, and more preferably 0 mass% to 10 mass%, with respect to 100 mass% of the resin composition.

### [[Physical Properties of Resin Composition]]

The physical properties of the resin composition according to the second aspect of the present invention are not particularly limited, but preferably have the following physical properties.

### •Charpy Impact Strength

The Charpy impact strength of the resin composition is preferably 3 kJ/m² or more, more preferably 5 kJ/m² or more, even more preferably 8 kJ/m² or more, and particularly preferably 10 kJ/m² or more, as compared with the Charpy impact strength of the polycarbonate resin (A) alone. The higher the value, the more excellent the impact resistance of the resin composition. The Charpy impact strength is specifically measured by a method to be described later.

### •Flexural Modulus

The flexural modulus of the resin composition is preferably 2400 MPa or more, more preferably 2500 MPa or more, even more preferably 2600 MPa or more, and particularly preferably 3000 MPa or more. When the flexural modulus is equal to or more than the lower limit, the resin composition has excellent rigidity. The upper limit of the flexural modulus is generally about 10000 MPa. The flexural modulus is specifically measured by a method to be described later.

### •Transparency

The haze of a 2 mm-thick plate-shaped molded article of the resin composition at room temperature of 23°C is preferably less than 5.0%, and more preferably less than 1.5%. The haze at 80°C is preferably less than 7.0%, and more preferably less than 2.0%. When the haze is less than the upper limit, the transparency of the resin composition is excellent. An absolute value of a difference between the haze at a room temperature of 23°C and the haze at 80°C of the 2 mm-thick plate-shaped molded article of the resin composition is preferably 7.0 or less, and more preferably 2.0 or less. When the absolute value of the haze difference is less than the upper limit, the resin composition is excellent in prevention of a change in transparency depending on the temperature. The haze is specifically measured by a method to be described later.

### [Method for Producing Resin Composition]

The resin composition according to the present invention can be produced, for example, by a method of mechanically melt-kneading the above components. Examples of a melt kneader that can be used here include a single-screw extruder, a twin-screw extruder, a brabender, a Banbury mixer, a kneader blender, and a roll mill. The lower limit of a kneading temperature is generally 100°C or higher, preferably 145°C or higher, and more preferably 160°C or higher. The upper limit of the kneading temperature is generally 350°C, preferably 300°C, and more preferably 250°C. For kneading, each component may be kneaded all at once, or a multi-stage divided kneading method may be used in which optional components are kneaded and then other remaining components are added and kneaded.

### [Method for Producing Molded Article]

The resin composition according to the present invention can be processed into various molded articles by a molding method such as injection molding (an insert molding method, a two-color molding method, a sandwich molding method, a gas injection molding method, etc.), an extrusion molding method, an inflation molding method, a T-die film molding method, a laminate molding method, a blow molding method, a hollow molding method, a compression molding method, and a calender molding method. The shape of the molded article is not particularly limited, and examples thereof include a sheet shape, a film shape, a plate shape, a particulate shape, a lump shape, a fiber shape, a rod shape, a porous body shape, and a foam shape. Preferred are a sheet shape, a film shape, and a plate shape. A molded film can be uniaxially or biaxially stretched. Examples of the stretching method include a roll method, a tenter method, and a tubular method. Further, a surface treatment such as a corona discharge treatment, a flame treatment, a plasma treatment, or an ozone treatment, which is generally used industrially, may be performed.

### [Use]

The use of the molded article containing the resin composition according to the present invention is not particularly limited, and examples thereof include the following use. That is, examples thereof include: a wire, a cord, a covering material for wire harnesses, an insulating sheet, a display and a touch panel of OA equipment, a membrane switch, a photo cover, a relay component, a coil bobbin, an IC socket, a fuse case, a camera pressure plate, an FDD collet, and a floppy hub in the field of electrical and electronic components; an optical disc substrate, an optical disc pickup lens, an optical lens, an LCD substrate, a PDP substrate, a television screen for projection television, a retardation film, a fog lamp lens, an illumination switch lens, a sensor switch lens, a Fresnel lens, a protective glass, a projection lens, a camera lens, a sunglass, a light guide plate, a camera strobe reflector, an LED reflector in the field of optical components; a headlamp lens, a winker lamp lens, a tail lamp lens, a resin window glass, a meter cover, an outer panel, a door handle, a rear panel, a wheel cap, a visor, a roof rail, a sunroof, an instrument panel, panels, an in-vehicle display, a control cable covering material, an airbag cover, a mudguard, a bumper, a boot, an air hose, lamp packings, gaskets, various moldings such as a window molding, a sight shield, a weather strip, a glass run channel, grommets, and a vibration control and sound insulation material in automobile components; a joint material, a handrail, a window, a table edge material, a sash, a bathtub, a window frame, a signboard, a lighting cover, a water tank, a stair wainscot, a carport, a highway noise barrier, a multi-wall sheet, a steel wire covering material, a lighting globe, a switch breaker, a protective cover for a machine tool, an industrial deep drawing vacuum molded container, and a pump housing in the field of building materials; various packings, grips, belts, a rubber foot, a roller, a protector, a suction cup, gaskets for a refrigerators, switches, a connector cover, a game machine cover, a pachinko machine, an OA housing, a notebook PC housing, an HDD head tray, a window of instruments, a transparent housing, an OA geared roller, a switch case slider, a gas cock knob, a clock frame, a clock register, an amber cap, various rolls for OA equipment, tubular molded articles such as a hose and a tube, an irregular-shaped extrusion product, a leather product, an articulator, toys such as dolls with a soft touch, general household goods such as a pen grip, a strap, a suction cup, a watch, an umbrella bone, a cosmetic case, and a toothbrush pattern, containers such as a houseware and a Tupperware, a bundling band, and various bottles such as a blow molded infusion bottle, a food bottle, a water bottle, a personal care bottle for cosmetics in the field of home appliances and light electrical appliances; and a catheters, a syringe, a syringe gasket, an drip tube, a tube, a port, a cap, a rubber stopper, a dialyzer, a blood connector, a denture, and a disposable container. In addition, the molded article can also be applied to use by foam molding.

The use of the molded article containing the resin composition according to the present invention in the field of film and sheet is not particularly limited, and examples thereof include the following use. That is, examples thereof include: a packaging for food and household goods such as a stretch film for packaging, a wrap film for business or household, a pallet stretch film, a stretch label, a shrink film, a shrink label, a sealant film, a retort film, a retort sealant film, an aroma-retaining heat seal film, an A-PET sealant, a container and a lid for frozen food, a cap seal, a thermal bonding film, a thermal adhesive film, a heat sealing film, a bag-in-box sealant film, a retort pouch, a standing pouch, a spout pouch, a laminated tube, a heavy duty bag, and a fiber packaging film; an agricultural film such as a house film and a mulch film; a medical film and sheet such as an infusion bag, high-calorie infusion and peritoneal dialysis (CAPD), a multi-chamber container such as an antibiotic kit bag, a drainage bag for peritoneal dialysis, a blood bag, an urine bag, a surgical bag, an ice pillow, an ampoule case, a PTP packaging; a construction material such as a civil engineering waterproof sheet, a waterproof material, a mat, a joint material, a floor material, a roofing, a decorative film, a skin film, and a wallpaper; an automobile component such as a leather, a ceiling material, a trunk room lining, an interior skin material, an anti-vibration sheet, and a sound insulation sheet; a light electric appliance such as a display cover, a battery case, a mouse pad, a mobile phone case, an IC card case, a floppy disk case, and a CD-ROM case; a toiletry or sanitary such as a toothbrush case, a puff case, a cosmetic case, a medicine case for eye drops, a tissue case, and a face pack; an office supply such as a stationery film and sheet, a clear file, a pen case, a notebook cover, a desk mat, a keyboard cover, a book cover, and a binder; a general household good such a furniture leather, a toy such as a beach ball, a rain gear such as an umbrella and a raincoat, a table cloth, a blister package, a bath lid, a towel case, a fancy case, a tag case, a pouch, an amulet bag, an insurance card cover, a passbook case, a passport case, and a cutlery case; a retroreflective sheet; and synthetic paper. Examples of an adhesive composition in the field of film and sheet in which an adhesive is applied to a base material to impart adhesiveness include a carrier tape, an adhesive tape, a marking film, a semiconductor or glass dicing film, a surface protective film, a steel plate and plywood protective film, an automotive protective film, a packaging and bunding adhesive tape, an office and home adhesive tape, a bonding adhesive tape, a paint masking adhesive tape, a surface protection adhesive tape, a sealing adhesive tape, an anti-corrosion and waterproof adhesive tape, an electrical insulating adhesive tape, an electronic device adhesive tape, a patch film, a medical and sanitary material adhesive tape such as a bandage base film, an identification and decorative adhesive tape, a display tape, a packaging tape, a surgical tape, and a label adhesive tape.

### [Film]

Among the various uses described above, the resin composition according to the present invention is particularly useful as a molding material of a film because of excellent transparency, color tone, mechanical properties, heat resistance, wet heat resistance, and dry heat resistance.

The film containing the resin composition according to the present invention may be a single layer film made of the resin composition according to the present invention, or a laminated film of two or more layers formed with another resin composition by coextrusion.

Such a film is useful as an original film for processing and molding into a container to be described later, or as a protective film for a display surface of an electronic device, a mobile phone, a smartphone, and the like. The excellent transparency of the film does not impair visibility of the display surface under the film, and the excellent impact resistance of the film provides excellent protection for equipment. Further, such a film can withstand long-term use in various environments because of excellent long-term wet heat resistance and long-term dry heat resistance.

A third aspect of the present invention relates to a macromonomer copolymer having a specific structure. The macromonomer copolymer according to the third aspect of the present invention is a macromonomer copolymer containing a unit derived from the macromonomer (b1) of formula (2) and a unit derived from the comonomer (b2) which is copolymerizable with the macromonomer (b 1), and the unit derived from the macromonomer (b1) includes a methyl methacrylate unit and a phenyl methacrylate unit. In a case where such a macromonomer copolymer is used, for example, when the macromonomer copolymer is used as an impact modifier for a thermoplastic resin, the impact resistance can be improved while the transparency of the thermoplastic resin is maintained in a wide temperature range.

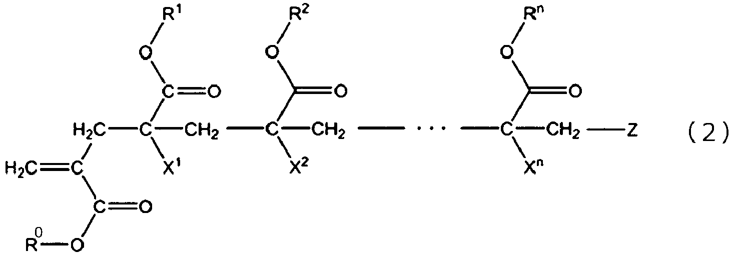

In formula (2), R⁰ to Rⁿ are each independently a hydrogen atom, an alkyl group, a cycloalkyl group, an aryl group, or a heterocyclic group. X¹ to Xⁿ are each independently a hydrogen atom or a methyl group. Z is a terminal group. n is a natural number of 2 to 10,000. At least one of R⁰ to Rⁿ is preferably a methyl group, and at least one of X¹ to Xⁿ is preferably a phenyl group.

A ratio of the methyl methacrylate unit based on 100 mass% of the total unit derived from the macromonomer (b1) is preferably 50 mass% or more, more preferably 60 mass% or more, and particularly preferably 70 mass% or more. In this case, the glass transition temperature of the macromonomer copolymer can be improved and the compatibility with the thermoplastic resin is excellent.

A ratio of the phenyl methacrylate based on 100 mass% of the total unit derived from the macromonomer (b1) is preferably 2 mass% or more, more preferably 5 mass% or more, and particularly preferably 10 mass% or more. When the ratio of the phenyl methacrylate based on the macromonomer (b1) is 2 mass% or more, the compatibility of the macromonomer (b1) with the polycarbonate resin (A) can be improved, and the refractive index can be easily adjusted. A ratio of the phenyl methacrylate based on 100 mass% of the total unit derived from the macromonomer (b1) is preferably 70 mass% or less, more preferably 50 mass% or less, and particularly preferably 30 mass% or less. When the ratio of the phenyl methacrylate based on the unit derived from the macromonomer (b1) is 70 mass% or less, yellowing of the resin composition can be prevented in a case where the macromonomer copolymer is used as a resin modifier.

In the macromonomer copolymer according to the third aspect of the present invention, the unit derived from the comonomer (b2) preferably includes an alkyl acrylate unit in which homopolymer Tg is lower than 0°C and an aromatic vinyl unit. In this case, the impact resistance of the macromonomer copolymer can be further improved. Suitable examples of the alkyl acrylate in which homopolymer Tg is lower than 0°C include 2-ethylhexyl acrylate, 4-hydroxybutyl acrylate, n-butyl acrylate, n-propyl acrylate, ethyl acrylate, and 2-hydroxyethyl acrylate. Alternatively, methyl acrylate, ethyl acrylate, and n-butyl acrylate are preferred since the compatibility with the unit derived from the macromonomer (b 1) and the unit derived from the comonomer (b2) can be improved and the transparency and impact resistance of the resin composition using the macromonomer copolymer and the molded article therefrom can be improved. Examples of the aromatic vinyl include styrene, α-methylstyrene, o-methylstyrene, p-methylstyrene, o-ethylstyrene, p-ethylstyrene, p-t-butylstyrene, vinylethylbenzene, vinyltoluene, vinylxylene, vinylnaphthalene, diphenylethylene, and divinylbenzene. Among them, styrene is preferred from the viewpoint of practical properties and productivity. These can be used alone or in combination of two or more kinds thereof.

A ratio of the alkyl acrylate unit in which homopolymer Tg is lower than 0°C based on 100 mass% of the total unit derived from the macromonomer (b 1) is preferably 50 mass% or more, more preferably 60 mass% or more, and particularly preferably 70 mass% or more. In this case, the transparency and impact resistance of the resin composition using the macromonomer copolymer and the molded article therefrom becomes good.

A ratio of the aromatic vinyl based on 100 mass% of the total unit derived from the comonomer (b2) is preferably 10 mass% or more, more preferably 15 mass% or more, even more preferably 20 mass% or more, and particularly preferably 26 mass% or more. When the ratio of the aromatic vinyl is 10 mass% or more, the transparency of the resin composition and the molded article therefrom is good. When the acrylate in which the glass transition temperature of a homopolymer is low and the aromatic vinyl are used as the comonomer (b2), the ratio of the aromatic vinyl based on 100 mass% of the total comonomer (b2) is preferably 50 mass% or less, more preferably 45 mass% or less, and particularly preferably 40 mass% or less. When the ratio of the aromatic vinyl is 50 mass% or less, the weather resistance is good.

As a method for producing the macromonomer copolymer for the third aspect, a method same as that for the macromonomer copolymer used in the polycarbonate resin composition according to the first and second aspects can be used.

The macromonomer copolymer according to the third aspect of the invention can be used as an impact strength modifier for a thermoplastic resin. In particular, since the resin composition can achieve both impact resistance and transparency in a wide temperature range, the resin composition can be suitably used as an impact strength modifier for a polycarbonate resin.

### Examples

The present invention will be described in more detail below with reference to Examples and Comparative Examples, but the present invention is not limited to the following Examples.

In Examples, "part" represents "part by mass" or "part by weight".

### <Evaluation Method>

Evaluations in Examples and Comparative Examples were carried out by the following methods.

### (Mass Average Molecular Weight (Mw) and Number Average Molecular Weight (Mn) of Macromonomer (b1))

The mass average molecular weight (Mw) and number average molecular weight (Mn) of the macromonomers (b1) obtained in Examples and Comparative Examples were measured using gel permeation chromatography (GPC). In 10 ml of tetrahydrofuran, 10 mg of obtained copolymer was dissolved, and the solution was filtered through a 0.45 µm filter to obtain a sample for GPC measurement.

A gel permeation chromatography measurement device (model name: HLC-8320 type, manufactured by Tosoh Corporation) was used with a polymer measurement guard column (trade name: TSK-GUARD COLUMN SUPER H-H, manufactured by Tosoh Corporation) and two polymer measurement columns (trade name: TSK-GEL SUPER HM-H, manufactured by Tosoh Corporation) connected in series.

A differential refractometer (RI) was used as a detector. The measurement was performed under the conditions of separation column temperature: 40°C, mobile phase: tetrahydrofuran, mobile phase flow rate: 0.6 mL/min, and sample injection amount: 10 µl. Using several types of polymethyl methacrylate with known molecular weights (manufactured by Polymer Laboratories, peak molecular weight (Mp): 1,560 to 19,500,000) as standard polymers, a calibration curve was created to determine Mw and Mn.

### (Mass Average Molecular Weight (Mw) and Number Average Molecular Weight (Mn) of Macromonomer Copolymer)

The mass average molecular weight (Mw) and number average molecular weight (Mn) of the macromonomer copolymers obtained in Examples and Comparative Examples were measured using gel permeation chromatography (GPC). In 10 ml of tetrahydrofuran, 10 mg of obtained copolymer was dissolved, and the solution was filtered through a 0.45 µm filter to obtain a sample for GPC measurement. In the GPC measurement of the copolymer, a high-performance liquid chromatography measurement device (model name: HLC-8320 type, manufactured by Tosoh Corporation) was used with a polymer measurement guard column (trade name: TSK-GUARD COLUMN SUPER H-H, manufactured by Tosoh Corporation) and one ultra-high molecular weight measurement column (trade name: TSK-GEL GMHHR-H, manufactured by Tosoh Corporation) connected in series.

A differential refractometer (RI) was used as a detector. The measurement was performed under the conditions of separation column temperature: 40°C, mobile phase: tetrahydrofuran, mobile phase flow rate: 0.6 mL/min, and sample injection amount: 10 µl. Using several types of polymethyl methacrylate with known molecular weights (manufactured by Polymer Laboratories, peak molecular weight (Mp): 1,560 to 19,500,000) as standard polymers, a calibration curve was created to determine a mass average molecular weight (Mw) and a Number Average Molecular Weight (Mn), which are relative molecular weights in terms of polymethyl methacrylate.

### (Charpy Impact Test)

As an indicator of impact resistance of molded articles obtained in Examples and Comparative Examples, a Charpy impact strength (unit: kJ/m²) was measured in accordance with JIS K7111-1/leA (with V notch, notch tip diameter r = 0.25) by using a Charpy impact tester (trade name: DG-CP, manufactured by Toyo Seiki Co., Ltd.). Five samples were tested using a 15 J hammer, and an average value was obtained.

### (Flexural ModulusTest)

As an index of rigidity of the molded articles obtained in Examples and Comparative Examples, a flexural modulus (unit: MPa) of the rod-shaped molded article as a test piece was measured in accordance with JIS K7171 by using a Tensilon Universal Testing Machine (trade name: RTC- 1250A, manufactured by Orientec Co., Ltd.). The flexural modulus was obtained based on a stress-strain curve obtained at room temperature of 23°C and a test speed of 2 mm/min.

### (Haze Evaluation)

As an index of transparency of the 2 mm-thick plate-shaped molded articles obtained in Examples and Comparative Examples, a haze (unit: %) of the plate-shaped molded article as a test piece was measured at room temperature of 23°C and 80°C in accordance with JIS K7316 by using a haze meter (device name: NDH 2020, manufactured by Nippon Denshoku Industries Co., Ltd.). In the measurement at 80°C, the plate-shaped molded article was allowed to stand still in an environment of 80°C for 1 hour, and then immediately measured.

A haze value at room temperature of 23°C was evaluated in three stages according to the following criteria.
A: The haze is 0.0 or more and less than 1.5%
B: The haze is 1.5% or more and less than 5.0%
C: The haze is 5% or more

A haze value at room temperature of 80°C was evaluated in three stages according to the following criteria.
A: The haze is 0.0% or more and less than 2.0%
B: The haze is 2.0% or more and less than 7.0%
C: The haze is 7.0% or more

An absolute value of a difference between the haze value at room temperature of 23°C and the haze value at room temperature of 80°C was evaluated in three stages according to the following criteria.
A: The absolute value of the haze difference is 0.0% or more and less than 2.0%
B: The absolute value of the haze difference is 2.0% or more and less than 7.0%
C: The absolute value of the haze difference is 7.0% or more

### (Refractive Index Measurement)

Refractive indices of polymers obtained in Examples and Comparative Examples were measured with an Abbe refractometer using a D line of a sodium spectrum at a temperature of 20°C. The refractive index measured under the above conditions is represented by nD20. The refractive index of a homopolymer of the comonomer was measured by using a model polymer having the same monomer composition and prepared by polymerizing only the comonomer separately.

### (Melt Viscosity Measurement)

Each of resin compositions obtained in Examples and Comparative Examples was supplied to a capillary rheometer (model name: "twin capillary rheometer RH 7", manufactured by ROSAND), and a melt viscosity was measured at 240°C and a shear rate of 1000 sec⁻¹, which was used as an index of melt fluidity.

The melt viscosity was evaluated in two stages according to the following criteria.
A: The melt viscosity is less than 400 Pa·s
B: The melt viscosity is 400 Pa·s or more

### [Production Example of Polycarbonate Resin]

### [Raw Material to be Used]

The abbreviations of compounds used in the following Production Examples and manufacturers are as follows.

### <Dihydroxy Compound>

ISB: isosorbide [manufactured by Roquette Freres]
CHDM: 1,4-cyclohexanedimethanol [manufactured by SK Chemicals]
TCDDM: tricyclodecanedimethanol [manufactured by OXEA]

### <Carbonic acid diester>

DPC: diphenyl carbonate [manufactured by Mitsubishi Chemical Corporation]

### <Catalyst Deactivator>

Phosphorous acid [manufactured by Taihei Chemical Industrial Co., Ltd.] (molecular weight 82.0)

### <Heat Stabilizer (Antioxidant)>

Irganox 1010: pentaerythritol-tetrakis[3-(3,5-di-tert-butyl-4-hydroxyphenyl)propionate] [manufactured by BASF]
AS2112: tris(2,4-di-tert-butylphenyl)phosphite [manufactured by ADEKA Corporation] (molecular weight 646.9)

### <Release Agent>

E-275: ethylene glycol distearate [manufactured by NOF Corporation]

### [Production Example 1 Polycarbonate Resin (A-1)]

The polycarbonate resin was polymerized using a continuous polymerization facility including three vertical stirring reactors, one horizontal stirring reactor, and a twin-screw extruder. Specifically, firstly, ISB, CHDM, and DPC were melted in tanks, respectively, and ISB, CHDM, and DPC were continuously supplied to a first vertical stirring reactor at flow rates of 35.2 kg/hr, 14.9 kg/hr, and 74.5 kg/hr, respectively (ISB/CHDM /DPC = 0.700/0.300/1.010 in molar ratio). At the same time, an aqueous solution of calcium acetate monohydrate was supplied to the first vertical stirring reactor such that an amount of calcium acetate monohydrate to be added as a catalyst was 1.5 µmοl with respect to 1 mol of total dihydroxy compound. The reaction temperature, internal pressure, and residence time in each reactor were set to 190°C, 25 kPa, and 90 minutes in the first vertical stirring reactor, 195°C, 10 kPa, and 45 minutes in a second vertical stirring reactor, 210°C, 3 kPa, and 45 minutes in a third vertical stirring reactor, and 225°C, 0.5 kPa, and 90 minutes in a fourth horizontal stirring reactor, respectively. Operation was performed while finely adjusting the internal pressure in the fourth horizontal stirring reactor such that a reduced viscosity of a polycarbonate resin to be obtained was 0.41 dL/g to 0.43 dL/g.

The polycarbonate resin was withdrawn from the fourth horizontal stirring reactor at a rate of 60 kg/hr, and then supplied to a vent type twin-screw extruder [TEX30α manufactured by Japan Steel Works, LTD., L/D: 42.0, L (mm): screw length, D (mm): screw diameter] in a molten state.

The polycarbonate resin passed through the extruder was continuously passed through a candle-shaped filter (made of SUS316) with an opening of 10 µm in a molten state to filter out foreign matters. Thereafter, the polycarbonate resin was discharged from the dice in a form of strands, cooled with water, solidified, and pelletized with a rotary type cutter to obtain a polycarbonate resin having a molar ratio of ISB/CHDM of 70/30 mol%. In Table 3, the obtained polycarbonate resin was indicated as "(A-1)".

The refractive index of the polycarbonate resin (A-1) was measured with an Abbe refractometer, and was 1.502 (nD20).

The extruder had three vacuum vent ports where residual low molecular weight components in the resin were devolatilized. Before a second vent, 2000 ppm by weight of water was added to the resin to devolatilize the resin. Before a third vent, 0.1 part by weight, 0.05 part by weight, and 0.3 part by weight of Irganox 1010, AS2112 and E-275 were added to 100 parts by weight of the polycarbonate resin, respectively. As described above, ISB/CHDM copolymer polycarbonate resin pellets were obtained. As a catalyst deactivator, 0.65 ppm by weight of phosphorous acid (0.24 ppm by weight in terms of phosphorus atoms) was added to the polycarbonate resin. The phosphorous acid was added as follows. A masterbatch was prepared by sprinkling and mixing the polycarbonate resin pellets obtained in Production Example 1 with an ethanol solution of phosphorous acid, and from before a first vent port of the extruder (a side of a resin supply port of the extruder), 1 part by weight of the masterbatch was supplied to 100 parts by weight of the polycarbonate resin in the extruder.

### [Production Example 2 Polycarbonate Resin (A-2)]

Into a polymerization reaction device including a stirring blade and a reflux condenser controlled at 100°C, isosorbide (ISB), tricyclodecanedimethanol (TCDDM), and diphenyl carbonate (DPC) and calcium acetate monohydrate which were purified by distillation to reduce a chloride ion concentration to 10 ppb or less were charged such that a molar ratio of ISB/TCDDM/DPC/calcium acetate monohydrate = 0.7/0.3/1.00/1.3 × 10⁻⁶, and the mixture was sufficiently substituted with nitrogen (oxygen concentration: 0.0005 vol% to 0.001 vol%). Subsequently, the content was heated with a heating medium.

Stirring was started when the internal temperature reached 100°C, and the content was melted and made uniform while controlling the internal temperature to 100°C. Thereafter, the temperature was started to increase, and the internal temperature reached 210°C in 40 minutes.

When the internal temperature reached 210°C, control was performed so as to maintain the temperature, at the same time, the pressure was reduced to 13.3 kPa in 90 minutes after reaching the temperature to 210°C, and the internal temperature was maintained for another 60 minutes while maintaining the pressure. A phenol vapor produced as a by-product in the polymerization reaction was introduced to a reflux condenser. Components condensed in the reflux condenser were returned to the polymerization reaction device, and an uncondensed phenol vapor was subsequently introduced to a condenser using hot water of 45°C as a refrigerant and recovered.

Once a pressure in the polymerization reaction device was restored to an atmospheric pressure, the oligomerized content was transferred to another polymerization reactor including a stirring blade and a reflux condenser controlled in the same manner as described above, and the internal temperature was increased to 220°C and the pressure was reduced to 200 Pa in 60 minutes. Thereafter, the internal temperature was increased to 228°C and the pressure was reduced to 133 Pa or less over 20 minutes, and the pressure was restored when a predetermined stirring power was reached, thereby obtaining a polycarbonate copolymer in a molten state from an outlet of the polymerization reaction device.

Further, the polycarbonate copolymer in a molten state was continuously supplied to a twin-screw extruder including three vent ports and a water injection facility, an antioxidant and a release agent were continuously added thereto, and after a low molecular weight compound such as phenol was volatilized under a reduced pressure at each vent portion provided in the twin-screw extruder, pelletization was performed with a pelletizer to obtain a polycarbonate resin having a molar ratio of ISB/TCDDM of 70/30 mol%. In Table 4, the obtained polycarbonate resin was indicated as "(A-2)".

The refractive index of the polycarbonate resin (A-2) was measured with an Abbe refractometer, and was 1.510 (nD20).

### [Production Example of Macromonomer (b1) and Macromonomer Copolymer]

### [Raw Material to be Used]

The abbreviations of compounds used in the following Production Examples and manufacturers are as follows.
MMA: methyl methacrylate [manufactured by Mitsubishi Chemical Corporation]
HEMA: 2-hydroxyethyl methacrylate [manufactured by Mitsubishi Chemical Corporation]
PHMA: phenyl methacrylate [manufactured by Mitsubishi Chemical Corporation]
MA: methyl acrylate [manufactured by Mitsubishi Chemical Corporation]
AMBN: 2,2'-azobis(2-methylbutyronitrile) [product name: V59, manufactured by FUJIFILM Wako Pure Chemical Corporation]
BA: n-butyl acrylate [manufactured by Mitsubishi Chemical Corporation]

### [Production Example 3: Synthesis of Dispersant (1)]

Into a reaction device including a stirrer, a cooling tube, and a thermometer, 61.6 parts of a 17 mass% aqueous potassium hydroxide solution, 19.1 parts of methyl methacrylate, and 19.3 parts of deionized water were charged. Next, a solution in the reaction device was stirred at room temperature, and after confirming an exothermic peak, the solution was stirred for 4 hours. Thereafter, the reaction solution in the reaction device was cooled to room temperature to obtain an aqueous potassium methacrylate solution.

Next, 900 parts of deionized water, 70 parts of a 42 mass% aqueous sodium 2-sulfoethyl methacrylate solution (trade name: ACRYESTER SEM-Na, manufactured by Mitsubishi Chemical Corporation), 16 parts of the above aqueous potassium methacrylate solution, and 7 parts of methyl methacrylate were placed and stirred in a polymerization device including a stirrer, a cooling tube, and a thermometer, and a temperature of the solution in the reaction device was increased to 50°C while the inside of the polymerization device was substituted with nitrogen. To the polymerization device, 0.053 part of V-50 (trade name, 2,2'-azobis(2-methylpropionamidine) dihydrochloride, manufactured by FUJIFILM Wako Pure Chemical Corporation) as a polymerization initiator was added, and the solution in the reaction device was heated to 60°C. After the polymerization initiator was added, 1.4 parts of methyl methacrylate was dividedly added five times (total amount of methyl methacrylate: 7 parts) every 15 minutes. Thereafter, the solution in the polymerization device was held at 60°C for 6 hours with stirring, and then cooled to room temperature to obtain a dispersant (1), which is a transparent aqueous solution and has a solid content of 8 mass%.

### [Production Example 4: Synthesis of Chain Transfer Agent (1)]

Into a synthesis device including a stirrer, 2.00 g (8.03 mmol) of cobalt(II) acetate tetrahydrate (manufactured by FUJIFILM Wako Pure Chemical Corporation, Wako special grade), 3.86 g (16.1 mmol) of diphenylglyoxime (manufactured by Tokyo Chemical Industry Co., Ltd., EP grade), and 100 ml of diethyl ether previously deoxygenated by nitrogen bubbling were placed under a nitrogen atmosphere, followed by stirring at room temperature for 2 hours.

Next, 20 ml of a boron trifluoride diethyl ether complex (manufactured by Tokyo Chemical Industry Co., Ltd., EP grade) was added thereto, followed by further stirring for 6 hours. The obtained product was filtered, and the solid was washed with diethyl ether and dried at 100 MPa or less at 20°C for 12 hours to obtain 5.02 g (7.93 mmol, yield: 99 mass%) of a chain transfer agent (1) as a liver brown color solid.

### [Production Example 5: Synthesis of Macromonomer (b1-1)]

Into a polymerization device including a stirrer, a cooling tube, and a thermometer, 145 parts of deionized water, 0.13 part of sodium sulfate (Na₂SO₄), and 0.26 part of the dispersant (1) (solid content: 10 mass%) produced in Production Example 2 were added, followed by stirring to form a uniform aqueous solution. Next, 75 parts of MMA, 10 parts of PHMA, 10 parts of HEMA, 5 parts of MA, 0.0020 part (20 ppm) of the chain transfer agent (1) produced in Production Example 2, and 0.4 part of Perocta O (trade name: 1,1,3,3-tetramethylbutylperoxy 2-ethylhexanoate, manufactured by NOF Corporation) as a polymerization initiator were added to prepare an aqueous dispersion.

Next, the inside of the polymerization device was sufficiently substituted with nitrogen, and the aqueous dispersion was heated to 80°C and held for 4 hours, then heated to 92°C and held for 2 hours. Thereafter, the reaction solution was cooled to 40°C to obtain an aqueous suspension of a macromonomer. The aqueous suspension was filtered with a filter cloth, and the filtrate was washed with deionized water and dried at 40°C for 16 hours to obtain a macromonomer (b1-1). The macromonomer (b1-1) had an Mn of 18,500, an Mw of 33,800, and an Mw/Mn of 1.82. A thin film obtained by hot-press molding the macromonomer (b1-1) was used, and a refractive index measured with an Abbe refractometer was 1.500.

### [Production Example 6 to Production Example 11: Synthesis of Macromonomers (b 1-2 to b 1-7)]

Macromonomers (b 1-2 to b1-7) were synthesized in the same manner as in Production Example 4, except that charging conditions were changed to those shown in Table 1. The synthesis results were summarized in Table 1.

**Table 1**

| | | | Unit | Production Example 5 | Production Example 6 | Production Example 7 | Production Example 8 | Production Example 9 | Production Example 10 | Production Example 11 |
|---|---|---|---|---|---|---|---|---|---|---|
| Name of macromonomer (b1) | | | - | b1-1 | b1-2 | b1-3 | b1-4 | b1-5 | b1-6 | b1-7 |
| Preparation | Monomer | MMA | Part by mass | 75 | 81 | 81 | 85 | 95 | 95 | 70 |
| | | PHMA | Part by mass | 10 | 14 | 14 | 10 | | | 25 |
| | | HEMA | Part by mass | 10 | | | | | | |
| | | MA | Part by mass | 5 | 5 | 5 | 5 | 5 | 5 | 5 |
| | Chain transfer catalyst | Chain transfer agent (1) | Part by mass | 0.0020 | 0.0015 | 0.0010 | 0.0015 | 0.0015 | 0.0030 | 0.0015 |
| | Polymerization initiator | Perocta O | Part by mass | 0.40 | 0.30 | 0.30 | 0.30 | 0.30 | 0.10 | 0.30 |
| Polymerization result | GPC | Number average molecular weight Mn | | 18,500 | 20,700 | 38,200 | 22,500 | 21,800 | 12,300 | 28,200 |
| | | Mass average molecular weight Mw | | 33,800 | 38,000 | 65,500 | 39,900 | 38,700 | 21,200 | 49,300 |
| Refractive index nD 20°C | | | | 1.500 | 1.501 | 1.501 | 1.498 | 1.491 | 1.491 | 1.510 |
| Glass transition temperature Tg [°C] | | | | 94 | 99 | 99 | 99 | 99 | 99 | 100 |

### <Production Example 12: Synthesis of Macromonomer Copolymer (B-1)>

In order to prepare an aqueous dispersion medium for suspension polymerization, 145 parts of deionized water, 0.13 part of sodium sulfate, and 0.26 part of the dispersant (1) produced in Production Example 2 were mixed. Into a separable flask with a cooling tube, 40 parts of the macromonomer (b1-1), 45 parts of BA as the comonomer (b2), and 15 parts of styrene (manufactured by FUJIFILM Wako Pure Chemical Corporation), totaling 100 parts, were charged and heated to 60°C with stirring to obtain a raw material syrup. After cooling the raw material syrup to 40°C or lower, 0.5 part of AMBN was dissolved in the raw material syrup to obtain a syrup.

Next, after adding the aqueous dispersion medium for suspension polymerization to the syrup, a stirring rotation speed was increased while the atmosphere in the separable flask was substituted with nitrogen by nitrogen bubbling to obtain a syrup dispersion. The temperature of the syrup dispersion was increased to 82°C and maintained for 5 hours. Thereafter, the temperature of the syrup dispersion was increased to 90°C and maintained for 30 minutes to complete the polymerization and obtain a suspension.

After cooling the suspension to 40°C or lower, the suspension was filtered with a filter cloth, the filtrate was washed with deionized water, dried at 40°C for 16 hours to obtain a macromonomer copolymer (B-1). The macromonomer copolymer (B-1) had Mn of 67,700, Mw of 650,800, and Mw/Mn of 3.53. The refractive index of a homopolymer of the comonomer (b2) was 1.497.

### [Production Example 13 to Production Example 21: Synthesis of Macromonomer Copolymers (B-2 to B-10)]

Macromonomer copolymers (B-2 to B-10) were synthesized in the same manner as in Production Example 12, except that charging conditions were changed to those shown in Table 2. The synthesis results were summarized in Table 2.

**Table 2**

| | | | | Unit | Production Example 12 | Production Example 13 | Production Example 14 | Production Example 15 | Production Example 16 | Production Example 17 | Production Example 18 | Production' Example 19 | Production Example 20 | Production Example 21 |
|---|---|---|---|---|---|---|---|---|---|---|---|---|---|---|
| Name of macromonomer copolymer | | | | - | B-1 | B-2 | B-3 | B-4 | B-5 | B-6 | B-7 | B-8 | B-9 | B-10 |
| | | Macromonomer (b1) | b1-1 | Part by mass | 40 | | | | | | | | | |
| | | | b1-2 | Part by mass | | 40 | | | | | | | | |
| | | | b1-3 | Part by mass | | | 50 | | | 50 | 50 | | | |
| | | | b1-4 | Part by mass | | | | 40 | | | | | | |
| | | | b1-5 | Part by mass | | | | | 40 | | | | | |
| | Polymerizable component | | b1-6 | Part by mass | | | | | | | | 40 | | |
| | | | b1-7 | Part by mass | | | | | | | | | 40 | 50 |
| Polymerization preparation | | Comonomer (b2) | BA | Part by mass | 45 | 42.6 | 35.5 | 42.6 | 42.6 | 31 | 32.2 | 24 | 39 | 32.5 |
| | | | St | Part by mass | 15 | 17.4 | 14.5 | 17.4 | 17.4 | 5 | 7.5 | | 21 | 17.5 |
| | | | BzA | Part by mass | | | | | | 14 | 10.3 | | | |
| | | | MMA | Part by mass | | | | | | | | 36 | | |
| | Radical polymerization initiator | | AMBN | Part by mass | 0.5 | 0.5 | 0.5 | 0.5 | 0.5 | 0.5 | 0.5 | 0.3 | 0.3 | 0.3 |
| | Refractive index nD 20°C of homopolymer of comonomer (b2) | | | - | 1.497 | 1.502 | 1.502 | 1.502 | 1.502 | 1.502 | 1.502 | 1.476 | 1.510 | 1.510 |
| | Glass transition temperature Tg of homopolymer of comonomer (b2) | | | °C | -29 | -24 | -24 | -24 | -24 | -29 | -28 | -10 | -17 | -17 |
| Polymerization result | GPC | Number average molecular weight Mn | | | 67,700 | 79,200 | 95,100 | 15,100 | 74,700 | 97,000 | 93,000 | 42,400 | 91,000 | 81,100 |
| | | Mass average molecular weight Mw | | | 650,800 | 546,100 | 1,262,100 | 564,900 | 851,300 | 5,682,700 | 3,815,200 | 146,100 | 419,000 | 440,200 |
| | Melt viscosity | Temperature: 240°C | Speed: 1000/s | Pa·s | 79 | 77 | 89 | 75 | 82 | 122 | 220 | 35 | 69 | 55 |

### [Example 1]

Using a 35 mm twin-screw extruder (TEM-35B manufactured by Toshiba Machine Co., Ltd.), 93 parts of pellets of the polycarbonate resin (A-1) obtained in Production Example 1 and 7 parts of beads of the macromonomer copolymer (B-1) were melt-kneaded at a cylinder temperature of 240°C to obtain a pellet-shaped resin composition. The melt viscosity was measured using the pellet-shaped resin composition. The obtained pellet-shaped resin composition was molded with a 100-ton injection molding machine (IS-100 manufactured by Toshiba Machine Co., Ltd.) to obtain a 2 mm-thick molded article, a flexural elasticity test piece, and a Charpy impact test piece. The haze value, Charpy impact strength, and flexural modulus at 23°C and 80°C were measured from the obtained test piece. Table 3 shows the obtained results.

**Table 3**

| | | | Unit | Example 1 | Example 2 | Example 3 | Example 4 | Example 5 | Example 6 | Example 7 | Comparative Example 1 | Comparative Example 2 |
|---|---|---|---|---|---|---|---|---|---|---|---|---|
| Resin composition | Polycarbonate resin (A) | A-1 | Part by mass | 93 | 93 | 93 | 93 | 93 | 93 | 93 | 100 | 93 |
| | | | Refractive index nD20 | 1.502 | 1.502 | 1.502 | 1.502 | 1.502 | 1.502 | 1.502 | 1.502 | 1.502 |
| | Polymer (B) | B-1 | Part by mass | 7 | | | | | | | | |
| | | B-2 | Part by mass | | 7 | | | | | | | |
| | | B-3 | Part by mass | | | 7 | | | | | | |
| | | B-4 | Part by mass | | | | 7 | | | | | |
| | | B-5 | Part by mass | | | | | 7 | | | | |
| | | B-6 | Part by mass | | | | | | 7 | | | |
| | | B-7 | Part by mass | | | | | | | 7 | | |
| | | B-8 | Part by mass | | | | | | | | | 7 |
| | Refractive index difference between polycarbonate resin (A) and polymer chain (B1) | | | 0.002 | 0.001 | 0.001 | 0.004 | 0.011 | 0.001 | 0.001 | - | 0.011 |
| | Refractive index difference between polycarbonate resin (A) and polymer chain (B2) | | | 0.005 | 0.000 | 0.000 | 0.000 | 0.000 | 0.000 | 0.000 | - | 0.026 |
| Evaluation of molded article | Haze value (t = 2 mm) | 23°C | % | 1.1 | 1.0 | 1.0 | 0.9 | 1.8 | 1.2 | 1.8 | 0.3 | 9.9 |
| | | | Evaluation | A | A | A | A | B | A | A | A | C |
| | | 80°C | % | 5.8 | 1.2 | 1.2 | 1.3 | 5.1 | 1.8 | 1.5 | 0.3 | 17.9 |
| | | | Evaluation | B | A | A | A | B | A | A | A | C |
| | Absolute value of difference between haze at 23°C and haze at 80°C | | % | 4.7 | 0.2 | 0.2 | 0.4 | 3.3 | 0.6 | 0.3 | 0 | 8 |
| | | | Evaluation | B | A | A | A | B | A | A | A | C |
| | Charpy impact strength (with V notch, r = 0.25) | | kJ/m² | 18 | 18 | 15 | 11 | 18 | 22 | 17 | 7 | 5 |
| | Absolute value of Charpy impact strength difference between polycarbonate resin (A) and resin composition | | kJ/m² | 11 | 11 | 8 | 4 | 11 | 15 | 10 | - | 2 |
| | | | Evaluation | A | A | A | B | A | A | A | C | C |
| | Flexural modulus | | MPa | 2,600 | 2,500 | 2,600 | 2,400 | 2,500 | 2,500 | 2,500 | 2,700 | 2,600 |
| | | | Evaluation | A | B | A | B | B | B | B | A | B |
| | Melt viscosity (240°C, 1000/s) | | Pa-s | 321 | 328 | 314 | 323 | 333 | 371 | 344 | 526 | 255 |
| | | | Evaluation | A | A | A | A | A | A | A | B | A |

### [Example 2 to Example 7, Comparative Example 1, and Comparative Example 2]

Melt-kneading, injection molding, and evaluation of the prepared test pieces were carried out in the same manner as in Example 1, except that the resin compositions were changed to those shown in Table 3. The evaluation results were summarized in Table 3.

The Charpy impact strength of the resin composition shown in Table 3 is preferably 10 kJ/m² or more, and more preferably 15 kJ/m² or more. The Charpy impact strength of the resin composition shown in Table 3 was evaluated in three stages according to the following criteria.
A: The Charpy impact strength is 15 kJ/m² or more
B: The Charpy impact strength is 10 kJ/m² or more and less than 15 kJ/m²
C: The Charpy impact strength is less than 10kJ/m²

The flexural modulus shown in Table 3 was evaluated in three stages according to the following criteria.
A: The flexural modulus is 2600 MPa or more
B: The flexural modulus is 2400 MPa or more and less than 2600 MPa
C: The flexural modulus is less than 2400 MPa

### [Examples 8 to 9, and Comparative Example 3]

Using a 35 mm twin-screw extruder (TEM-35B manufactured by Toshiba Machine Co., Ltd.), 93 parts of pellets of the polycarbonate resin (A-2) obtained in Production Example 2 and 7 parts of beads of the macromonomer copolymer (B-9) were melt-kneaded at a cylinder temperature of 240°C to obtain a pellet-shaped resin composition. The melt viscosity was measured using the pellet-shaped resin composition. The obtained pellet-shaped resin composition was molded with a 100-ton injection molding machine (IS-100 manufactured by Toshiba Machine Co., Ltd.) to obtain a 2 mm-thick molded article, a flexural elasticity test piece, and a Charpy impact test piece. The haze value, Charpy impact strength, and flexural modulus at 23°C and 80°C were measured from the obtained test piece. Table 4 shows the obtained results.

**Table 4**

| | | | Unit | Example 8 | Example 9 | Comparative Example 3 |
|---|---|---|---|---|---|---|
| Resin composition | Polycarbonate resin (A) | A-2 | Part by mass | 93 | 93 | 100 |
| | | | Refractive index nD20 | 1.510 | 1.510 | 1.510 |
| | Polymer (B) | B-9 | Part by mass | 7 | | |
| | | B-10 | Part by mass | | 7 | |
| | Refractive index difference between polycarbonate resin (A) and polymer chain (B1) | | | 0.000 | 0.000 | - |
| | Refractive index difference between polycarbonate resin (A) and polymer chain (B2) | | | 0.000 | 0.000 | - |
| Evaluation of molded article | Haze value (t = 2 mm) | 23°C | % | 1.1 | 1.0 | 0.3 |
| | | | Evaluation | A | A | A |
| | | 80°C | % | 1.2 | 0.9 | 0.3 |
| | | | Evaluation | A | A | A |
| | Absolute value of difference between haze at 23°C and haze at 80°C | | % | 0.1 | 0.1 | 0 |
| | | | Evaluation | A | A | A |
| | Charpy impact strength (with V notch, r = 0.25) | | kJ/m² | 5 | 5 | 2 |
| | Absolute value of Charpy impact strength difference between polycarbonate resin (A) and resin composition | | kJ/m² | 3 | 3 | - |
| | | | Evaluation | A | A | B |
| | Flexural modulus | | MPa | 2,900 | 3,000 | 3,200 |
| | | | Evaluation | B | A | A |
| | Melt viscosity (240°C, 1000/s) | | Pa·s | 305 | 284 | 412 |
| | | | Evaluation | A | A | B |

The Charpy impact strength of the resin composition shown in Table 4 is preferably 5 kJ/m² or more. The Charpy impact strength shown in Table 4 was evaluated in two stages according to the following criteria.
A: The Charpy impact strength is 5 kJ/m² or more
B: The Charpy impact strength is less than 5 kJ/m²

The flexural modulus shown in Table 4 was evaluated in three stages according to the following criteria.
A: The flexural modulus is 3000 MPa or more
B: The flexural modulus is 2500 MPa or more and less than 3000 MPa
C: The flexural modulus is less than 2500 MPa

From the results of Example 1 to Example 9, a refractive index difference between the polycarbonate resin (A) and the polymer chain (B2) of the polymer (B) is small. As a result, it can be known that the haze value at 23°C and the haze value at 80°C of the molded article are both low and good transparency can be implemented in a wide operating temperature range. From the results of Example 1 to Example 9, it can be seen that the transparency at a higher level tends to be implemented as the refractive index difference between the polycarbonate resin (A) and the polymer chain (B1) decreases. Since the polymer chain (B2) of the polymer (B) had a sufficiently low glass transition temperature, the impact resistance of the molded article was good. Further, since the polymer chain (B 1) of the polymer (B) had a high Tg, the molded article achieves a good elastic modulus.

Next, from the results of Comparative Example 1, it can be seen that the impact resistance is low since the polymer (B) is not contained. Next, from Comparative Example 2, it can be seen that since the refractive index difference between the polycarbonate resin (A) and the polymer chain (B2) is large, both the haze values at 23°C and 80°C are high, and the transparency is impaired. From Comparative Example 3, it can be seen that the impact resistance is low since the polymer (B) is not contained.

Although the present invention has been described in detail with reference to the specific embodiment, it will be apparent to those skilled in the art that various changes and modifications can be made without departing from the spirit and scope of the present invention. The present application is based on Japanese patent application No.2020-198198 filed on November 30, 2020, contents of which are incorporated herein as reference.

### Industrial Applicability

According to the macromonomer copolymer of the present invention, a resin composition having both impact resistance and transparency in a wide operating temperature range and a molded article therefrom can be provided, and a macromonomer copolymer having both impact resistance and transparency in a wide operating temperature range can be provided. Therefore, the present invention has extremely high industrial applicability in the fields of a macromonomer copolymer, a resin composition, and a molded article therefrom.

## Claims

1. A resin composition, comprising a polycarbonate resin (A) and a polymer (B),
wherein the polymer (B) is a copolymer comprising a polymer chain (B1) and a polymer chain (B2),
the polymer chain (B1) has a glass transition temperature (Tg) of higher than 80°C,
the polymer chain (B2) has a glass transition temperature (Tg) of lower than 0°C, and
a refractive index difference between the polycarbonate resin (A) and the polymer chain (B2) is less than 0.026.

2. The resin composition according to claim 1, wherein the polymer (B) has a mass average molecular weight (Mw) of 20,000 to 10,000,000.

3. The resin composition according to claim 1 or 2, wherein a refractive index difference between the polycarbonate resin (A) and the polymer chain (B1) is less than 0.030.

4. The resin composition according to any one of claims 1 to 3, wherein the polymer chain (B2) comprises a radically polymerizable monomer unit containing an aromatic ring.

5. The resin composition according to any one of claims 1 to 4, wherein the polymer (B) is a block and/or graft copolymer.

6. The resin composition according to any one of claims 1 to 5, wherein the polymer (B) is a macromonomer copolymer comprising a unit derived from a macromonomer (b 1) of the following formula (2) and a unit derived from a comonomer (b2) which is copolymerizable with the macromonomer (b1), 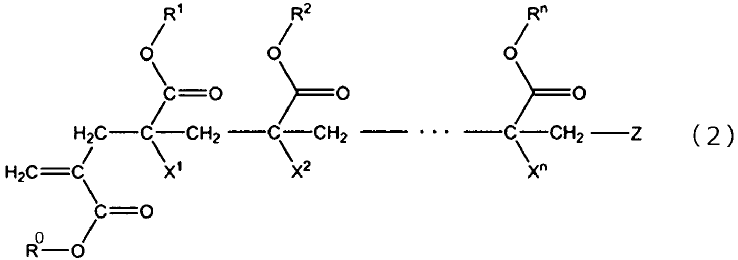 wherein in formula (2), R⁰ to Rⁿ are each independently a hydrogen atom, an alkyl group, a cycloalkyl group, an aryl group, or a heterocyclic group, X' to X¹ are each independently a hydrogen atom or a methyl group, Z is a terminal group, and n is a natural number of 2 to 10,000.

7. The resin composition according to any one of claims 1 to 6, wherein the polymer chain (B2) comprises an alkyl acrylate unit in which a glass transition temperature (Tg) of a homopolymer is lower than 0°C.

8. The resin composition according to any one of claims 1 to 7, wherein the polymer chain (B 1) comprises a methacrylate unit in which a glass transition temperature of a homopolymer is higher than 80°C.

9. The resin composition according to any one of claims 1 to 8, wherein the polymer chain (B 1) comprises a (meth)acrylate unit in which a refractive index of a homopolymer is 1.540 or more.

10. The resin composition according to any one of claims 1 to 9, which is a molding material for melt molding.

11. The resin composition according to any one of claims 1 to 10, wherein a melt viscosity measured at 240°C and a shear rate of 1000/s is less than a melt viscosity of the polycarbonate resin (A) measured under the same conditions.

12. The resin composition according to any one of claims 1 to 10, wherein a melt viscosity at 240°C and a shear rate of 1000/s is 400 Pa s or less.

13. A resin composition, comprising a polycarbonate resin (A) and a polymer (B),
wherein the polycarbonate resin (A) comprises a structural unit derived from a dihydroxy compound of the following formula (1): 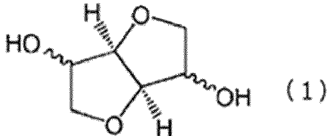
the polymer (B) is a copolymer comprising a polymer chain (B 1) and a polymer chain (B2),
the polymer chain (B 1) has a glass transition temperature (Tg) of higher than 80°C,
the polymer chain (B2) has a glass transition temperature (Tg) of lower than 0°C, and
the polymer chain (B2) comprises a radically polymerizable monomer unit containing an aromatic ring.

14. The resin composition according to claim 13, wherein the polymer (B) has a mass average molecular weight of 20,000 to 10,000,000.

15. The resin composition according to claim 13 or 14, in which the polymer (B) is a block and/or graft copolymer.

16. The resin composition according to any one of claims 13 to 15, wherein the polymer (B) is a macromonomer copolymer comprising a unit derived from a macromonomer (b 1) of the following formula (2) and a unit derived from a comonomer (b2) which is copolymerizable with the macromonomer (b1), 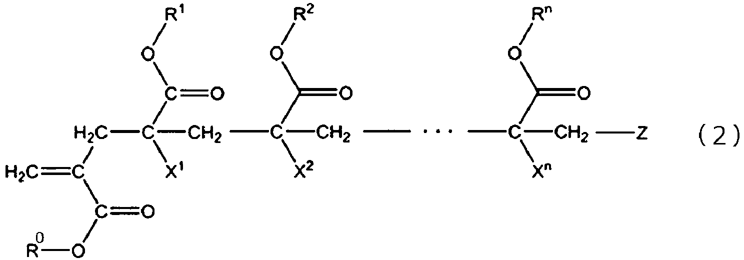 wherein in formula (2), R⁰ to Rⁿ are each independently a hydrogen atom, an alkyl group, a cycloalkyl group, an aryl group or a heterocyclic group, X' to Xⁿ are each independently a hydrogen atom or a methyl group, Z is a terminal group, and n is a natural number of 2 to 10,000.

17. A molded article comprising the resin composition according to any one of claims 1 to 16.

18. A macromonomer copolymer, comprising a unit derived from a macromonomer (b 1) of the following formula (2) and a unit derived from a comonomer (b2) which is copolymerizable with the macromonomer (b 1),
wherein the unit derived from the macromonomer (b1) comprises a methyl methacrylate unit and a phenyl methacrylate unit, 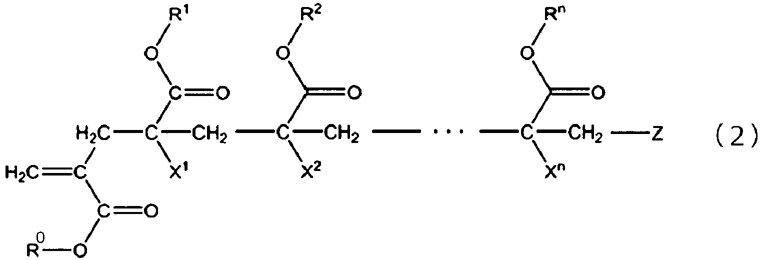
wherein in formula (2), R⁰ to Rⁿ are each independently a hydrogen atom, an alkyl group, a cycloalkyl group, an aryl group, or a heterocyclic group, X' to X¹ are each independently a hydrogen atom or a methyl group, Z is a terminal group, and n is a natural number of 2 to 10,000.

19. The macromonomer copolymer according to claim 18, wherein the unit derived from the comonomer (b2) comprises an alkyl acrylate in which Tg of a homopolymer is lower than 0°C and an aromatic vinyl.

20. The macromonomer copolymer according to claim 18 or 19, wherein a melt viscosity at 240°C and a shear rate of 1000/s is 50 Pa s or more and 300 Pa s or less.

21. The macromonomer copolymer according to any one of claims 18 to 20, wherein a mass average molecular weight (Mw) is 20,000 or more and 10,000,000 or less.

22. The macromonomer copolymer according to any one of claims 18 to 21, wherein the unit derived from the comonomer (b2) further comprises an aromatic acrylate.
